(19) **Europäisches Patentamt**
**European Patent Office**
**Office européen des brevets**

(11) **EP 2 352 149 B1**

(12) **EUROPEAN PATENT SPECIFICATION**

(45) Date of publication and mention
of the grant of the patent:
**04.09.2013 Bulletin 2013/36**

(51) Int Cl.:
*G10L 21/0272* (2013.01)  *H04R 3/00* (2006.01)
*A63F 13/02* (2006.01)

(21) Application number: **10012183.9**

(22) Date of filing: **04.05.2006**

(54) **Selective sound source listening in conjunction with computer interactive processing**

Selektives Hören von Tonquellen in Verbindung mit computerinteraktiver Verarbeitung

Ecoute sélective de sources sonores en combination avec un traitement informatique intéractif

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **05.05.2005 US 678413 P**
**15.09.2005 US 718145 P**

(43) Date of publication of application:
**03.08.2011 Bulletin 2011/31**

(62) Document number(s) of the earlier application(s) in
accordance with Art. 76 EPC:
**06752342.3 / 1 878 013**

(73) Proprietor: **Sony Computer Entertainment Inc.
Minato-ku,
Tokyo (JP)**

(72) Inventors:
• **Marks, Richard
Foster City
CA 94404 (US)**

• **Mao, Xiadong
Foster City
CA 94404 (US)**
• **Zalewski, Gary
Foster City
CA 94404 (US)**

(74) Representative: **Davies, Simon Robert
D Young & Co LLP
120 Holborn
London, EC1N 2DY (GB)**

(56) References cited:
**EP-A1- 1 184 676      WO-A1-94/16517
DE-A1- 19 540 795     US-A1- 2003 177 006
US-A1- 2004 213 419   US-A1- 2005 047 611**

• **CHAI D ET AL: "Facial image processing: an
overview", CYBERNETICS AND INTELLIGENT
SYSTEMS, 2004 IEEE CONFERENCE ON
SINGAPORE 1-3 DEC. 2004, IEEE, PISCATAWAY,
NJ, USA, vol. 1, 1 December 2004 (2004-12-01),
pages 307-311, XP010812570, ISBN:
978-0-7803-8643-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

**Field of the Invention**

Embodiments of the present invention are directed to audio signal processing and more particularly to processing of audio signals from microphone arrays.

**Description of the Related Art**

The video game industry has seen many changes over the years. As computing power has expanded, developers of video games have likewise created game software that takes advantage of these increases in computing power. To this end, video game developers have been coding games that incorporate sophisticated operations and mathematics to produce a very realistic game experience.

Example gaming platforms may be the Sony Playstation or Sony Playstation2 (PS2), each of which is sold in the form of a game console. As is well known, the game console is designed to connect to a monitor (usually a television) and enable user interaction through handheld controllers. The game console is designed with specialized processing hardware, including a CPU, a graphics synthesizer for processing intensive graphics operations, a vector unit for performing geometry transformations, and other glue hardware, firmware, and software. The game console is further designed with an optical disc tray for receiving game compact discs for local play through the game console. Online gaming is also possible, where a user can interactively play against or with other users over the Internet.

As game complexity continues to intrigue players, game and hardware manufacturers have continued to innovate to enable additional interactivity. In reality, however, the way in which users interact with a game has not changed dramatically over the years.

In view of the foregoing, there is a need for methods and systems that enable more advanced user interactivity with game play.

US 2004/0213419 discloses a system and method to reduce noise within a particular environment, while isolating and capturing speech in a manner that allows operation within an otherwise noisy environment. In one embodiment, an array of one or more microphones is used to selectively eliminate noise emanating from known, generally fixed locations, and pass signals from a pre-specified region or regions with reduced distortion. For example, one or more regions or locations can be defined from which desirable speech is to emanate. The locations of the desirable speech are known a priori and hence, the microphone array is used to capture one or more audio signals associated with the desired speech. Once the signals are captured, the correlation across the speech signals is measured and used to train the algorithm and build filters that selectively pass the speech signals with reduced distortion.

**SUMMARY OF THE INVENTION**

The invention is defined in the appended claims.

Unless specified explicitly, the terms "embodiment" or "embodiments" are not to be understood in the following description as disclosing embodiments of the invention claimed but only examples of interaction techniques.

Broadly speaking, the present invention fills these needs by providing an apparatus and method that facilitates interactivity with a computer program. In one embodiment, the computer program is a game program, but without limitation, the apparatus and method can find applicability in any computer environment that may take in sound input to trigger control, input, or enable communication. More specifically, if sound is used to trigger control or input, the embodiments of the present invention will enable filtered input of particular sound sources, and the filtered input is configured to omit or focus away from sound sources that are not of interest. In the video game environment, depending on the sound source selected, the video game can respond with specific responses after processing the sound source of interest, without the distortion or noise of other sounds that may not be of interest. Commonly, a game playing environment will be exposed to many background noises, such as, music, other people, and the movement of objects. Once the sounds that are not of interest are substantially filtered out, the computer program can better respond to the sound of interest. The response can be in any form, such as a command, an initiation of action, a selection, a change in game status or state, the unlocking of features, etc.

In one embodiment, an apparatus for capturing image and sound during interactivity with a computer program is provided. The apparatus includes an image capture unit that is configured to capture one or more image frames. Also provided is a sound capture unit. The sound capture unit is configured to identify one or more sound sources. The sound capture unit generates data capable of being analyzed to determine a zone of focus at which to process sound to the substantial exclusion of sounds outside of the zone of focus. In this manner, sound that is captured and processed for the zone of focus is used for interactivity with the computer program.

In another embodiment, a method for selective sound source listening during interactivity with a computer program is disclosed. The method includes receiving input from one or more sound sources at two or more sound source capture microphones. Then, the method includes determining delay paths from each of the sound sources and identifying a direction for each of the received inputs of each of the one or more sound sources. The method then includes filtering out sound sources that are not in an identified direction of a zone of focus. The zone of focus is configured to supply the sound source for the interactivity with the computer program,

In yet another embodiment, a game system is provided. The game system includes an image-sound capture device that is configured to interface with a computing system that enables execution of an interactive computer game. The image-capture device includes video capture hardware that is capable of being positioned to capture video from a zone of focus. An array of microphones is provided for capturing sound from one or more sound sources. Each sound source is identified and associated with a direction relative to the image-sound capture device. The zone of focus associated with the video capture hardware is configured to be used to identify one of the sound sources at the direction that is in the proximity of the zone of focus.

In general, the interactive sound identification and tracking is applicable to the interfacing with any computer program of any computing device. Once the sound source is identified, the content of the sound source can be further processed to trigger, drive, direct, or control features or objects rendered by a computer program.

In one embodiment, the methods and apparatuses adjust a listening area of a microphone includes detecting an initial listening zone; capture a captured sound through a microphone array; identify an initial sound based on the captured sound and the initial listening zone wherein the initial sound includes sounds within the initial listening zone; adjust the initial listening zone and forming the adjusted listening zone; and identify an adjusted sound based on the captured sound and the adjusted listening zone wherein the adjusted sound includes sounds within the adjusted listening zone.

In another embodiment, the methods and apparatus detect an initial listening zone wherein the initial listening zone represents an initial area monitored for sounds; detect a view of a image capture unit; compare the view of the visual with the initial area of the initial listening zone; and adjust the initial listening zone and forming the adjusted listening zone having an adjusted area based on comparing the view and the initial area.

In one embodiment, the methods and apparatus detect an initial listening zone wherein the initial listening zone represents an initial area monitored for sounds; detect an initial sound within the initial listening zone; and adjust the initial listening zone and forming the adjusted listening zone having an adjusted area based wherein the initial sound emanates from within the adjusted listening zone.

Other embodiments of the invention are directed to methods and apparatus for targeted sound detection using pre-calibrated listening zones. Such embodiments may be implemented with a microphone array having two or more microphones. Each microphone is coupled to a plurality of filters. The filters are configured to filter input signals corresponding to sounds detected by the microphones thereby generating a filtered output. One or more sets of filter parameters for the plurality of filters are pre-calibrated to determine one or more corresponding pre-calibrated listening zones. Each set of filter parameters is selected to detect portions of the input signals corresponding to sounds originating within a given listening zone and filter out sounds originating outside the given listening zone. A particular pre-calibrated listening zone may be selected at a runtime by applying to the plurality of filters a set of filter coefficients corresponding to the particular pre-calibrated listening zone. As a result, the microphone array may detect sounds originating within the particular listening sector and filter out sounds originating outside the particular listening zone.

In certain embodiments of the invention, actions in a video game unit may be controlled by generating an inertial signal and/or an optical signal with a joystick controller and tracking a position and/or orientation of the joystick controller using the inertial signal and/or optical signal.

Other aspects and advantages of the invention will become apparent from the following detailed description, taken in conjunction with the accompanying drawings, illustrating by way of example the principles of the invention.

## BRIEF DESCRIPTION OF THE DRAWINGS

The invention, together with further advantages thereof, may best be understood by reference to the following description taken in conjunction with the accompanying drawings.

Figure 1 shows a game environment in which a video game program may be executed for interactivity with one or more users.

Figure 2 illustrates a three-dimensional diagram of an example image-sound capture device.

Figures 3A and 3B illustrate the processing of sound paths at different microphones that are designed to receive the input, and logic for outputting the selected sound source.

Figure 4 illustrates an example computing system interfacing with an image-sound capture device for processing input sound sources.

Figure 5 illustrates an example where multiple microphones are used to increase the precision of the direction identification of particular sound sources.

Figure 6 illustrates an example in which sound is identified at a particular spatial volume using microphones in different planes.

Figures 7 and 8 illustrates exemplary method operations that may be processed in the identification of sound sources and exclusion of non-focus sound sources.

Figure 9 is a diagram illustrating an environment within which the methods and apparatuses for adjusting a listening area for capturing sounds or capturing audio signals based on a visual image or capturing an audio signal based on a location of the signal, are implemented;

Figure 10 is a simplified block diagram illustrating one embodiment in which the methods and apparatuses for adjusting a listening area for capturing sounds or capturing audio signals based on a visual image or capturing an audio signal based on a location of the signal, are implemented;

Figure 11A is schematic diagram of a microphone array illustrating determination of a listening direction;

Figure 11B is a schematic diagram of a microphone array illustrating anti-causal filtering;

Figure 12A is a schematic diagram of a microphone array and filter apparatus with which methods and apparatuses;

Figure 12B is a schematic diagram of an alternative microphone array and filter apparatus with which methods and apparatuses;

Figure 13 is a flow diagram for processing a signal from an array of two or more microphones.

Figure 14 is a simplified block diagram illustrating a system, consistent with embodiments of methods and apparatus for adjusting a listening area for capturing sounds or capturing an audio signal based on a visual image or a location of the signal;

Figure 15 illustrates an exemplary record consistent with embodiments of methods and apparatus for adjusting a listening area for capturing sounds or capturing an audio signal based on a visual image or a location of the signal;

Figure 16 is a flow diagram consistent with embodiments of methods and apparatus for adjusting a listening area for capturing sounds or capturing an audio signal based on a visual image or a location of the signal;

Figure 17 is a flow diagram consistent with embodiments of methods and apparatus for adjusting a listening area for capturing sounds or capturing an audio signal based on a visual image or a location of the signal;

Figure 18 is a flow diagram consistent with embodiments of methods and apparatus for adjusting a listening area for capturing sounds or capturing an audio signal based on a visual image or a location of the signal;

Figure 19 is a flow diagram consistent with embodiments of methods and apparatus for adjusting a listening area for capturing sounds or capturing an audio signal based on a visual image or a location of the signal;

Figure 20 is a diagram illustrating monitoring a listening zone based on a field of view consistent with embodiments of methods and apparatus for adjusting a listening area for capturing sounds or capturing an audio signal based on a visual image or a location of the signal;

Figure 21 is a diagram illustrating several listening zones consistent with embodiments of methods and apparatus for adjusting a listening area for capturing sounds or capturing an audio signal based on a visual image or a location of the signal;

Figure 22 is a diagram focusing sound detection consistent with embodiments of methods and apparatus for adjusting a listening area for capturing sounds or capturing an audio signal based on a visual image or a location of the signal;

Figures 23A, 23B, and 23C are schematic diagrams that illustrate a microphone array in which the methods and apparatuses for capturing an audio signal based on a location of the signal are implemented; and

Figure 24 is a diagram focusing sound detection consistent with one embodiment of the methods and apparatuses for capturing an audio signal based on a location of the signal.

FIG. 25A is a schematic diagram of a microphone array according to an embodiment of the present invention.

FIG. 25B is a flow diagram illustrating a method for targeted sound detection according to an embodiment of the present invention.

FIG. 25C is a schematic diagram illustrating targeted sound detection according to a preferred embodiment of the present invention.

FIG. 25D is a flow diagram illustrating a method for targeted sound, detection according to the preferred embodiment of the present invention.

FIG. 25E is a top plan view of a sound source location and characterization apparatus according to an embodiment of the present invention.

FIG. 25F is a flow diagram illustrating a method for sound source location and characterization according to an embodiment of the present invention.

FIG. 25G is a top plan view schematic diagram of an apparatus having a camera and a microphone array for targeted sound detection from within a field of view of the camera according to an embodiment of the present invention.

FIG. 25H is a front elevation view of the apparatus of FIG. 25E.

FIGs. 25I-25J are plan view schematic diagrams of an audio-video apparatus according to an alternative embodiment of the present invention.

FIG. 26 is a block diagram illustrating a signal processing apparatus.

FIG. 27 is a block diagram of a cell processor implementation of a signal processing system.

## Detailed Description

Embodiments relate to methods and apparatus for facilitating the identification of specific sound sources and filtering out unwanted sound sources when sound is used as an interactive tool with a computer program.

In the following description, numerous specific details are set forth in order to provide a thorough understanding of the present invention. It will be apparent, however, to one skilled in the art that the present invention may be practiced without some or all of these specific details. In other instances, well known process steps have not been described in detail in order not to obscure the present invention.

References to "electronic device", "electronic apparatus" and "electronic equipment" include devices such as personal digital video recorders, digital audio players, gaming consoles, set top boxes, computers, cellular telephones, personal digital assistants, specialized computers such as electronic interfaces with automobiles, and the like.

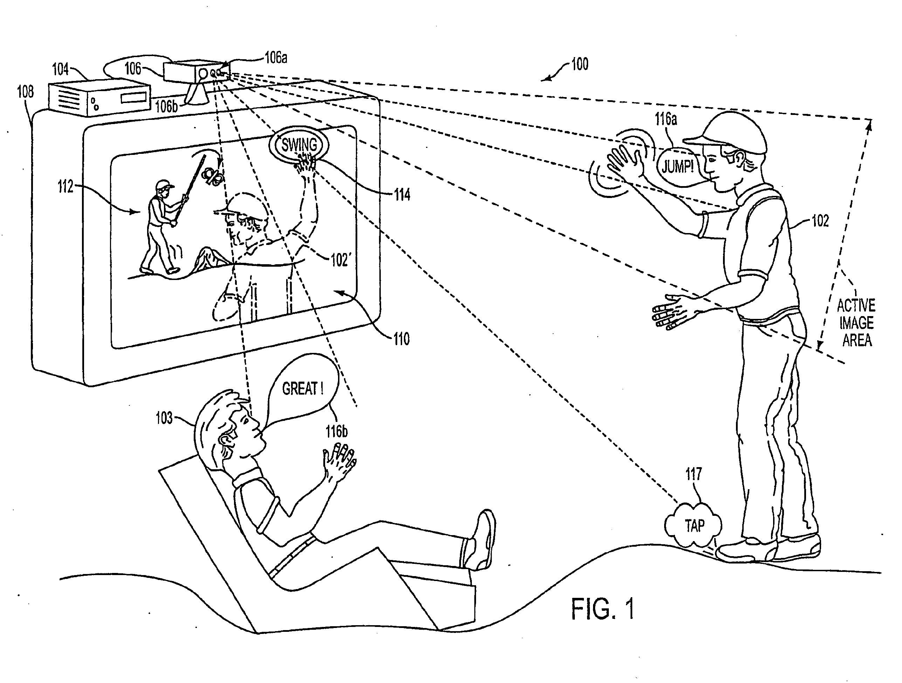

Figure 1 shows a game environment 100 in which a video game program may be executed for interactivity with one or more users, in accordance with one embodiment. As illustrated, player 102 is shown in front of a monitor 108 that includes a display 110. The monitor 108 is interconnected with a computing system 104. The computing system can be a standard computer system, a game console or a portable computer system. In a specific example, but not limited to any brand, the game console can be a one manufactured by Sony Computer Entertainment Inc., Microsoft, or any other manufacturer.

Computing system **104** is shown interconnected with an image-sound capture device **106**. The image-sound capture device 106 includes a sound capture unit **106a** and an image capture unit **106b.** The player **102** is shown interactively communicating with a game figure **112** on the display **110**. The video game being executed is one in which input is at least partially provided by the player **102** by way of the image capture unit **106b,** and the sound capture unit **106a.** As illustrated, the player **102** may move his hand so as to select interactive icons **114** on the display **110**. A translucent image of the player **102'** is projected on the display **110** once captured by the image capture unit **106b.** Thus, the player **102** knows where to move his hand in order to cause selection of icons or interfacing with the game figure **112**. Techniques for capturing these movements and interactions can vary, but exemplary techniques are described in United Kingdom Applications GB 0304024.3 (PCT/GB2004/000693) and GB 0304022.7 (PCT/GB2004/000703), each filed on February 21, 2003.

In the example shown, the interactive icon **114** is an icon that would allow the player to select "swing" so that the game figure **112** will swing the object being handled. In addition, the player 102 may provide voice commands that can be captured by the sound capture unit 106a and then processed by the computing system **104** to provide interactivity with the video game being executed. As shown, the sound source **116a** is a voice command to "jump!". The sound source **116a** will then be captured by the sound capture unit **106a,** and processed by the computing system 104 to then cause the game figure **112** to jump. Voice recognition may be used to enable the identification of the voice commands. Alternatively, the player 102 may be in communication with remote users connected to the internet or network, but who are also directly or partially involved in the interactivity of the game.

In accordance with one embodiment, the sound capture unit 106a may be configured to include at least two microphones which will enable the computing system **104** to select sound coming from particular directions. By enabling the computing system **104** to filter out directions which are not central to the game play (or the focus), distracting sounds in the game environment **100** will not interfere with or confuse the game execution when specific commands are being provided by the player **102**. For example, the game player **102** may be tapping his feet and causing a tap noise which is a non-language sound **117**. Such sound may be captured by the sound capture unit **106a**, but then filtered out, as sound coming from the player's feet **102** is not in the zone of focus for the video game. '

As will be described below, the zone of focus is preferably identified by the active image area that is the focus point of the image capture unit **106b**. In an alternative manner, the zone of focus can be manually or automatically selected from a choice of zones presented to the user after an initialization stage. The choice of zones may include one or more pre-calibrated listening zones. A pre-calibrated listening zone containing the sound source may be determined as set forth below. Continuing with the example of Figure 1, a game observer **103** may be providing a sound source **116b** which could be distracting to the processing by the computing system during the interactive game play. However, the game observer **103** is not in the active image area of the image capture unit **106b** and thus, sounds coming from the direction of game observer **103** will be filtered out so that the computing system **104** will not erroneously confuse commands from the sound source **116b** with the sound sources coming from the player **102**, as sound source **116a**.

The image-sound capture device **106** includes an image capture unit 106b, and the sound capture unit **106a**.

The image-sound capture device **106** is preferably capable of digitally capturing image frames and then transferring those image frames to the computing system 104 for further processing. An example of the image capture unit 106b is a web camera, which is commonly used when video images are desired to be captured and then transferred digitally to a computing device for subsequent storage or communication over a network, such as the internet. Other types of image capture devices may also work, whether analog or digital, so long as the image data is digitally processed to enable the identification and filtering. In one preferred embodiment, the digital processing to enable the filtering is done in software, after the input data is received. The sound capture unit **106a** is shown including a pair of microphones **(MIC 1 and MIC 2)**. The microphones are standard microphones, which can be integrated into the housing that makes up the image-sound capture device **106.**

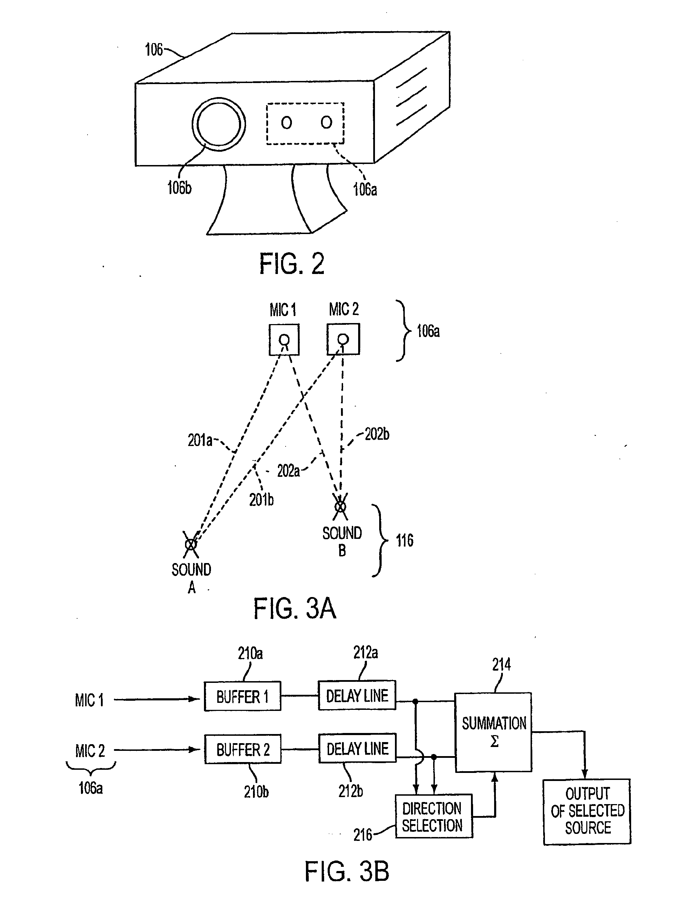

Figure 3A illustrates sound capture units **106a** when confronted with sound sources **116** from sound **A** and sound **B**. As shown, sound A will project its audible sound and will be detected by **MIC 1 and MIC 2** along sound paths **201a** and **201b**. Sound **B** will be projected toward **MIC 1** and **MIC 2** over sound paths **202a** and **202b**. As illustrated, the sound paths for sound A will be of different lengths, thus providing for a relative delay when compared to sound paths **202a** and **202b**. The sound coming from each of sound **A** and sound **B** may then be processed using a standard triangulation algorithm so that direction selection can occur in box **216**, shown in Figure 3B. The sound coming from **MIC 1 and MIC 2** will each be buffered in buffers **1** and **2** (**210a**, **210b**), and passed through delay lines (**212a**, **212b**). In one embodiment, the buffering and delay process will be controlled by software, although hardware can be custom designed to handle the operations as well. Based on the triangulation, direction selection **216** will trigger identification and selection of one of the sound sources **116**.

The sound coming from each **of MIC 1** and **MIC 2** will be summed in box **214** before being output as the output of the selected source. In this manner, sound coming from directions other than the direction in the active image area will be filtered out so that such sound sources do not distract processing by the computer system **104**, or distract communication with other users that may be interactively playing a video game over a network, or the internet.

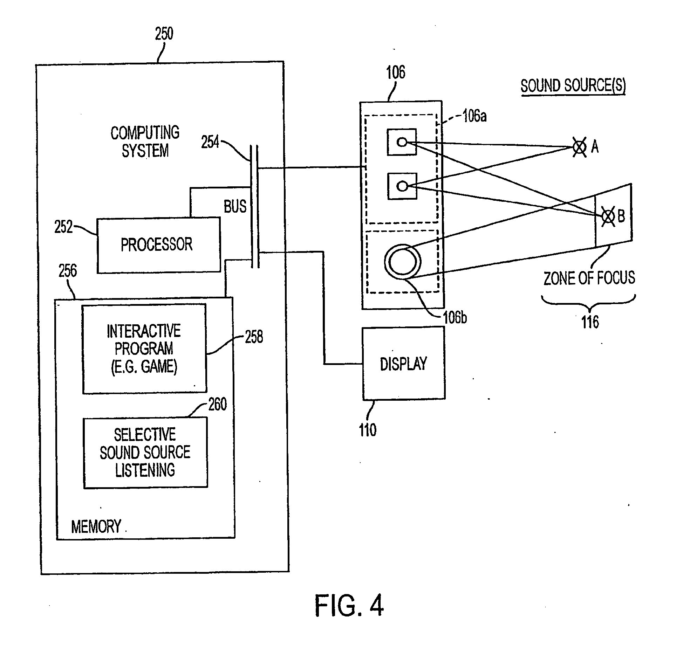

Figure 4 illustrates a computing system 250 that may be used in conjunction with the image-sound capture device **106**, in accordance with one embodiment. The computing system **250** includes a processor **252**, and memory 256. A bus **254** will interconnect the processor and the memory **256** with the image-sound capture device **106**. The memory **256** will include at least part of the interactive program **258**, and also include selective sound source listening logic or code **260** for processing the received sound source data. Based on where the zone of focus is identified to be by the image capture unit **106b**, sound sources outside of the zone of focus will be selectively filtered by the selective sound source listening logic **260** being executed (e.g., by the processor and stored at least partially in the memory **256**). The computing system is shown in its most simplistic form, but emphasis is placed on the fact that any hardware configuration can be used, so long as the hardware can process the instructions to effect the processing of the incoming sound sources and thus enable the selective listening.

The computing system **250** is also shown interconnected with the display **110** by way of the bus. In this example, the zone of focus is identified by the image capture unit being focused toward the sound source **B**. Sound coming from other sound sources, such as sound source A will be substantially filtered out by the selective sound source listening logic **260** when the sound is captured by the sound capture unit **106a** and transferred to the computing system **250**.

In one specific example, a player can be participating in an internet or networked video game competition with another user where each user's primary audible experience will be by way of speakers. The speakers may be part of the computing system or may be part of the monitor **108**. Suppose, therefore, that the local speakers are what is generating sound source **A** as shown in Figure 4. In order not to feedback the sound coming out of the local speakers for sound source **A** to the competing user, the selective sound source listening logic **260** will filter out the sound of sound source **A** so that the competing user will not be provided with feedback of his or her own sound or voice. By supplying this filtering, it is possible to have interactive communication over a network while interfacing with a video game, while advantageously avoiding destructive feedback during the process.

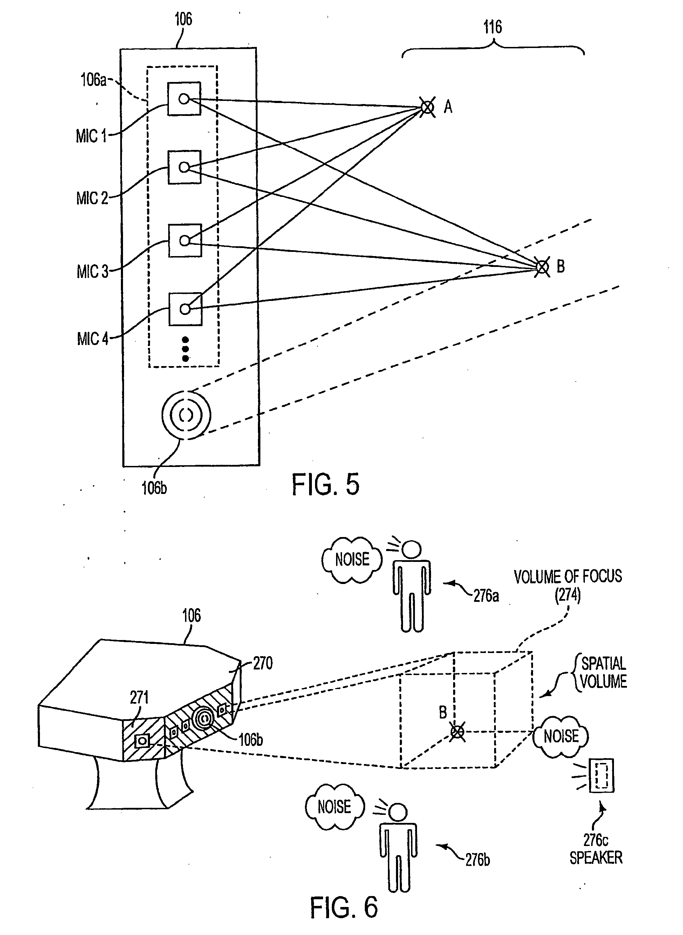

Figure 5 illustrates an example where the image-sound capture device **106** includes at least four microphones **(MIC 1** through **MIC 4)**. The sound capture unit **106a,** is therefore capable of triangulation with better granularity to identify the location of sound sources **116** (**A** and **B**). That is, by providing an additional microphone, it is possible to more accurately define the location of the sound sources and thus, eliminate and filter out sound sources that are not of interest or can be destructive to game play or interactivity with a computing system. As illustrated in Figure 5, sound source **116** (**B**) is the sound source of interest as identified by the video capture unit **106b**. Continuing with example of Figure 5, Figure 6 identifies how sound source **B** is identified to a spatial volume.

The spatial volume at which sound source **B** is located will define the volume of focus **274..** By identifying a volume of focus, it is possible to eliminate or filter out noises that are not within a specific volume (i.e., which are not just in a direction). To facilitate the selection of a volume of focus **274**, the image-sound capture device **106** will preferably include at least four microphones. At least one of the microphones will be in a different plane than three of the microphones. By maintaining one of the microphones in plane **271** and the remainder of the four in plane **270** of the image-sound capture device **106**, it is possible to define a spatial volume.

Consequently, noise coming from other people in the vicinity (shown as **276a** and **276b**) will be filtered out as they do not lie within the spatial volume defined in the volume focus **274**. Additionally, noise that may be created just outside of the spatial volume, as shown by speaker **276c**, will also be filtered out as it falls outside of the spatial volume.

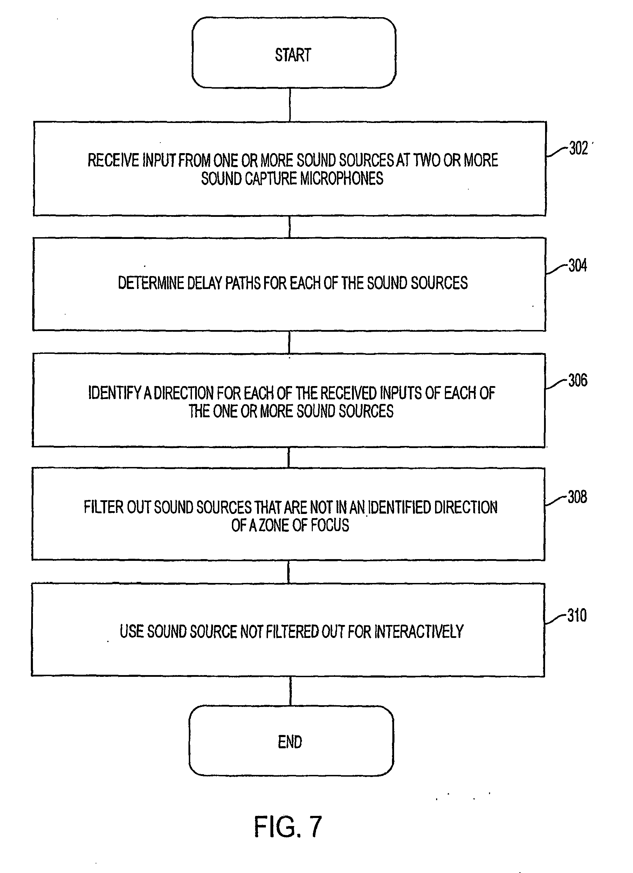

Figure 7 illustrates a flowchart diagram in accordance with one embodiment. The method begins at operation **302** where input is received from one or more sound sources at two or more sound capture microphones. In one example, the two or more sound capture microphones are integrated into the image-sound capture device **106.** Alternatively, the two or more sound capture microphones can be part of a second module/housing that interfaces with the image capture unit **106b.** Alternatively, the sound capture unit **106a** can include any number of sound capture microphones, and sound capture microphones can be placed in specific locations designed to capture sound from a user that may be interfacing with a computing system.

The method moves to operation **304** where a delay path for each of the sound sources is determined. Example delay paths are defined by the sound paths **201** and **202** of Figure 3A. As is well known, the delay paths define the time it takes for sound waves to travel from the sound sources to the specific microphones that are situated to capture the sound. Based on the delay it takes sound to travel from the particular sound sources **116**, the microphones can determine what the delay is and approximate location from which the sound is emanating from using a standard triangulation algorithm.

The method then continues to operation **306** where a direction for each of the received inputs of the one or more sound sources is identified. That is, the direction from which the sound is originating from the sound sources **116** is identified relative to the location of the image-sound capture device, including the sound capture unit **106a**. Based on the identified directions, sound sources that are not in an identified direction of a zone (or volume) of focus are filtered out in operation **308**. By filtering out the sound sources that are not originating from directions that are in the vicinity of the zone of focus, it is possible to use the sound source not filtered out for interactivity with a computer program, as shown in operation **310**.

For instance, the interactive program can be a video game in which the user can interactively communicate with features of the video game, or players that may be opposing the primary player of the video game. The opposing player can either be local or located at a remote location and be in communication with the primary user over a network, such as the internet. In addition, the video game can also be played between a number of users in a group designed to interactively challenge each other's skills in a particular contest associated with the video game.

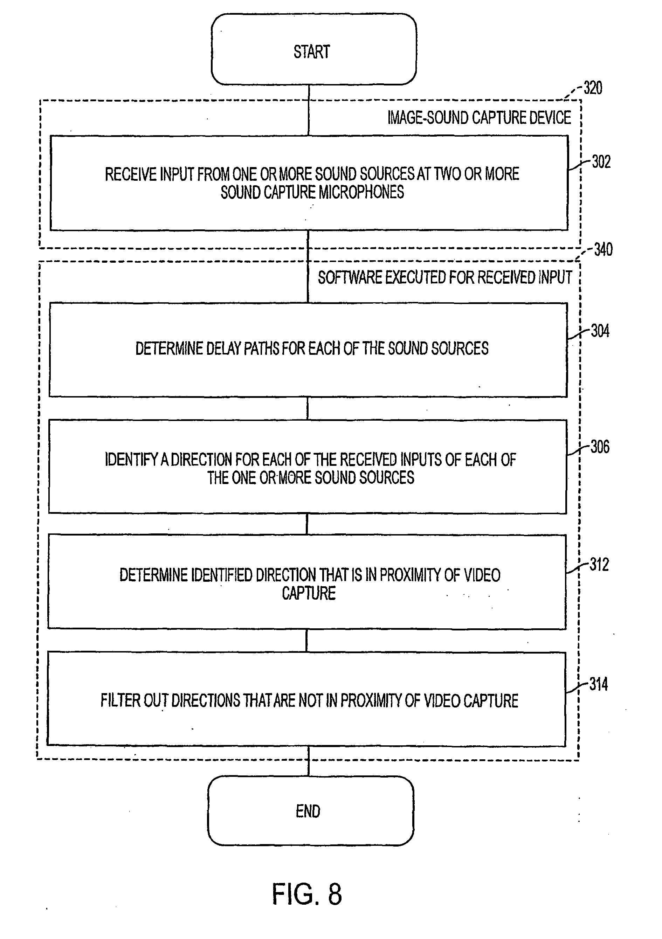

Figure 8 illustrates a flowchart diagram in which image-sound capture device operations **320** are illustrated separate from the software executed operations that are performed on the received input in operations **340**. Thus, once the input from the one or more sound sources at the two or more sound capture microphones is received in operation **302**, the method proceeds to operation **304** where in software, the delay path for each of the sound sources is determined. Based on the delay paths, a direction for each of the received inputs is identified for each of the one or more sound sources in operation **306**, as mentioned above.

At this point, the method moves to operation **312** where the identified direction that is in proximity of video capture is determined. For instance, video capture will be targeted at an active image area as shown in Figure 1. Thus, the proximity of video capture would be within this active image area (or volume), and any direction associated with a sound source that is within this or in proximity to this, image-active area, will be determined. Based on this determination, the method proceeds to operation **314** where directions (or volumes) that are not in proximity of video capture are filtered out. Accordingly, distractions, noises and other extraneous input that could interfere in video game play of the primary player will be filtered out in the processing that is performed by the software executed during game play.

Consequently, the primary user can interact with the video game, interact with other users of the video game that are actively using the video game, or communicate with other users over the network that may be logged into or associated with transactions for the same video game that is of interest. Such video game communication, interactivity and control will thus be uninterrupted by extraneous noises and/or observers that are not intended to be interactively communicating or participating in a particular game or interactive program.

It should be appreciated that the embodiments described herein may also apply to online gaming applications. That is, the embodiments described above may occur at a server that sends a video signal to multiple users over a distributed network, such as the Internet, to enable players at remote noisy locations to communicate with each other. It should be further appreciated that the embodiments described herein may be implemented through either a hardware or a software implementation. That is, the functional descriptions discussed above may be synthesized to define a microchip having logic configured to perform the functional tasks for each of the modules associated with the noise cancellation scheme.

Also, the selective filtering of sound sources can have other applications, such as telephones. In phone use environments, there is usually a primary person (i.e., the caller) desiring to have a conversation with a third party (i.e., the callee). During that communication, however, there may be other people in the vicinity who are either talking or making noise. The phone, being targeted toward the primary user (by the direction of the receiver, for example) can make the sound coming from the primary user's mouth the zone of focus, and thus enable the selection for listening to only the primary user. This selective listening will therefore enable the substantial filtering out of voices or noises that are not associated with the primary person, and thus, the receiving party will be able to receive a more clear communication from the primary person using the phone.

Additional technologies may also include other electronic equipment that can benefit from taking in sound as an input for control or communication. For instance, a user can control settings in an automobile by voice commands, while avoiding other passengers from disrupting the commands. Other applications may include computer controls of applications, such as browsing applications, document preparation, or communications. By enabling this filtering, it is possible to more effectively issue voice or sound commands without interruption by surrounding sounds. As such, any electronic apparatus may be controlled by voice commands in conjunction with any of the embodiments described herein.

For instance, in a similar application, it may be possible to filter out sound sources using sound analysis. If sound analysis is used, it is possible to use as few as one microphone. The sound captured by the single microphone can be digitally analyzed (in software or hardware) to determine which voice or sound is of interest. In some environments, such as gaming, it may be possible for the primary user to record his or her voice once to train the system to identify the particular voice. In this manner, exclusion of other voices or sounds will be facilitated. Consequently, it would not be necessary to identify a direction, as filtering could be done based one sound tones and/or frequencies.

All of the advantages mentioned above with respect to sound filtering, when direction and volume are taken into account, are equally applicable.

In one embodiment, methods and apparatuses for adjusting a listening area for capturing sounds may be configured to identify different areas or volumes that encompass corresponding listening zones; Specifically, a microphone array may be configured to detect sounds originating from areas or volumes corresponding to these listening zones. Further, these areas or volumes may be a smaller subset of areas or volumes that are capable of being monitored for sound by the microphone array. In one embodiment, the listening zone that is detected by the microphone array for sound may be dynamically adjusted such that the listening zone may be enlarged, reduced, or stay the same size but be shifted to a different location. For example, the listening zone may be further focused to detect a sound in a particular location such that the zone that is monitored is reduced from the initial listening zone. Further, the level of the sound may be compared against a threshold level to validate the sound. The sound source from the particular location is monitored for continuing sound. In one embodiment, by reducing from the initial area to the reduced area, unwanted background noises are minimized. In some embodiments, the adjustment to the area or volume that is detected may be determined based on a zone of focus or field of view of an image capture device. For example, the field of view of the image capture device may zoom in (magnified), zoom out (minimized), and/or rotate about a horizontal or vertical axis. In one embodiment, the adjustments performed to the area that is detected by the microphone tracks the area associated with the current view of the image capture unit.

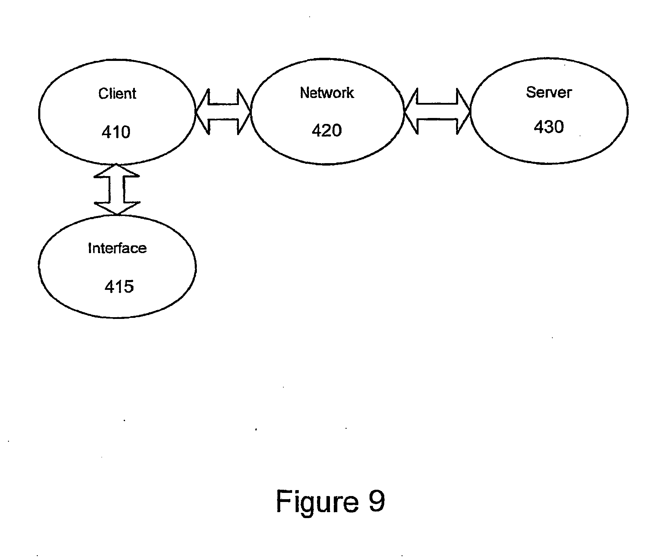

Figure 9 is a diagram illustrating an environment within which the methods and apparatuses for adjusting a listening area for capturing sounds, or capturing audio signals based on a visual image or a location of source of a sound signal are implemented. The environment includes an electronic device **410** (e.g., a computing platform configured to act as a client device, such as a personal digital video recorder, digital audio player, computer, a personal digital assistant, a cellular telephone, a camera device, a set top box, a gaming console), a user interface **415**, a network **420** (e.g., a local area network, a home network, the Internet), and a server **430** (e.g., a computing platform configured to act as a server). In one embodiment, the network **420** can be implemented via wireless or wired solutions.

In one embodiment, one or more user interface **415** components are made integral with the electronic device **410** (e.g., keypad and video display screen input and output interfaces in the same housing as personal digital assistant electronics (e.g., as in a Clie® manufactured by Sony Corporation). In other embodiments, one or more user interface **415** components (e.g., a keyboard, a pointing device such as a mouse and trackball, a microphone, a speaker, a display, a camera) are physically separate from, and are conventionally coupled to, electronic device **410**. The user utilizes interface **415** to access and control content and applications stored in electronic device **410**, server **430**, or a remote storage device (not shown) coupled via network **420**.

Embodiments of capturing an audio signal based on a location of the signal as described below are executed by an electronic processor in electronic device **410**, in server **430**, or by processors in electronic device **410** and in server **430** acting together. Server **430** is illustrated in Figure 1 as being a single computing platform, but in other instances are two or more interconnected computing platforms that act as a server.

Methods and apparatuses for, adjusting a listening area for capturing sounds, or capturing audio signals based on a visual image or a location of a source of a sound signal are shown in the context of exemplary embodiments of applications in which a user profile is selected from a plurality of user profiles. In one embodiment, the user profile is accessed from an electronic device **410** and content associated with the user profile can be created, modified, and distributed to other electronic devices **410**. In one embodiment, the content associated with the user profile includes a customized channel listing associated with television or musical programming and recording information associated with customized recording times.

In one embodiment, access to create or modify content associated with the particular user profile is restricted to authorized users. In one embodiment, authorized users are based on a peripheral device such as a portable memory device, a dongle, and the like. In one embodiment, each peripheral device is associated with a unique user identifier which, in turn, is associated with a user profile.

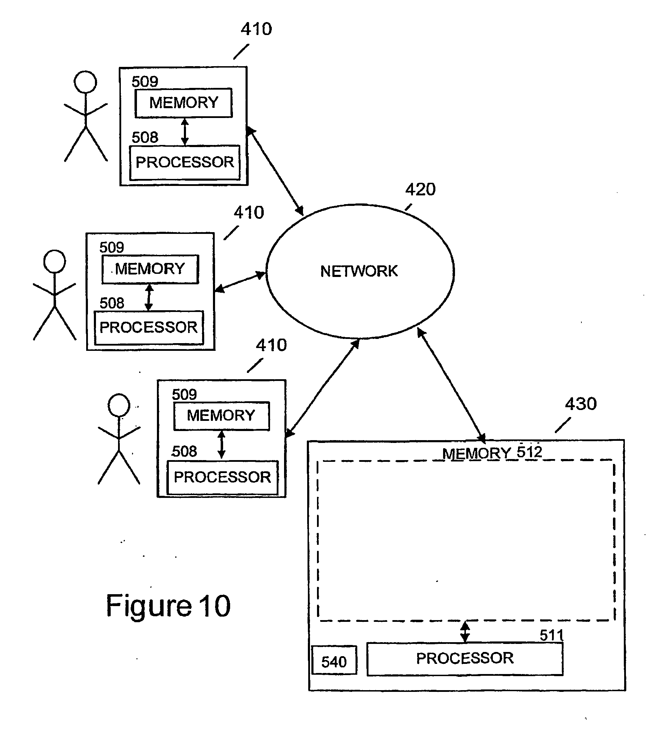

Figure 10 is a simplified diagram illustrating an exemplary architecture in which the methods and apparatuses for capturing an audio signal based on a location of the signal are implemented. The exemplary architecture includes a plurality of electronic devices **410**, a server device **430**, and a network **420** connecting electronic devices **410** to server device **430** and each electronic device **410** to each other. The plurality of electronic devices **410** are each configured to include a computer-readable medium **509**, such as random access memory, coupled to an electronic processor **208**. Processor **208** executes program instructions stored in the computer-readable medium **209**. A unique user operates each electronic device **410** via an interface **415** as described with reference to Figure 9.

Server device **430** includes a processor **511** coupled to a computer-readable medium, such as a server memory **512**. In one embodiment, the server device **430** is coupled to one or more additional external or internal devices, such as, without limitation, a secondary data storage element, such as database **540**.

In one instance, processors **508** and **511** are manufactured by Intel Corporation, of Santa Clara, California. In other instances, other microprocessors are used.

The plurality of client devices **410** and the server **430** include instructions for a customized application for capturing an audio signal based on a location of the signal. In one embodiment, the plurality of computer-readable media, e.g. memories **509** and **512** contain, in part, the customized application. Additionally, the plurality of client devices **410** and the server device **430** are configured to receive and transmit electronic messages for use with the customized application. Similarly, the network **420** is configured to transmit electronic messages for use with the customized application.

One or more user applications may be stored in memories **509,** in server memory **512,** or a single user application is stored in part in one memory **509** and in part in server memory **512**. In one instance, a stored user application, regardless of storage location, is made customizable based on capturing an audio signal based on a location of the signal as determined using embodiments described below.

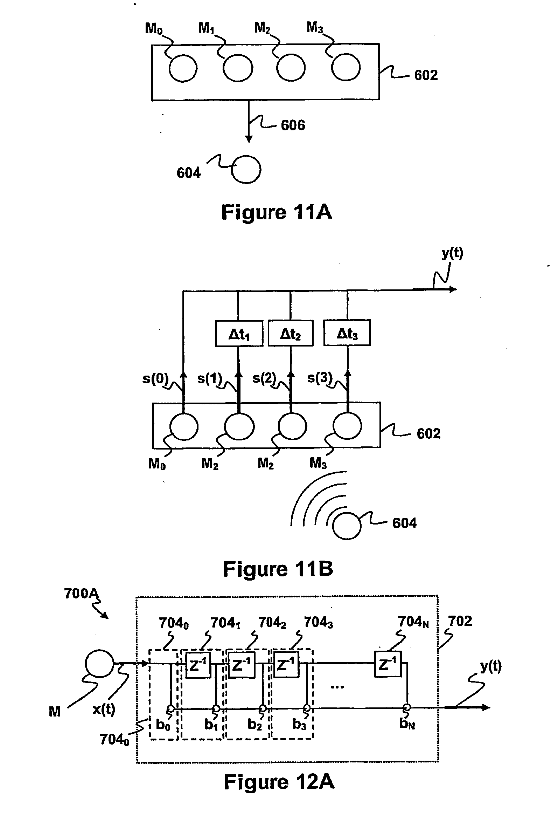

Part of the preceding discussion refers to receiving input from one or more sound sources at two or more sound source capture microphones, determining delay paths from each of the sound sources and identifying a direction for each of the received inputs of each of the one or more sound sources and filtering out sound sources that are not in an identified direction of a zone of focus. By way of example, and without limitation, such processing of sound inputs may proceed as discussed below with respect to Figures. 11A, 11B, 12A, 12B and 13. As depicted in Figure 11A, a microphone array **602** may include four microphones $M_0$, $M_1$, $M_2$, and $M_3$. In general, the microphones $M_0$, $M_1$, $M_2$, and $M_3$ may be omni-directional microphones, i.e., microphones that can detect sound from essentially any direction. Omni-directional microphones are generally simpler in construction and less expensive than microphones having a preferred listening direction. An audio signal arriving at the microphone array **602** from one or more sources **604** may be expressed as a vector $\mathbf{x} = [x_0, x_1, x_2, x_3]$, where $x_0$, $x_1$, $x_2$ and $x_3$ are the signals received by the microphones $M_0$, $M_1$, $M_2$ and $M_3$ respectively. Each signal $x_m$ generally includes subcomponents due to different sources of sounds. The subscript m range from 0 to 3 in this example and is used to distinguish among the different microphones in the array. The subcomponents may be expressed as a vector $\mathbf{s} = [s_1, S_2, ...S_K]$, where K is the number of different sources. To separate out sounds from the signal s originating from different sources one must determine the best filter time delay of arrival (TDA) filter. For precise TDA detection, a state-of-art yet computationally intensive Blind Source Separation (BSS) is preferred theoretically. Blind source separation separates a set of signals into a set of other signals, such that the regularity of each resulting signal is maximized, and the regularity between the signals is minimized (i.e., statistical independence is maximized or decorrelation is minimized).

The blind source separation may involve an independent component analysis (ICA) that is based on second-order statistics. In such a case, the data for the signal arriving at each microphone may be represented by the random vector $\mathbf{x_m}=[x_1,.....x_n]$ and the components as a random vector $s= [S_1,...S_n]$. The task is to transform the observed data $x_m$, using a linear static transformation s = Wx, into maximally independent components s measured by some function $F(s_1,...s_n)$ of independence.

The components $x_{mi}$ of the observed random vector $\mathbf{x_m}= (X_{m1},.., X_{mn})$ are generated as a sum of the independent components $S_{mk}$, k=1,...,n, $X_{mi} = a_{mi1}S_{m1} + ... + a_{mik}S_{mk} + ... + a_{min}S_{mn}$, weighted by the mixing weights $a_{mik}$. In other words, the data vector $\mathbf{x_m}$ can be written as the product of a mixing matrix A with the source vector $\mathbf{s}^T$, i.e., $\mathbf{x_m} = \mathbf{A} \cdot \mathbf{s}^T$ or

$$\begin{bmatrix} x_{m1} \\ \vdots \\ x_{mn} \end{bmatrix} = \begin{bmatrix} a_{m11} & \cdots & a_{m1n} \\ \vdots & \cdots & \vdots \\ a_{mn1} & \cdots & a_{mnn} \end{bmatrix} \bullet \begin{bmatrix} s_1 \\ \vdots \\ s_n \end{bmatrix}$$

The original sources $s$ can be recovered by multiplying the observed signal vector $\mathbf{x_m}$ with the inverse of the mixing matrix $\mathbf{W} = \mathbf{A}^{-1}$, also known as the unmixing matrix. Determination of the unmixing matrix $\mathbf{A}^{-1}$ may be computationally intensive. Some embodiments of the invention use blind source separation (BSS) to determine a listening direction for the microphone array. The listening direction and/or one or more listening zones of the microphone array can be calibrated prior to run time (e.g., during design and/or manufacture of the microphone array) and re-calibrated at run time.

By way of example, the listening direction may be determined as follows. A user standing in a listening direction with respect to the microphone array may record speech for about 10 to 30 seconds. The recording room should not contain transient interferences, such as competing speech, background music, etc. Pre-determined intervals, e.g., about every 8 milliseconds, of the recorded voice signal are formed into analysis frames, and transformed from the time domain into the frequency domain. Voice-Activity Detection (VAD) may be performed over each frequency-bin component in this frame. Only bins that contain strong voice signals are collected in each frame and used to estimate its 2nd-order statistics, for each frequency bin within the frame, i.e. a "Calibration Covariance Matrix" $Cal\_Cov(j,k) = E((\mathbf{X'_{jk}})^T * \mathbf{X'_{jk}})$, where E refers to the operation of determining the expectation value and $(\mathbf{X'_{jk}})^T$ is the transpose of the vector $\mathbf{X'_{jk}}$. The vector $\mathbf{X'_{jk}}$ is a M+1 dimensional vector representing the Fourier transform of calibration signals for the $j^{th}$ frame and the $k^{th}$ frequency bin.

The accumulated covariance matrix then contains the strongest signal correlation that is emitted from the target listening direction. Each calibration covariance matrix $Cal\_Cov(j,k)$ may be decomposed by means of "Principal Component Analysis"(PCA) and its corresponding eigenmatrix $\mathbf{C}$ may be generated. The inverse $\mathbf{C^{-1}}$ of the eigenmatrix $\mathbf{C}$ may thus be regarded as a "listening direction" that essentially contains the most information to de-correlate the covariance matrix, and is saved as a calibration result. As used herein, the term "eigenmatrix" of the calibration covariance matrix $Cal\_Cov(j,k)$ refers to a matrix having columns (or rows) that are the eigenvectors of the covariance matrix.

At run time, this inverse eigenmatrix $\mathbf{C^{-1}}$ may be used to de-correlate the mixing matrix A by a simple linear transformation. After de-correlation, $\mathbf{A}$ is well approximated by its diagonal principal vector, thus the computation of the unmixing matrix (i.e., $\mathbf{A^{-1}}$) is reduced to computing a linear vector inverse of: $\mathbf{A1} = \mathbf{A} * \mathbf{C^{-1}}$, where $\mathbf{A1}$ is the new transformed mixing matrix in independent component analysis (ICA). The principal vector is just the diagonal of the matrix $\mathbf{A1}$.

Recalibration in runtime may follow the preceding steps. However, the default calibration in manufacture takes a very large amount of recording data (e.g., tens of hours of clean voices from hundreds of persons) to ensure an unbiased, person-independent statistical estimation. While the recalibration at runtime requires small amount of recording data from a particular person, the resulting estimation of $\mathbf{C^{-1}}$ is thus biased and person-dependant.

As described above, a principal component analysis (PCA) may be used to determine eigenvalues that diagonalize the mixing matrix $\mathbf{A}$. The prior knowledge of the listening direction allows the energy of the mixing matrix $\mathbf{A}$ to be compressed to its diagonal. This procedure, referred to herein as semi-blind source separation (SBSS) greatly simplifies the calculation the independent component vector $\mathbf{s^T}$

Embodiments may also make use of anti-causal filtering. The problem of causality is illustrated in FIG. 11B. In the microphone array 602 one microphone, e.g., $\mathbf{M}_0$ is chosen as a reference microphone. In order for the signal x(t) from the microphone array to be causal, signals from the source 604 must arrive at the reference microphone $\mathbf{M_0}$ first. However, if the signal arrives at any of the other microphones first, $\mathbf{M}_0$ cannot be used as a reference microphone. Generally, the signal will arrive first at the microphone closest to the source 604. Embodiments adjust for variations in the position of the source 304 by switching the reference microphone among the microphones $\mathbf{M_0}, \mathbf{M_1}, \mathbf{M_2}, \mathbf{M_3}$ in the array 302 so that the reference microphone always receives the signal first. Specifically, this anti-causality may be accomplished by artificially delaying the signals received at all the microphones in the array except for the reference microphone while minimizing the length of the delay filter used to accomplish this.

For example, if microphone $\mathbf{M_0}$ is the reference microphone, the signals at the other three (non-reference) microphones $\mathbf{M_1}, \mathbf{M_2}, \mathbf{M_3}$ may be adjusted by a fractional delay $\Delta t_m$, (m=1, 2, 3) based on the system output y(t). The fractional delay $\Delta t_m$ may be adjusted based on a change in the signal to noise ratio (SNR) of the system output y(t). Generally, the delay is chosen in a way that maximizes SNR. For example, in the case of a discrete time signal the delay for the signal from each non-reference microphone $\Delta t_m$ at time sample t may be calculated according to: $\Delta t_m(t) = \Delta t_m(t-1) + \mu \Delta SNR$, where $\Delta SNR$ is the change in SNR between t-2 and t-1 and $\mu$ is a pre-defined step size, which may be empirically determined. If $\Delta t(t) > 1$ the delay has been increased by 1 sample. In embodiments using such delays for anti-causality, the total delay (i.e., the sum of the $\Delta t_m$) is typically 2-3 integer samples. This may be accomplished by use of 2-3 filter taps. This is a relatively small amount of delay when one considers that typical digital signal processors may use digital filters with up to 512 taps. It is noted that applying the artificial delays $\Delta t_m$ to the non-reference microphones is the digital equivalent of physically orienting the array **602** such that the reference microphone $\mathbf{M_0}$ is closest to the sound source **604**.

Figure 12A illustrates filtering of a signal from one of the microphones $\mathbf{M_0}$ in the array **602**. In an apparatus **700A** the signal from the microphone $x_0(t)$ is fed to a filter **702**, which is made up of N+1 taps **704₀...704ₙ**. Except for the first tap **704₀** each tap **704₁** includes a delay section, represented by a z-transform $\mathbf{z^{-1}}$ and a finite response filter. Each delay section introduces a unit integer delay to the signal x(t). The finite impulse response filters are represented by finite impulse response filter coefficients $\mathbf{b_0, b_1, b_2, b_3,... b_N}$. In embodiments, the filter **702** may be implemented in hardware or software or a combination of both hardware and software. An output y(t) from a given filter tap **704ᵢ** is just the convolution of the input signal to filter tap **704ᵢ** with the corresponding finite impulse response coefficient $\mathbf{b_i}$. It is noted that for all filter taps **704ᵢ** except for the first one **704₀** the input to the filter tap is just the output of the delay section $z^{-1}$ of the preceding filter tap **704ᵢ₋₁**. Thus, the output of the filter 402 may be represented by:

$$y(t) = x(t)^*b_0 + x(t-1)^*b_1 + x(t-2)^*b_2 +...+ x(t-N)b_N.$$

Where the symbol "*" represents the convolution operation. Convolution between two discrete time functions $f(t)$ and $g(t)$ is defined as $(f * g)(t) = \sum_{n} f(n)g(t-n)$.

The general problem in audio signal processing is to select the values of the finite impulse response filter coefficients $b_0, b_1,..., b_N$ that best separate out different sources of sound from the signal y(t).

If the signals x(t) and y(t) are discrete time signals each delay $z^{-1}$ is necessarily an integer delay and the size of the delay is inversely related to the maximum frequency of the microphone. This ordinarily limits the resolution of the apparatus 400A. A higher than normal resolution may be obtained if it is possible to introduce a fractional time delay $\Delta$ into the signal y(t) so that:

$y(t+\Delta) = x(t+\Delta)^*b_0 + x(t-1+\Delta)^*b_1 + x(t-2+\Delta)^*b_2 +...+ x(t-N+\Delta)b_N$,

where $\Delta$ is between zero and $\pm 1$. In embodiments, a fractional delay, or its equivalent, may be obtained as follows. First, the signal x(t) is delayed by j samples. each of the finite impulse response filter coefficients $b_i$ (where i = 0, 1, ...N) may $b_{i0}$ be represented as a (J+1)-dimensional column vector $\mathbf{b_i} = \begin{bmatrix} b_{i0} \\ b_{i1} \\ \vdots \\ b_{iJ} \end{bmatrix}$ and y(t) may be rewritten as:

$$y(t) = \cdot \begin{bmatrix} x(t) \\ x(t-1) \\ \vdots \\ x(t-J) \end{bmatrix}^T * \begin{bmatrix} b_{00} \\ b_{01} \\ \vdots \\ b_{0J} \end{bmatrix} + \begin{bmatrix} x(t-1) \\ x(t-2) \\ \vdots \\ x(t-J-1) \end{bmatrix}^T * \begin{bmatrix} b_{10} \\ b_{11} \\ \vdots \\ b_{1J} \end{bmatrix} + \cdots + \begin{bmatrix} x(t-N-J) \\ x(t-N-J+1) \\ \vdots \\ x(t-N) \end{bmatrix}^T * \begin{bmatrix} b_{N0} \\ b_{N1} \\ \vdots \\ b_{NJ} \end{bmatrix}$$

When y(t) is represented in the form shown above one can interpolate the value of y(t) for any factional value of t = t+$\Delta$. Specifically, three values of y(t) can be used in a polynomial interpolation. The expected statistical precision of the fractional value $\Delta$ is inversely proportional to J+1, which is the number of "rows" in the immediately preceding expression for y(t).

In embodiments, the quantity t+$\Delta$ may be regarded as a mathematical abstract to explain the idea in time-domain. In practice, one need not estimate the exact "t+A". Instead, the signal y(t) may be transformed into the frequency-domain, so there is no such explicit "t+A". Instead an estimation of a frequency-domain function F($b_i$ )is sufficient to provide the equivalent of a fractional delay $\Delta$. The above equation for the time domain output signal y(t) may be transformed from the time domain to the frequency domain, e.g., by taking a Fourier transform, and the resulting equation may be solved for the frequency domain output signal Y(k). This is equivalent to performing a Fourier transform (e.g., with a fast Fourier transform (fft)) for J+1 frames where each frequency bin in the Fourier transform is a (J+1)x1 column vector.

The number of frequency bins is equal to N+1.

The finite impulse response filter coefficients $b_{ij}$ for each row of the equation above may be determined by taking a Fourier transform of x(t) and determining the $b_{ij}$ through semi-blind source separation. Specifically, for each "row" of the above equation becomes:

$$X_0 = FT(x(t, t-1, \ldots, t-N)) = [X_{00}, X_{01}, \ldots, X_{0N}]$$

$$X_1 = FT(x(t-1, t-2, \ldots, t-(N+1)) = [X_{10}, X_{11}, \ldots, X_{1N}]$$

$$\vdots$$

$$X_J = FT(x(t, t-1, \ldots, t-(N+J))) = [X_{J0}, X_{J1}, \ldots, X_{JN}],$$

where FT( ) represents the operation of taking the Fourier transform of the quantity in parentheses.

Furthermore, although the preceding deals with only a single microphone, embodiments may use arrays of two or more microphones. In such cases the input signal x(t) may be represented as an M+1-dimensional vector: $x(t) = (x_0(t), x_1(t), \ldots, x_M(t))$, where M+1 is the number of microphones in the array.

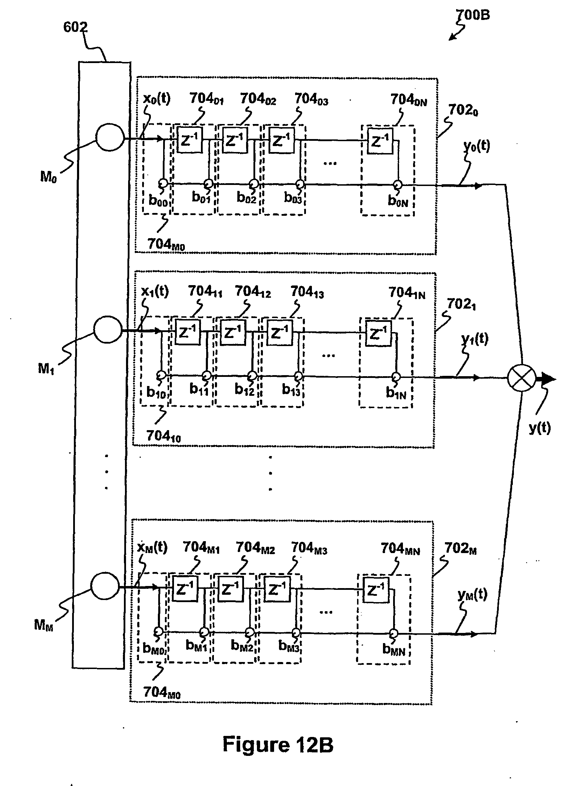

Figure 12B depicts an apparatus **700B** having microphone array **602** of M+1 microphones $\mathbf{M_0}$, $\mathbf{M_1}$...$\mathbf{M_M}$. Each microphone is connected to one of M+1 corresponding filters **702$_0$**, **702$_1$**...**702$_M$**. Each of the filters **702$_0$**, **702$_1$**...**702$_M$** includes a corresponding set of N+1 filter taps **704$_{00}$**... **704$_{0N}$**, **704$_{10}$**...**704$_{1N}$**, **704$_{M0}$**,.. **704$_{MN}$**. Each filter tap **704$_{mi}$** includes a finite impulse response filter $\mathbf{b_{mi}}$, where m=0...M, i=0...N. Except for the first filter tap **704$_{m0}$** in each filter **702$_m$**, the filter taps also include delays indicated by $Z^{-1}$. Each filter **702$_m$** produces a corresponding output $y_m(t)$, which may be regarded as the components of the combined output y(t) of the filters. Fractional delays may be applied to each of the output signals $y_m(t)$ as described above.

For an array having M+1 microphones, the quantities $X_j$ are generally (M+1)-dimensional vectors. By way of example, for a 4-channel microphone array, there are 4 input signals: $x_0(t)$, $x_1(t)$, $x_2(t)$, and $x_3(t)$. The 4-channel inputs $x_m(t)$ are transformed to the frequency domain, and collected as a 1x4 vector "$X_{jk}$". The outer product of the vector $X_{jk}$ becomes a 4x4 matrix, the statistical average of this matrix becomes a "Covariance" matrix, which shows the correlation between every vector element.

By way of example, the four input signals $x_0(t)$, $x_1(t)$, $x_2(t)$ and $X_3(t)$ may be transformed into the frequency domain with J+1 = 10 blocks. Specifically:

For channel 0:

$$X_{00} = FT( [x_0(t-0), x_0(t-1), x_0(t-2), \ldots x_0(t-N-1+0)] )$$

$$X_{01} = FT( [x_0(t-1), x_0(t-2), x_0(t-3), \ldots x_0(t-N-1+1)] )$$

$$\ldots\ldots$$

$$X_{09} = FT( [x_0(t-9), x_0(t-10) x_0(t-2), \ldots x_0(t-N-1+10)] )$$

For channel 1:

$$X_{01} = FT( [x_1(t-0), x_1(t-1), x_1(t-2), \ldots x_1(t-N-1+0)] )$$

$$X_{11} = FT( [x_1(t-1), x_1(t-2), x_1(t-3), \ldots x_1(t-N-1+1)] )$$

$$\ldots\ldots$$

For channel 2:

$$X_{19} = FT(\ [x_1(t-9),\ x_1(t-10)\ x_1(t-2),\ ....\ x_1(t-N-1+10)]\ )$$

For channel 2:

$$X_{20} = FT(\ [x_2(t-0),\ x_2(t-1),\ x_2(t-2),\ ....\ x_2(t-N-1+0\ )]\ )$$

$$X_{21} = FT(\ [x_2(t-1),\ x_2\ (t-2),\ x_2(t-3),\ ....\ x_2(t-N-1+1\ )]\ )$$

$$.........$$

$$X_{29} = FT(\ [x_2(t-9),\ x_2(t-10)\ x_2(t-2),\ ....\ x_2(t-N-1+10)]\ )$$

For channel 3:

$$X_{30} = FT(\ [x_3(t-0),\ x_3(t-1),\ x_3(t-2),\ ....\ x_3(t-N-1+0\ )]\ )$$

$$X_{31} = FT(\ [x_3(t-1),\ x_3(t-2),\ x_3(t-3),\ ....\ x_3(t-N-1+1\ )]\ )$$

$$.........$$

$$X_{39} = FT(\ [x_3(t-9),\ x_3(t-10)\ x_3(t-2),\ ....\ x_3(t-N-1+10)]\ )$$

By way of example 10 frames may be used to construct a fractional delay. For every frame j, where j = 0 : 9, for every frequency bin <k>, where n = 0 : N-1, one can construct a 1X4 vector:

$$X_{jk} = [X_{0j}(k),\ X_{1j}(k),\ X_{2j}(k),\ X_{3j}(k)].$$

The vector $X_{jk}$ is fed into the SBSS algorithm to find the filter coefficients $b_{jn}$. The SBSS algorithm is an independent component analysis (ICA) based on 2nd-order independence, but the mixing matrix A (e.g., a 4x4 matrix for 4-mic-array) is replaced with 4X1 mixing weight vector $b_{jk}$, which is a diagonal of **A1**= **A** * **C**$^{-1}$ (i.e., $b_{jk}$ = Diagonal **(A1))**, where **C**$^{-1}$ is the inverse eigenmatrix obtained from the calibration procedure described above. It is noted that the frequency domain calibration signal vectors **X'**$_{jk}$ may be generated as described in the preceding discussion.

The mixing matrix A may be approximated by a runtime covariance matrix Cov(j,k) = $E((X_{jk})^T * X_{jk})$, where E refers to the operation of determining the expectation value and $(X_{jk})^T$ is the transpose of the vector $X_{jk}$. The components of each vector $b_{jk}$ are the corresponding filter coefficients for each frame j and each frequency bin k, i.e.,

$b_{jk}$ =[$b_{0j}(k)$, $b_{ij}(k)$, $b_{2j}(k)$, $b_{3j}(k)$].

The independent frequency-domain components of the individual sound sources making up each vector $X_{jk}$ may be determined from:

$S(j,k)^T = b_{jk}^{-1} \cdot X_{jk}$ = [($b0_j(k)^{-1}X_{0j}(k)$, $(b_{ij}(k))^{-1}X_{1j}(k)$, $(b_{2j}(k))^{-1} X_{2j}(k)$, $(b_{3j}(k))^{-1}X_{3j}(k)$], where each $S(j,k)^T$ is a 1X4 vector containing the independent frequency-domain components of the original input signal x(t).

The ICA algorithm is based on "Covariance" independence, in the microphone array 302. It is assumed that there are always M+1 independent components (sound sources) and that their 2nd-order statistics are independent. In other words, the cross-correlations between the signals $x_0(t)$, $x_1(t)$, $x_2(t)$ and $x_3(t)$ should be zero. As a result, the non-diagonal elements in the covariance matrix Cov(j,k) should be zero as well.

By contrast, if one considers the problem inversely, if it is known that there are M+1 signal sources one can also determine their cross-correlation "covariance matrix", by finding a matrix A that can de-correlate the cross-correlation, i.e., the matrix A can make the covariance matrix Cov(j,k) diagonal (all non-diagonal elements equal to zero), then A is the "unmixing matrix" that holds the recipe to separate out the 4 sources.

Because solving for "unmixing matrix **A**" is an "inverse problem", it is actually very complicated, and there is normally no deterministic mathematical solution for A. Instead an initial guess of **A** is made, then for each signal vector $x_m(t)$ (m=0,1..M), **A** is adaptively updated in small amounts (called adaptation step size). In the case of a four-microphone array, the adaptation of **A** normally involves determining the inverse of a 4x4 matrix in the original ICA algorithm. Hopefully, adapted **A** will converge toward the true **A**. According to embodiments, through the use of semi-blind-source-separation, the unmixing matrix **A** becomes a vector **A1** since it is has already been decorrelated by the inverse eigenmatrix **C**$^{-1}$ which is the result of the prior calibration described above.

Multiplying the run-time covariance matrix Cov(j,k) with the pre-calibrated inverse eigenmatrix $\mathbf{C^{-1}}$ essentially picks up the diagonal elements of $\mathbf{A}$ and makes them into a vector $\mathbf{A1}$. Each element of $\mathbf{A1}$ is the strongest cross-correlation, the inverse of $\mathbf{A}$ will essentially remove this correlation. Thus, embodiments simplify the conventional ICA adaptation procedure, in each update, the inverse of $\mathbf{A}$ becomes a vector inverse $\mathbf{b^{-1}}$. It is noted that computing a matrix inverse has N-cubic complexity, while computing a vector inverse has N-linear complexity. Specifically, for the case of N = 4, the matrix inverse computation requires 64 times more computation that the vector inverse computation.

Also, by cutting a (M+1)x(M+1) matrix to a (M+1)x1 vector, the adaptation becomes much more robust, because it requires much fewer parameters and has considerably less problems with numeric stability, referred to mathematically as "degree of freedom. Since SBSS reduces the number of degrees of freedom by (M+1) times, the adaptation convergence becomes faster. This is highly desirable since, in real world acoustic environment, sound sources keep changing, i.e., the unmixing matrix $\mathbf{A}$ changes very fast. The adaptation of $\mathbf{A}$ has to be fast enough to track this change and converge to its true value in real-time. If instead of SBSS one uses a conventional ICA-based BSS algorithm, it is almost impossible to build a real-time application with an array of more than two microphones. Although some simple microphone arrays use BSS, most, if not all, use only two microphones.

The frequency domain output Y(k) may be expressed as an N+1 dimensional vector $\mathbf{Y}=[Y_0, Y_1,..., Y_N]$, where each component $\mathbf{Y_i}$ may be calculated by:

$$Y_i = \begin{bmatrix} X_{i0} & X_{i1} & \cdots & X_{iJ} \end{bmatrix} \bullet \begin{bmatrix} b_{i0} \\ b_{i1} \\ \vdots \\ b_{iJ} \end{bmatrix}$$

Each component $Y_i$ may be normalized to achieve a unit response for the filters.

$$Y_i' = \frac{Y_i}{\sqrt{\sum_{j=0}^{J} (b_{ij})^2}}$$

Although in embodiments N and J may take on any values, it has been shown in practice that N=511 and J=9 provides a desirable level of resolution, e.g., about 1/10 of a wavelength for an array containing 16 kHz microphones.

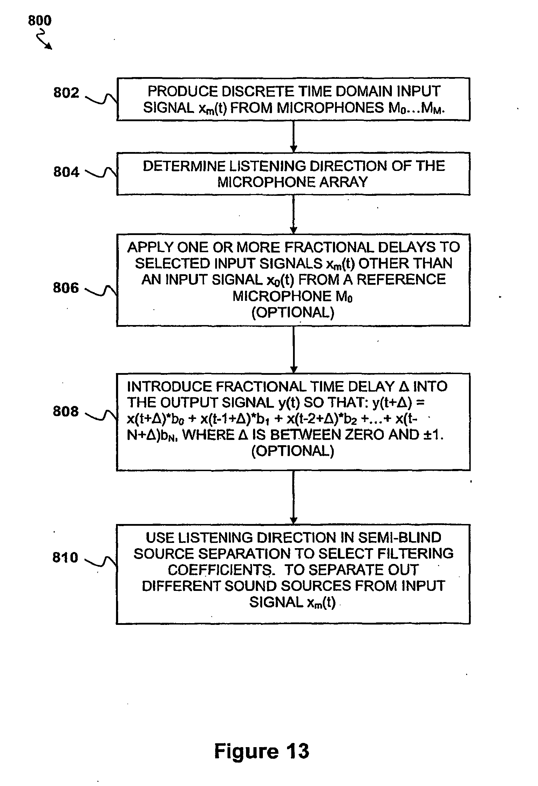

Figure 13 depicts a flow diagram illustrating one embodiment. In Block **802**, a discrete time domain input signal $x_m(t)$ may be produced from microphones $M_0...M_M$. In Block **804**, a listening direction may be determined for the microphone array, e.g., by computing an inverse eigenmatrix $\mathbf{C^{-1}}$ for a calibration covariance matrix as described above. As discussed above, the-listening direction may be determined during-calibration of the-microphone array during design or manufacture or may be re-calibrated at runtime. Specifically, a signal from a source located in a preferred listening direction with respect to the microphone array may be recorded for a predetermined period of time. Analysis frames of the signal may be formed at predetermined intervals and the analysis frames may be transformed into the frequency domain. A calibration covariance matrix may be estimated from a vector of the analysis frames that have been transformed into the frequency domain. An eigenmatrix C of the calibration covariance matrix may be computed and an inverse of the eigenmatrix provides the listening direction.

In Block **506**, one or more fractional delays may be applied to selected input signals $x_m(t)$ other than an input signal $x_0(t)$ from a reference microphone $M_0$. Each fractional delay is selected to optimize a signal to noise ratio of a discrete time domain output signal y(t) from the microphone array. The fractional delays are selected to such that a signal from the reference microphone $M_0$ is first in time relative to signals from the other microphone(s) of the array.

In Block **508**, a fractional time delay $\Delta$ is introduced into the output signal y(t) so that: $y(t+\Delta) = x(t+\Delta)^*b_0 + x(t-1+\Delta)^*b_1 + x(t-2+\Delta)^*b_2 +...+ x(t-N+\Delta)b_N$, where $\Delta$ is between zero and $\pm 1$. The fractional delay may be introduced as described above with respect to Figures 4A and 4B. Specifically, each time domain input signal $x_m(t)$ may be delayed by j+1 frames and the resulting delayed input signals may be transformed to a frequency domain to produce a frequency domain input signal vector $\mathbf{X_{jk}}$ for each of k=0:N frequency bins.

In Block **510**, the listening direction (e.g., the inverse eigenmatrix $\mathbf{C^{-1}}$) determined in the Block 504 is used in a semi-blind source separation to select the finite impulse response filter coefficients, $b_0, b_1..., b_N$ to separate out different sound sources from input signal $x_m(t)$. Specifically, filter coefficients for each microphone m, each frame j and each frequency bin k, $[b_{0j}(k), b_1j(k), ... b_{Mj}(k)]$ may be computed that best separate out two or more sources of sound from

the input signals $x_m(t)$. Specifically, a runtime covariance matrix may be generated from each frequency domain input signal vector $\mathbf{X_{jk}}$. The runtime covariance matrix may be multiplied by the inverse $\mathbf{C^{-1}}$ of the eigenmatrix C to produce a mixing matrix A and a mixing vector may be obtained from a diagonal of the mixing matrix A. The values of filter coefficients may be determined from one or more components of the mixing vector. Further, the filter coefficients may represent a location relative to the microphone array in one embodiment. In another embodiment, the filter coefficients may represent an area relative to the microphone array.

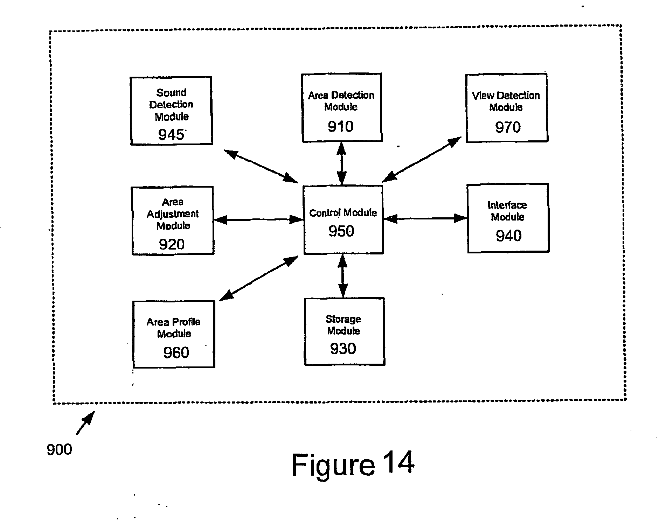

Figure 14 illustrates one embodiment of a system **900** for capturing an audio signal based on a location of the signal. The system **900** includes an area detection modules **910**, an area adjustment module **920**, a storage module **930**, an interface module **940**, a sound detection module **945**, a control module 950, an area profile module **960**, and a view detection module **970**. The control module **950** may communicate with the area detection module **910**, the area adjustment module **920**, the storage module **930**, the interface module **940**, the sound detection module **945**, the area profile module **960**, and the view detection module **970**.

The control module **950** may coordinate tasks, requests, and communications between the area detection module **910**, the area adjustment module **920**, the storage module 930, the interface module 940, the sound detection module **945**, the area profile module 960, and the view detection module **970**.

The area detection module 910 may detect the listening zone that is being monitored for sounds. In one embodiment, a microphone array detects the sounds through a particular electronic device **410**. For example, a particular listening zone that encompasses a predetermined area can be monitored for sounds originating from the particular area. In one embodiment, the listening zone is defined by finite impulse response filter coefficients $b_0$, $b_1$..., $b_N$, as described above.

In one embodiment, the area adjustment module **920** adjusts the area defined by the listening zone that is being monitored for sounds. For example, the area adjustment module **920** is configured to change the predetermined area that comprises the specific listening zone as defined by the area detection module **910**. In one embodiment, the predetermined area is enlarged. In another embodiment, the predetermined area is reduced. In one embodiment, the finite impulse response filter coefficients $b_0$, $b_1$..., $b_N$ are modified to reflect the change in area of the listening zone.

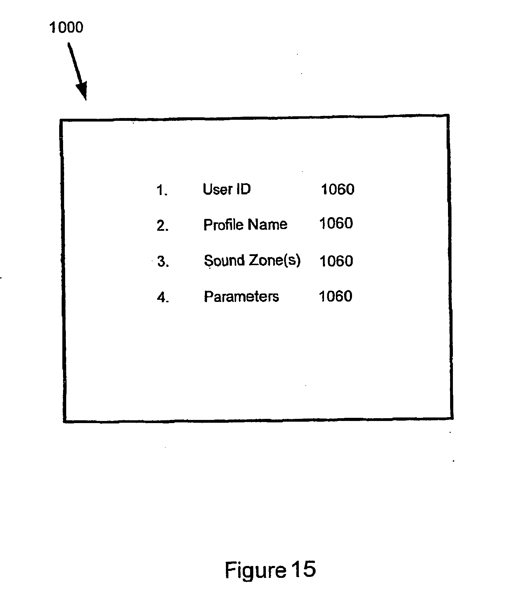

The storage module **930** may store a plurality of profiles wherein each profile is associated with a different specification for detecting sounds. In one embodiment, the profile stores various information, e.g., as shown in an exemplary profile in Figure 15. In one embodiment, the.storage module **930** is located within the server device **430**. In another embodiment, portions of the storage module **930** are located within the electronic device **410**. In another embodiment, the storage module **930** also stores a representation of the sound detected.

In one embodiment, the interface module **940** detects the electronic device 410 as the electronic device **410** is connected to the network **420**.

In another embodiment, the interface module **940** detects input from the interface device **415** such as a keyboard, a mouse, a microphone, a still camera, a video camera, and the like.

In yet another embodiment, the interface module 640 provides output to the interface device **415** such as a display, speakers, external storage devices, an external network, and the like.

In one embodiment, the sound detection module 945 is configured to detect sound that originates within the listening zone. In one embodiment, the listening zone is determined by the area detection module **910**. In another embodiment, the listening zone is determined by the area adjustment module **920**.

In one embodiment, the sound detection module 945 captures the sound originating from the listening zone. In another embodiment, the sound detection module 945 detects a location of the sound within the listening zone. The location of the sound may be expressed in terms of finite impulse response filter coefficients $b_0$, $b_1$..., $b_N$.

In one embodiment, the area profile module **960** processes profile information related to the specific listening zones for sound detection. For example, the profile information may include parameters that delineate the specific listening zones that are being detected for sound. These parameters may include finite impulse response filter coefficients $b_0$, $b_1$..., $b_N$.

In one embodiment, exemplary profile information is shown within a record illustrated in Figure 15. In one embodiment, the area profile module **960** utilizes the profile information. In another embodiment, the area profile module **960** creates additional records having additional profile information.

In one embodiment, the view detection module 970 detects the field of view of a image capture unit such as a still camera or video camera. For example, the view detection module **970** is configured to detect the viewing angle of the image capture unit as seen through the image capture unit. In one instance, the view detection module **970** detects the magnification level of the image capture unit. For example, the magnification level may be included within the metadata describing the particular image frame. In another embodiment, the view detection module **970** periodically detect the field of view such that as the image capture unit zooms in or zooms out, the current field of view is detected by the view detection module **970.**

In another embodiment, the view detection module **970** detects the horizontal and vertical rotational positions of the image capture unit relative to the microphone array.

The system **900** in Figure 14 is shown for the purpose of example and is merely one embodiment of the methods and apparatuses for capturing an audio signal based on a location of the signal. Additional modules may be added to the system **900** without departing from the scope of the methods and apparatuses for capturing an audio signal based on a location of the signal. Similarly, modules may be combined or deleted without departing from the scope of the methods and apparatuses for adjusting a listening area for capturing sounds or for capturing an audio signal based on a visual image or a location of a source of a sound signal.

Figure 15 illustrates a simplified record **1000** that corresponds to a profile that describes the listening area. In one embodiment, the record **1000** is stored within the storage module **930** and utilized within the system **900**. In one embodiment, the record **1000** includes a user identification field **1010**, a profile name field **1020**, a listening zone field **1030**, and a parameters field **1040**.

In one embodiment, the user identification field **1010** provides a customizable label for a particular user. For example, the user identification field **1010** may be labeled with arbitrary names such as "Bob", "Emily's Profile", and the like.

In one embodiment, the profile name field **1020** uniquely identifies each profile for detecting sounds. For example, in one embodiment, the profile name field **1020** describes the location and/or participants. For example, the profile name field **1020** may be labeled with a descriptive name such as "The XYZ Lecture Hall", "The Sony PlayStation® ABC Game", and the like. Further, the profile name field **1020** may be further labeled "The XYZ Lecture Hall with half capacity", The Sony PlayStation® ABC Game with 2 other Participants", and the like.

In one embodiment, the listening zone field **1030** identifies the different areas that are to be monitored for sounds. For example, the entire XYZ Lecture Hall may be monitored for sound. However, in another embodiment, selected portions of the XYZ Lecture Hall are monitored for sound such as the front section, the back section, the center section, the left section, and/or the right section.

In another example, the entire area surrounding the Sony PlayStation® may be monitored for sound. However, in another embodiment, selected areas surrounding the Sony PlayStation® are monitored for sound such as in front of the Sony PlayStation®, within a predetermined distance from the Sony PlayStation®, and the like.

In one embodiment, the listening zone field **1030** includes a single area for monitoring sounds. In another embodiment, the listening zone field **1030** includes multiple areas for monitoring sounds.

In one embodiment, the parameter field **1040** describes the parameters that are utilized in configuring the sound detection device to properly detect sounds within the listening zone as described within the listening zone field **1030.**

In one embodiment, the parameter field **1040** includes finite impulse response filter coefficients $b_0$, $b_1$..., $b_N$.

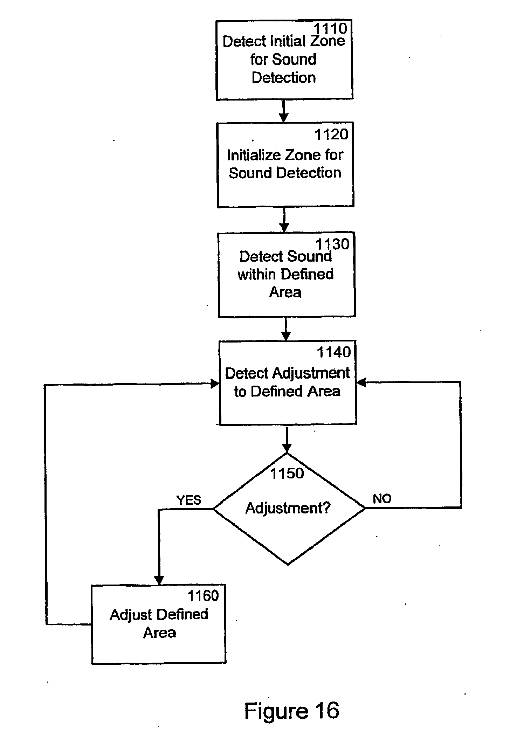

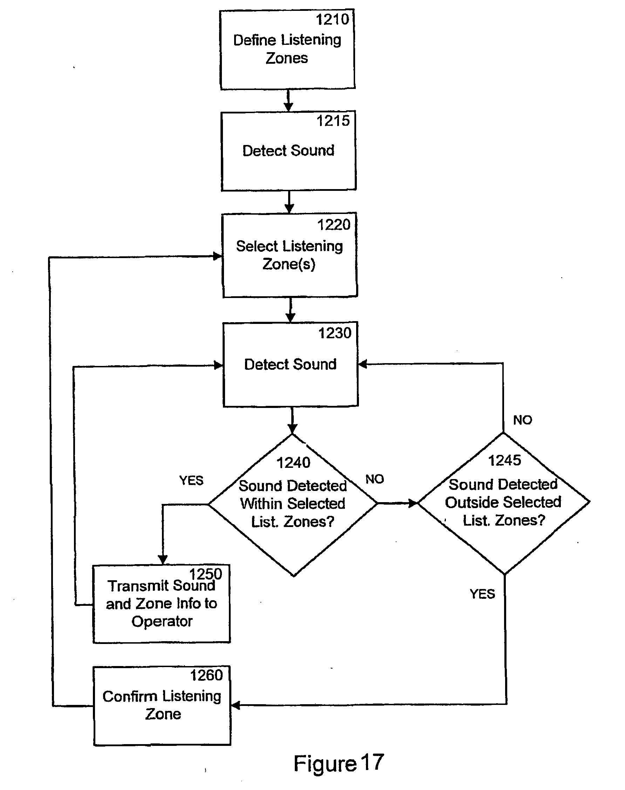

The flow diagrams as depicted in Figures 16, 17, 18, and 19 illustrate examples of embodiments of methods and apparatus for adjusting a listening area for capturing sounds or for capturing an audio signal based on a visual image or a location of a source of a sound signal. The blocks within the flow diagrams can be performed in a different sequence without departing from the spirit of the methods and apparatus for capturing an audio signal based on a location of the signal. Further, blocks can be deleted, added, or combined without departing from the spirit of such methods and apparatus.

The flow diagram in Figure 16 illustrates adjusting a method for listening area for capturing sounds adjusting a listening area for capturing sounds. Such a method may be used in conjunction with capturing an audio signal based on a location of a source of a sound signal according to one embodiment.

In Block **1110**, an initial listening zone is identified for detecting sound. For example, the initial listening zone may be identified within a profile associated with the record 1000. Further, the area profile module **960** may provide parameters associated with the initial listening zone.

. In another example, the initial listening zone is pre-programmed into the particular electronic device **410**. In yet another embodiment, the particular location such as a room, lecture hall, or a car are determined and defined as the initial listening zone.

In another embodiment, multiple listening zones are defined that collectively comprise the audibly detectable areas surrounding the microphone array. Each of the listening zones is represented by finite impulse response filter coefficients $b_0$, $b_1$..., $b_N$. The initial listening zone is selected from the multiple listening zones in one embodiment.

In Block **1120**, the initial listening zone is initiated for sound detection. In one embodiment, a microphone array begins detecting sounds. In one, instance, only the sounds within the initial listening zone are recognized by the device **410**. In one example, the microphone array may initially detect all sounds. However, sounds that originate or emanate from outside of the initial listening zone are not recognized by the device 410. In one embodiment, the area detection module **1110** detects the sound originating from within the initial listening zone.

In Block **1130**, sound detected within the defined area is captured. In one embodiment, a microphone detects the sound. In one embodiment, the captured sound is stored within the storage module **930**. In another embodiment, the sound detection module **945** detects the sound originating from the defined area. In one embodiment, the defined area includes the initial listening zone as determined by the Block **1110**. In another embodiment, the defined area includes the area corresponding to the adjusted defined area of the Block 1160.

In Block **1140**, adjustments to the defined area are detected. In one embodiment, the defined area may be enlarged. For example, after the initial listening zone is established, the defined area may be enlarged to encompass a larger area to monitor sounds.

In another embodiment, the defined area may be reduced. For example, after the initial listening zone is established, the defmed area may be reduced to focus on a smaller area to monitor sounds.

In another embodiment, the size of the defined area may remain constant, but the defined area is rotated or shifted to a different location. For example, the defined area may be pivoted relative to the microphone array.

. Further, adjustments to the defined area may also be made after the first adjustment to the initial listening zone is performed.

In one embodiment, the signals indicating an adjustment to the defined area may be initiated based on the sound detected by the sound detection module 945, the field of view detected by the view detection module **970**, and/or input received through the interface module **940** indicating a change an adjustment in the defined area.

In Block **1150**, if an adjustment to the defined area is detected, then the defined area is adjusted in Block **1160**. In one embodiment, the finite impulse response filter coefficients $b_0$, $b_1$..., $b_N$ are modified to reflect an adjusted defined area in the Block **1160**. In another embodiment, different filter coefficients are utilized to reflect the addition or subtraction of listening zone(s).

In Block **1150,** if an adjustment to the defined area is not detected, then sound within the defined area is detected in the Block 830.

The flow diagram in Figure 12 illustrates creating a listening zone, selecting a listening zone, and monitoring sounds according to one embodiment.

In Block **1210**, the listening zones are defmed. In one embodiment, the field covered by the microphone array includes multiple listening zones. In one embodiment, the listening zones are defined by segments relative to the microphone array. For example, the listening zones may be defined as four different quadrants such as Northeast, Northwest, Southeast, and Southwest, where each quadrant is relative to the location of the microphone array located at the center. In another example, the listening area may be divided into any number of listening zones. For illustrative purposes, the listening area may be defined by listening zones encompassing X number of degrees relative to the microphone array. If the entire listening area is a full coverage of 360 degrees around the microphone array, and there are 10 distinct listening zones, then each listening zone or segment would encompass 36 degrees.

In one embodiment, the entire area where sound can be detected by the microphone, array is covered by one of the listening zones. In one embodiment, each of the listening zones corresponds with a set of finite impulse response filter coefficients $b_0$, $b_1$..., $b_N$.

In one embodiment, the specific listening zones may be saved within a profile stored within the record **1000**. Further, the finite impulse response filter coefficients $b_0$, $b_1$..., $b_N$ may also be saved within the record **1000.**

In Block **1215**, sound is detected by the microphone array for the purpose of selecting a listening zone. The location of the detected sound may also be detected. In one embodiment, the location of the detected sound is identified through a set of finite impulse response filter coefficients $b_0$, $b_1$..., $b_N$.

In Block **1220**, at least one listening zone is selected. In one instance, the selection of particular listening zone(s) is utilized to prevent extraneous noise from interfering with sound intended to be detected by the microphone array. By limiting the listening zone to a smaller area, sound originating from areas that are not being monitored can be minimized.

In one embodiment, the listening zone is automatically selected. For example, a particular listening zone can be automatically selected based on the sound detected within the Block **1215**. The particular listening zone that is selected can correlate with the location of the sound detected within the Block **1215**. Further, additional listening zones can be selected that are in adjacent or proximal to listening zones relative to the detected sound. In another example, the particular listening zone is selected based on a profile within the record **1200**.

In another embodiment, the listening zone is manually selected by an operator. For example, the detected sound may be graphically displayed to the operator such that the operator can visually detect a graphical representation that shows which listening zone corresponds with the location of the detected sound. Further, selection of the particular listening zone(s) may be performed based on the location of the detected sound. In another Example, the listening zone may be selected solely based on the anticipation of sound.

In Block **1230**, sound is detected by the microphone array. In one embodiment, any sound is captured by the microphone array regardless of the selected listening zone. In another embodiment, the information representing the sound detected is analyzed for intensity prior to further analysis. In one instance, if the intensity of the detected sound does not meet a predetermined threshold, then the sound is characterized as noise and is discarded.

In Block **1240**, if the sound detected within the Block 1230 is found within one of the selected listening zones from the Block **1220**, then information representing the sound is transmitted to the operator in Block **1250**. In one embodiment, the information representing the sound may be played, recorded, and/or further processed.

In the Block **1240**, if the sound detected within the Block **1230** is not found within one of the selected listening zones then further analysis is performed per Block **1245**.

If the sound is not detected outside of the selected listening zones within the Block **1245**, then detection of sound continues in the Block **1230**.

However, if the sound is detected outside of the selected listening zones within the Block **1245**, then a confirmation is requested by the operator in Block **1260**. In one embodiment, the operator is informed of the sound detected outside of the selected listening zones and is presented an additional listening zone that includes the region that the sound originates from within. In this example, the operator is given the opportunity to include this additional listening zone as one of the selected listening zones. In another embodiment, a preference of including or not including the additional listening zone can be made ahead of time such that additional selection by the operator is not requested. In this example, the inclusion or exclusion of the additional listening zone is automatically performed by the system **1200**.

After Block **1260**, the selected listening zones are updated in the Block **1220** based on the selection in the Block 1260. For example, if the additional listening zone is selected, then the additional listening zone is included as one of the selected listening zones.

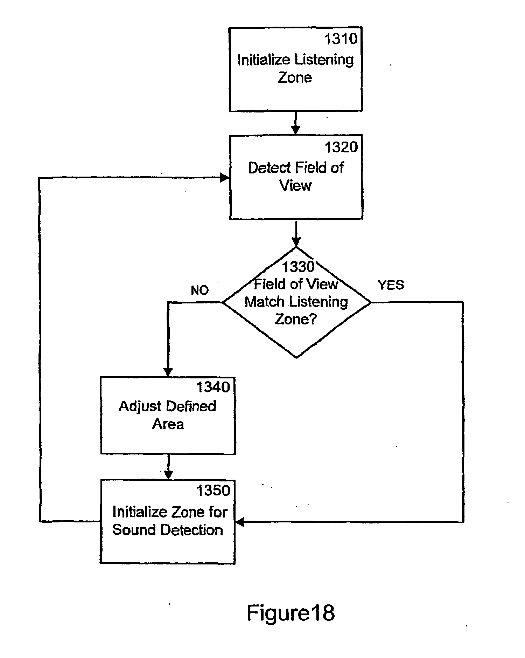

The flow diagram in Figure 18 illustrates adjusting a listening zone based on the field of view according to one embodiment.

In Block **1310**, a listening zone is selected and initialized. In one embodiment, a single listening zone is selected from a plurality of listening zones. In another embodiment, multiple listening zones are selected. In one embodiment, the microphone array monitors the listening zone. Further, a listening zone can be represented by finite impulse response filter coefficients $b_0$, $b_1$..., $b_N$ or a predefined profile illustrated in the record **1000**.

In Block **1320,** the field of view is detected. In one embodiment, the field of view represents the image viewed through a image capture unit such as a still camera, a video camera, and the like. In one embodiment, the view detection module **970** is utilized to detect the field of view. The current field of view can change as the effective focal length (magnification) of the image capture unit is varied. Further, the current view of field can also change if the image capture unit rotates relative to the microphone array.

In Block **1330**, the current field of view is compared with the current listening zone(s). In one embodiment, the magnification of the image capture unit and the rotational relationship between the image capture unit and the microphone array are utilized to determine the field of view. This field of view of the image capture unit is compared with the current listening zone(s) for the microphone array.

If there is a match between the current field of view of the image capture unit and the current listening zone(s) of the microphone array, then sound is detected within the current listening zone(s) in Block **1350**.

. If there is not a match between the current field of view of the image capture unit and the current listening zone(s) of the microphone array, then the current listening zone is adjusted in Block **1340**. If the rotational position of the current field of view and the current listening zone of the microphone array are not aligned, then a different listening zone is selected that encompasses the rotational position of the current field of view.

Further, in one embodiment, if the current field of view of the image capture unit is narrower than the current listening zones, then one of the current listening zones may be deactivated such that the deactivated listening zone is no longer able to detect sounds from this deactivated listening zone. In another embodiment, if the current field of view of the image capture unit is narrower than the single, current listening zone, then the current listening zone may be modified through manipulating the finite impulse response filter coefficients $b_0$, $b_1$..., $b_N$ to reduce the area that sound is detected by the current listening zone.

Further, in one embodiment, if the current field of view of the image capture unit is broader than the current listening zone(s), then an additional listening zone that is adjacent to the current listening zone(s) may be added such that the additional listening zone increases the area that sound is detected. In another embodiment, if the current field of view of the image capture unit is broader than the single, current listening zone, then the current listening zone may be modified through manipulating the finite impulse response filter coefficients $b_0$, $b_1$..., $b_N$ to increase the area that sound is detected by the current listening zone.

After adjustment to the listening zone in the Block **1340**, sound is detected within the current listening zone(s) in Block **1350**.

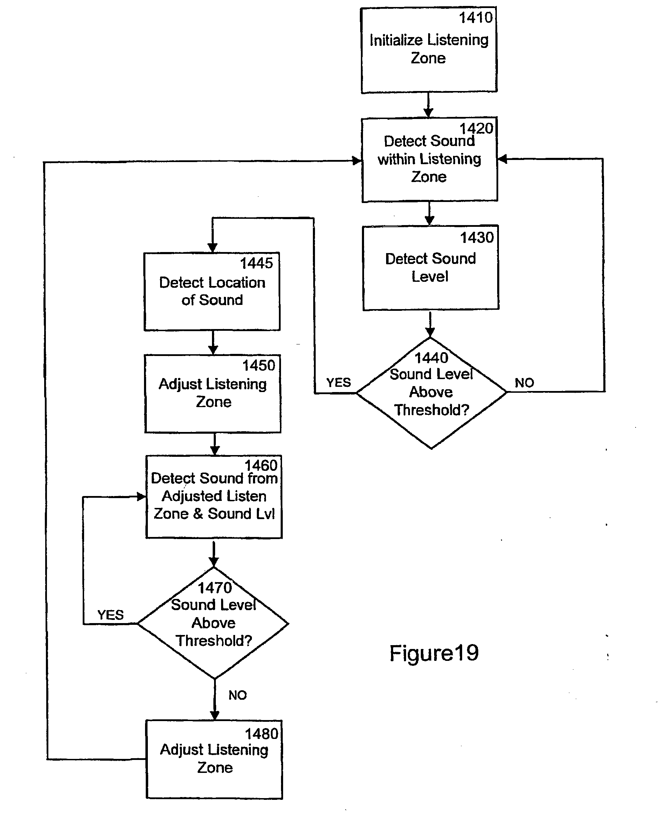

The flow diagram in Figure 19 illustrates adjusting a listening zone based on the field of view according to one embodiment.

In Block **1410**, a listening zone is selected and initialized. In one embodiment, a single listening zone is selected from a plurality of listening zones. In another embodiment, multiple listening zones are selected. In one embodiment, the microphone array monitors the listening zone. Further, a listening zone can be represented by finite impulse response filter coefficients $b_0$, $b_1$..., $b_N$ or a predefined profile illustrated in the record **1000**.

In Block **1420**, sound is detected within the current listening zone(s). In one embodiment, the sound is detected by the microphone array through the sound detection module **945**.

In Block 1430, a sound level is determined from the sound detected within the Block **1420**.

In Block **1440**, the sound level determined from the Block **1430** is compared with a sound threshold level. In one embodiment, the sound threshold level is chosen based on sound models that exclude extraneous, unintended noise. In another embodiment, the sound threshold is dynamically chosen based on the current environment of the microphone array. For example, in a very quiet environment, the sound threshold may be set lower to capture softer sounds. In contrast, in a loud environment, the sound threshold may be set higher to exclude background noises.

If the sound level from the Block **1430** is below the sound threshold level as described within the Block 1140, then sound continues to be detected within the Block **1420**.

If the sound level from the Block **1430** is above the sound threshold level as described within the Block **1440**, then the location of the detected sound is determined in Block 1445. In one embodiment, the location of the detected sound is expressed in the form of finite impulse response filter coefficients $b_0$, $b_1$..., $b_N$.

In Block **1450**, the listening zone that is initially selected in the Block **1410** is adjusted. In one embodiment, the area covered by the initial listening zone is decreased. For example, the location of the detected sound identified from the Block **1445** is utilized to focus the initial listening zone such that the initial listening zone is adjusted to include the area adjacent to the location of this sound.

In one embodiment, there may be multiple listening zones that comprise the initial listening zone. In this example with multiple listening zones, the listening zone that includes the location of the sound is retained as the adjusted listening zone. In a similar example, the listening zone that that includes the location of the sound and an adjacent listening zone are retained as the adjusted listening zone.

In another embodiment, there may be a single listening zone as the initial listening zone. In this example, the adjusted listening zone can be configured as a smaller area around the location of the sound. In one embodiment, the smaller area around the location of the sound can be represented by finite impulse response filter coefficients $b_0$, $b_1$..., $b_N$ that identify the area immediately around the location of the sound.

In Block **1460**, the sound is detected within the adjusted listening zone(s). In one embodiment, the sound is detected by the microphone array through the.sound detection module **945**. Further, the sound level is also detected from the adjusted listening zone(s). In addition, the sound detected within the adjusted listening zone(s) may be recorded, streamed, transmitted, and/or further processed by the system **900**.

In Block **1470**, the sound level determined from the Block **1460** is compared with a sound threshold level. In one embodiment, the sound threshold level is chosen to determine whether the sound originally detected within the Block **1420** is continuing.

If the sound level from the Block **1460** is above the sound threshold level as described within the Block **1470**, then sound continues to be detected within the Block **1460**.

If the sound level from the Block **1460** is below the sound threshold level as described within the Block **1470**, then the adjusted listening zone(s) is further adjusted in Block **1480**. In one embodiment, the adjusted listening zone reverts back to the initial listening zone shown in the Block **1410**.

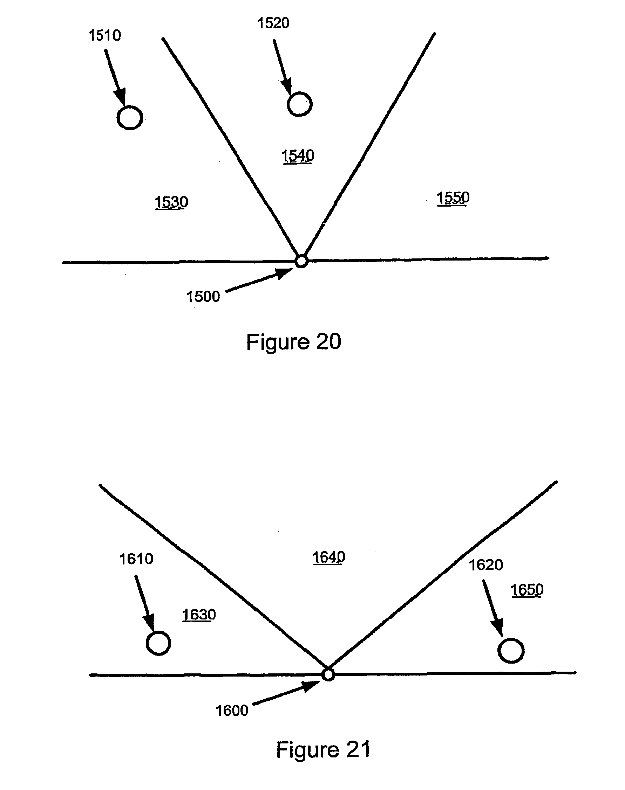

The diagram in Figure 20 illustrates a use of the field of view application as described within Figure 18. In Figure 20 an electronic device **1500** includes a microphone array and an image capture unit, e.g., as describe above. Objects **1510**, **1520** can be regarded as sources of sound. In one embodiment, the device **1500** is a camcorder. The device **1500** is capable of capturing sounds and visual images within regions **1530**, **1540**, and **1550**. Furthermore, the device **1500** can adjust a field of view for capturing visual images and can adjust the listening zone for capturing sounds. The regions 1530, 1540, and 1550 are chosen as arbitrary regions. There can be fewer or additional regions that are larger or smaller in different instances.

In one embodiment, the device **1500** captures the visual image of the region **1540** and the sound from the region **1540**. Accordingly, sound and visual images from the object **1520** may be captured. However, sounds and visual images from the object **1510** will not be captured in this instance.

In one instance, the field of view of the device **1500** may be enlarged from the region **1540** to encompass the object **1510**. Accordingly, the sound captured by the device **1500** follows the visual field of view and also enlarges the listening zone from the region **1540** to encompass the object **1510**.

In another instance, the visual image of the device **1500** may cover the same footprint as the region **1540** but be rotated to encompass the object **1510**. Accordingly, the sound captured by the device **1500** follows the visual field of view and the listening zone rotates from the region **1540** to encompass the object **1510**.

Figure 21 illustrates a diagram that illustrates a use of the method described in Figure 19. Figure 21 depicts a microphone array **1600,** and objects **1610, 1620**. The microphone array **1600** is capable of capturing sounds within regions **1630, 1640,** and **1650.** Further, the microphone array **1600** can adjust the listening zone for capturing sounds. The regions 1630, 1640, and 1650 are chosen as arbitrary regions. There can be fewer or additional regions that are larger or smaller in different instances.

In one embodiment, the microphone array 1600 monitors sounds from the regions **1630, 1640,** and **1650.** When the object **1620** produces a sound that exceeds a sound level threshold the microphone array **1600** narrows sound detection to the region **1650**. After the sound from the object **1620** terminates, the microphone array **1600** is capable of detecting sounds from the regions **1630, 1640,** and **1650.**

In one embodiment, the microphone array **1600** can be integrated within a Sony PlayStation® gaming device.

In this application, the objects **1610** and **1620** represent players to the left and right of the user of the PlayStation® device, respectively. In this application, the user of the PlayStation® device can monitor fellow players or friends on either side of the user while blocking out unwanted noises by narrowing the listening zone that is monitored by the microphone array. **1600** for capturing sounds.

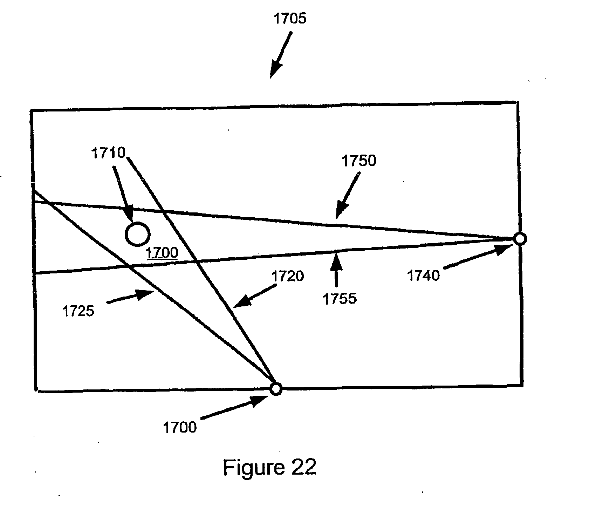

Figure 22 illustrates a diagram that illustrates a use of an application in conjunction with the system **900** as described within Figure 14. Figure 22 depicts a microphone array **1700**, an object **1710**, and a microphone array **1740**. The microphone arrays **1700** and **1740** are capable of capturing sounds within a region **1705** which includes a region **1750**. Further, both microphone arrays **1700** and **1740** can adjust their respective listening zones for capturing sounds.

In one embodiment, the microphone arrays 1700 and 1740 monitor sounds within the region **1705.** When the object **1710** produces a sound that exceeds the sound level threshold, then the microphone arrays **1700** and **1740** narrows sound detection to the region . **1750.** In one embodiment, the region **1750** is bounded by traces **1720, 1725, 1750,** and 1755. After the sound terminates, the microphone arrays **1700** and **1740** return to monitoring sounds within the region **1705**.

In another embodiment, the microphone arrays **1700** and **1740** are combined within a single microphone array that has a convex shape such that the single microphone array can be functionally substituted for the microphone arrays **1700** and **1740**.

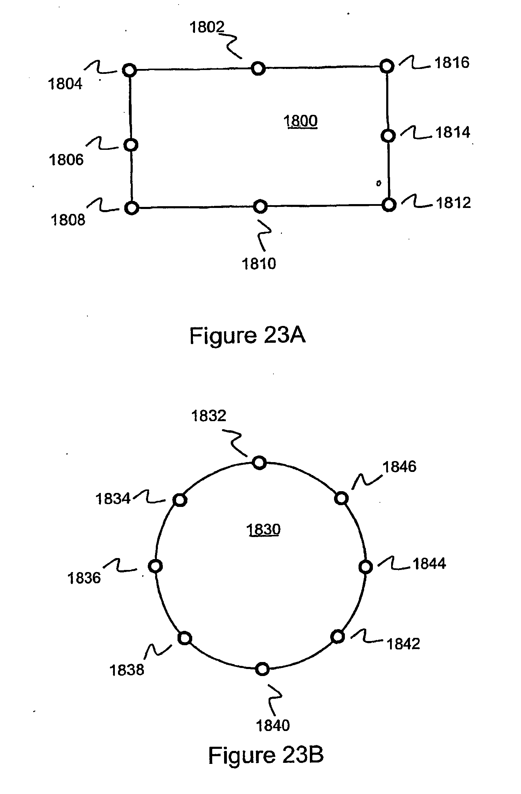

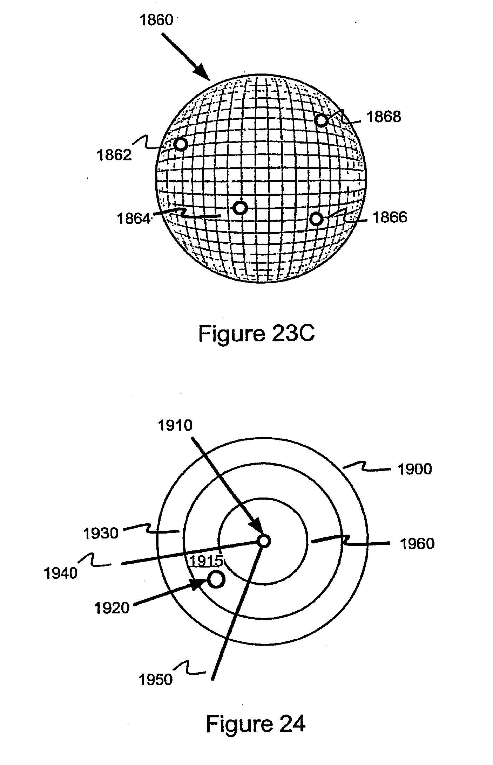

The microphone array **602** as shown within Figure 11A illustrates one embodiment for a microphone array. Figures 23A, 23B, and 23C illustrate other embodiments of microphone arrays.

Figure 23A illustrates a microphone array **1810** that includes microphones **1802**, **1804, 1806, 1808, 1810, 1812, 1814,** and **1816**. In one embodiment, the microphone array **1810** is shaped as a rectangle and the microphones **1802, 1804, 1806, 1808, 1810, 1812, 1814,** and **1816** are located on the same plane relative to each other and are positioned along the perimeter of the microphone array **1810**. In other embodiments, there are fewer or additional microphones. Further, the positions of the microphones **1802, 1804, 1806, 1808, 1810, 1812, 1814,** and **1816** can vary in other embodiments.

Figure 23B illustrates a microphone array **1830** that includes microphones 1832, **1834, 1836, 1838, 1840, 1842, 1844,** and **1846**. In one embodiment, the microphone array **1830** is shaped as a circle and the microphones **1832, 1834, 1836, 1838, 1840, 1842, 1844,** and **1846** are located on the same plane relative to each other and are positioned along the perimeter of the microphone array **1530**. In other embodiments, there are fewer or additional microphones. Further, the positions of the microphones **1832, 1834, 1836, 1838, 1840, 1842, 1844,** and **1846** can vary in other embodiments.

Figure 23C illustrates a microphone array **1860** that includes microphones **1862, 1864, 1866,** and **1868.** In one embodiment, the microphones 1862, **1864, 1866,** and 1868 distributed in a three dimensional arrangement such that at least one of the microphones is located on a different plane relative to the other three. By way of example, the microphones **1862, 1864, 1866,** and **1868** may be located along the outer surface of a three dimensional sphere. In other embodiments, there may be fewer or additional microphones. Further, the positions of the microphones **1862, 1864, 1866,** and **1868** can vary in other embodiments.

Figure 24 illustrates a diagram that illustrates a use of an application in conjunction with the system **900** as described within Figure 14. Figure 24 includes a microphone array **1910** and an object **1915**. The microphone array **1910** is capable of capturing sounds within a region **1900**. Further, the microphone array **1910** can adjust the listening zones for capturing sounds from the object **1915**.

In one embodiment, the microphone array **1910** monitors sounds within the region **1900**. When the object **1915** produces a sound that exceeds the sound level threshold, a component of a controller coupled to the microphone array **1910** (e.g., area adjustment module 620 of system 600 of Figure 6) may narrow the detection of sound to the region **1915**. In- one embodiment, the region **1915** is bounded by traces **1930, 1940, 1950,** and **1960**. Further, the region **1915** represents a three dimensional spatial volume in which sound is captured by the microphone array **1910**.

In one embodiment, the microphone array **1910** utilizes a two dimensional array. For example, the microphone arrays **1800** and **1830** as shown in Figures 23A and 23B, respectively, are each one embodiment of a two dimensional array. By having the microphone array **1910** as a two dimensional array, the region **1915** can be represented by finite impulse response filter coefficients $b_0$, $b_1$..., $b_N$ as a spatial volume. In one embodiment, by utilizing a two dimensional microphone array, the region **1915** is bounded by traces **1930, 1940, 1950,** and **1960**. In contrast to a two dimensional microphone array, by utilizing a linear microphone array, the region **1915** is bounded by traces **1940** and **1950** in another embodiment.

In another embodiment, the microphone array **1910** utilizes a three dimensional array such as the microphone array **1860** as shown within Figure 23C. By having the microphone array **1910** as a three dimensional array, the region **1915** can be represented by finite impulse response filter coefficients $b_0$, $b_1$..., $b_N$ as a spatial volume. In one embodiment, by utilizing a three dimensional microphone array, the region **1915** is bounded by traces **1930, 1940, 1950,** and **1960**. Further, to determine the location of the object **1920**, the three dimensional array utilizes TDA detection in one embodiment.

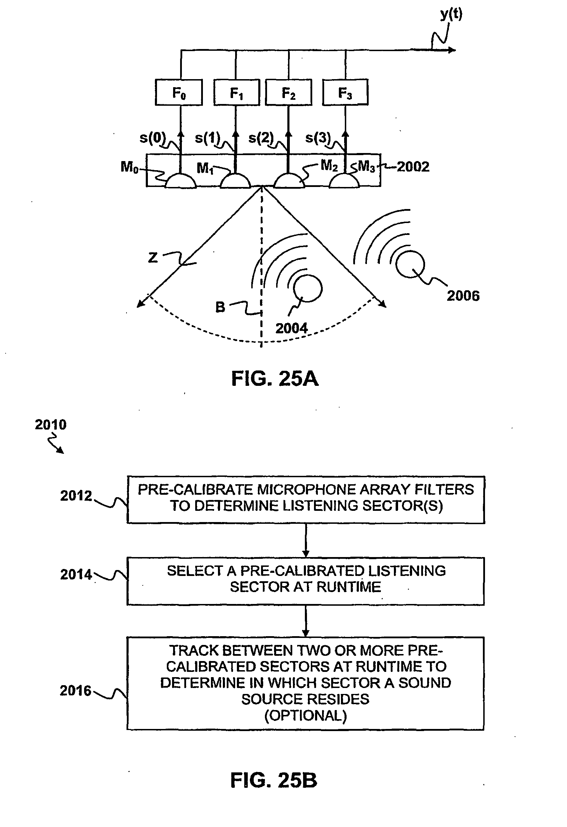

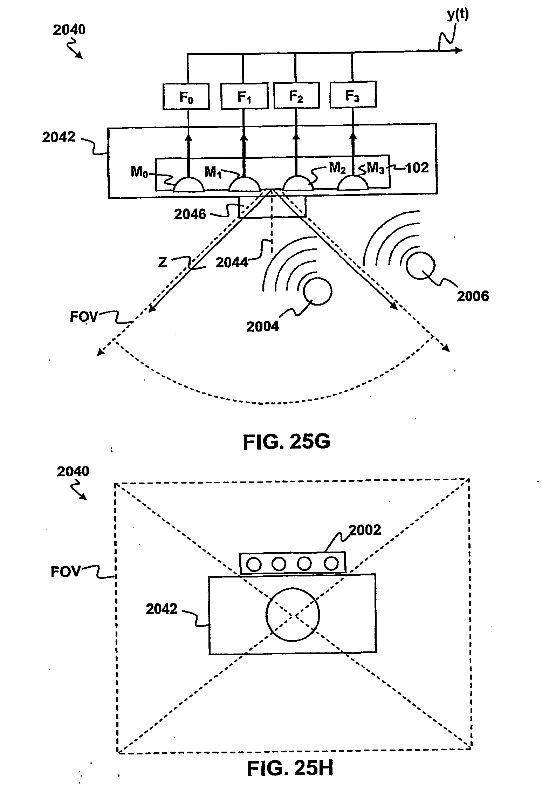

The embodiments of the invention are directed to methods and apparatus for targeted sound detection using pre-calibrated listening zones. Such embodiments may be implemented with a microphone array having two or more microphones. As depicted in FIG. 25A, a microphone array **2002** may include four microphones $M_0$, $M_1$, $M_2$, and $M_3$ that are coupled to corresponding signal filters $F_0$, $F_1$, $F_2$ and $F_3$. Each of the filters may implement some combination of finite impulse response (FIR) filtering and time delay of arrival (TDA) filtering. In general, the microphones $M_0$, $M_1$, $M_2$, and $M_3$ may be omni-directional microphones, i.e., microphones that can detect sound from essentially any direction. Omni-directional microphones are generally simpler in construction and less expensive than microphones having a preferred listening direction. The microphones $M_0$, $M_1$, $M_2$, and $M_3$ produce corresponding outputs $x_0(t)$, $x_t(t)$, $X_2(t)$, $X_3(t)$. These outputs serve as inputs to the filters $F_0$, $F_1$, $F_2$ and $F_3$. Each filter may apply a time delay of arrival (TDA) and/or a finite impulse response: (FIR) to its input. The outputs of the filters may be combined into a filtered output $y(t)$. Although four microphones $M_0$, $M_1$, $M_2$ and $M_3$ and four filters $F_0$, $F_1$, $F_2$ and $F_3$ are depicted in FIG. 25A for the sake of example, those of skill in the art will recognize that embodiments of the present invention may include any number of microphones greater than two and any corresponding number of filters. Although Figure 25A depicts a linear array of microphones for the sake of example, embodiments of the invention are not limited to such configurations. Alternatively, three or more microphones may be arranged in a two-dimensional array, or four or more microphones may be arranged in a three-dimensional array as discussed above. In one particular embodiment, a system based on 2-microphone array may be incorporated into a controller unit for a video game.

An audio signal arriving at the microphone array **2002** from one or more sources **2004, 2006** may be expressed as a vector $x = [x_0, x_1, x_2, x_3]$, where $x_0$, $x_1$, $x_2$ and $X_3$ are the signals received by the microphones $M_0$, $M_1$, $M_2$ and $M_3$ respectively. Each signal $X_m$ generally includes subcomponents due to different sources of sounds. The subscript m ranges from 0 to 3 in this example and is used to distinguish among the different microphones in the array. The subcomponents may be expressed as a vector $s = [s_1, s_2, ...s_K]$, where K is the number of different sources.

To separate out sounds from the signal s originating from different sources one must determine the best TDA filter for each of the filters $F_0$, $F_1$, $F_2$ and $F_3$. To facilitate separation of sounds from the sources **2004, 2006,** the filters $F_0$, $F_1$, $F_2$ and $F_3$ are pre-calibrated with filter parameters (e.g., FIR filter coefficients and/or TDA values) that define one or more pre-calibrated listening zones **Z**. Each listening zone **Z** is a region of space proximate the microphone array **2002**. The parameters are chosen such that sounds originating from a source **2004** located within the listening zone **Z** are detected while sounds originating from a source **2006** located outside the listening zone **Z** are filtered out, i.e., substantially attenuated. In the example depicted in FIG. 25A, the listening zone **Z** is depicted as being a more or less wedge-shaped sector having an origin located at or proximate the center of the microphone array **2002**. Alternatively, the listening zone **Z** may be a discrete volume, e.g., a rectangular, spherical, conical or arbitrarily-shaped volume in space. Wedge-shaped listening zones can be robustly established using a linear array of microphones. Robust listening zones defined by arbitrarily-shaped volumes may be established using a planar array or an array of at least four microphones where in at least one microphone lies in a different plane from the others, e.g., as illustrated in Figure 6 and in Figure 23C. Such an array is referred to herein as a "concave" microphone array.

As depicted in the flow diagram of FIG. 25B, a method **2010** for targeted voice detection using the microphone array **2002** may proceed as follows. As indicated at 2012, one or more sets of the filter coefficients for the filters $F_0$, $F_1$, $F_2$ and $F_3$ are determined corresponding to one or more pre-calibrated listening zones **Z**. The filters $F_0$, $F_1$, $F_2$, and $F_3$ may be implemented in hardware or software, e.g., using filters $702_0..702_M$ with corresponding filter taps $704_{mi}$ having delays $z^{-1}$ and finite impulse response filter coefficients $b_{mi}$ as described above with respect to Figure 12A and Figure 12B. Each set of filter coefficients is selected to detect portions of the input signals corresponding to sounds originating within a given listening sector and filters out sounds originating outside the given listening sector. To pre-calibrate the listening sectors S one or more known calibration sound sources may be placed at several different known locations within and outside the sector S. During calibration, the calibration source(s) may emit sounds characterized by known spectral distributions similar to sounds the microphone array **2002** is likely to encounter at runtime. The known locations and spectral characteristics of the sources may then be used to select the values of the filter parameters for the filters $F_0$, $F_1$, $F_2$ and $F_3$

By way of example, and without limitation, Blind Source Separation (BSS) may be used to pre-calibrate the filters $F_0$, $F_1$, $F_2$ and $F_3$ to define the listening zone **Z**. Blind source separation separates a set of signals into a set of other signals, such that the regularity of each resulting signal is maximized, and the regularity between the signals is minimized (i.e., statistical independence is maximized or decorrelation is minimized). The blind source separation may involve an independent component analysis (ICA) that is based on second-order statistics. In such a case, the data for the signal arriving at each microphone may be represented by the random vector $x_m=[x_1,.....x_n]$ and the components as a random vector $s= [s_1,...S_n]$ The observed data $X_m$ may be transformed using a linear static transformation $s = Wx$, into maximally independent components s measured by some function $F(s_1,...s_n)$ of independence, e.g., as discussed above with respect to Figures 11A, 11B, 12A, 12B and 13. The listening zones **Z** of the microphone array **2002** can be calibrated prior to run time (e.g., during design and/or manufacture of the microphone array) and may optionally be re-calibrated at run time. By way of example, the listening zone **Z** may be pre-calibrated by recording a person speaking within the listening and applying second order statistics to the recorded speech as described above with respect to Figures 11A, 11B, 12A, 12B and 13 regarding the calibration of the listening direction.

The calibration process may be refined by repeating the above procedure with the user standing at different locations within the listening zone **Z**. In microphone-array noise reduction it is preferred for the user to move around inside the listening sector during calibration so that the beamforming has a certain tolerance (essentially forming a listening cone area) that provides a user some flexible moving space while talking. In embodiments of the present invention, by contrast, voice/sound detection need not be calibrated for the entire cone area of the listening sector S. Instead the listening sector is preferably calibrated for a very narrow beam **B** along the center of the listening zone **Z,** so that the final sector determination based on noise suppression ratio becomes more robust. The process may be repeated for one or more additional listening zones.

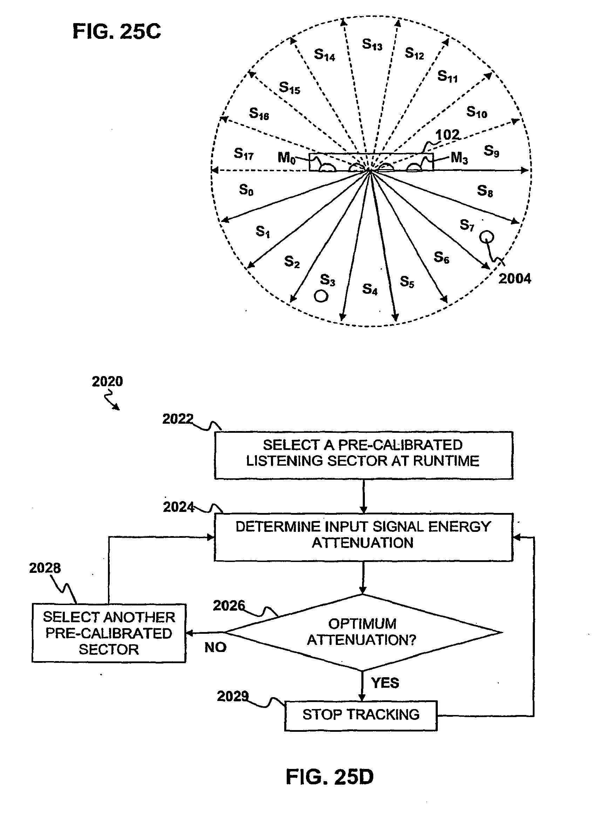

Referring again to FIG. 25B, as indicated at **2014** a particular pre-calibrated listening zone **Z** may be selected at a runtime by applying to the filters $F_0$, $F_1$, $F_2$ and $F_3$ a set of filter parameters corresponding to the particular pre-calibrated listening zone **Z**. As a result, the microphone array may detect sounds originating within the particular listening sector and filter out sounds originating outside the particular listening sector. Although a single listening sector is shown in FIG. 25A, embodiments of the present invention may be extended to situations in which a plurality of different listening sectors are pre-calibrated. As indicated at **2016** of FIG. 25B, the microphone array **2002** can then track between two or more pre-calibrated sectors at runtime to determine in which sector a sound source resides. For example as illustrated in FIG. 25C, the space surrounding the microphone array **2002** may be divided into multiple listening zones in the form of eighteen different pre-calibrated 20 degree wedge-shaped listening sectors $S_0$... $S_{17}$ that encompass about 360 degrees surrounding the microphone array **2002** by repeating the calibration procedure outlined above each of the different sectors and associating a different set of FIR filter coefficients and TDA values with each different sector. By applying an appropriate set of pre-determined filter settings (e.g., FIR filter coefficients and/or TDA values determined during calibration as described above) to the filters $F_0$, $F_1$, $F_2$, $F_3$ any of the listening sectors $S_0$...$S_{17}$ may be selected.

By switching from one set of pre-determined filter settings to another, the microphone array **2002** can switch from one sector to another to track a sound source **2004** from one sector to another. For example, referring again to FIG. 25C, consider a situation where the sound source **2004** is located in sector $S_7$ and the filters $F_0$, $F_1$, $F_2$, $F_3$ are set to select sector $S_4$. Since the filters are set to filter out sounds coming from outside sector $S_4$ the input energy E of sounds from the sound source **2004** will be attenuated. The input energy E may be defined as a dot product:

$$E = 1/M \sum_m x_m^T(t) \cdot x_m(t)$$

Where $x_m^T(t)$ is the transpose of the vector $x_m(t)$, which represents microphone output $x_m(t)$. And the sum is an average taken over all M microphones in the array.

The attenuation of the input energy E may be determined from the ratio of the input energy E to the filter output energy, i.e.:

Attenuation $= 1/M \dfrac{\sum_m x_m^T(t) \cdot x_m(t)}{y^T(t) \cdot y(t)}$. If the filters are set to select the sector containing the sound source **2004** the attenuation is approximately equal to 1. Thus, the sound source **2004** may be tracked by switching the settings of the filters $F_0$, $F_1$, $F_2$, $F_3$ from one sector setting to another and determining the attenuation for different sectors. A targeted voice detection **2020** method using determination of attenuation for different listening sectors may proceed as depicted in the flow diagram of FIG. 25D. At **2022** any pre-calibrated listening sector may be selected initially. For example, sector $S_4$, which corresponds roughly to a forward listening direction, may be selected as a default initial listening sector. At **2024** an input signal energy attenuation is determined for the initial listen sector. If, at **2026** the attenuation is not an optimum value another pre-calibrated sector may be selected at **2028.**

There are a number of different ways to search through the sectors $S_0$...$S_{17}$ for the sector containing the sound source **2004**. For example, by comparing the input signal energies for the microphones $M_0$ and $M_3$ at the far ends of the array it is possible to determine whether the sound source **2004** is to one side or the other of the default sector $S_4$. For example, in some cases the correct sector may be "behind" the microphone array **2002**, e.g., in sectors $S_9$ ... $S_{17}$. In many cases the mounting of the microphone array may introduce a built-in attenuation of sounds coming from these sectors such that there is a minimum attenuation, e.g., of about 1 dB, when the source **2004** is located in any of these sectors. Consequently it may be determined from the input signal attenuation whether the source **2004** is "in front" or "behind" the microphone array **2002.**

As a first approximation, the sound source **2004** might be expected to be closer to the microphone having the larger input signal energy. In the example depicted in FIG. 25C, it would be expected that the right hand microphone $M_3$ would have the larger input signal energy and, by process of elimination, the sound source **2004** would be in one of sectors $S_6$, $S_7$, $S_8$, $S_9$, $S_{10}$, $S_{11}$, $S_{12}$. Preferably, the next sector selected is one that is approximately 90 degrees away from the initial sector $S_4$ in a direction toward the right hand microphone $M_3$, e.g., sector $S_8$. The input signal energy attenuation for sector $S_8$ may be determined as indicated at **2024**. If the attenuation is not the optimum value another sector may be selected at **2026**. By way of example, the next sector may be one that is approximately 45 degrees away from the previous sector in the direction back toward the initial sector, e.g., sector $S_6$. Again the input signal energy attenuation may be determined and compared to the optimum attenuation. If the input signal energy is not close to the optimum only two sectors remain in this example. Thus, for the example depicted in FIG. 25C, in a maximum of four sector switches, the correct sector may be determined. The process of determining the input signal energy attenuation and switching between different listening sectors may be accomplished in about 100 milliseconds if the input signal is sufficiently strong.

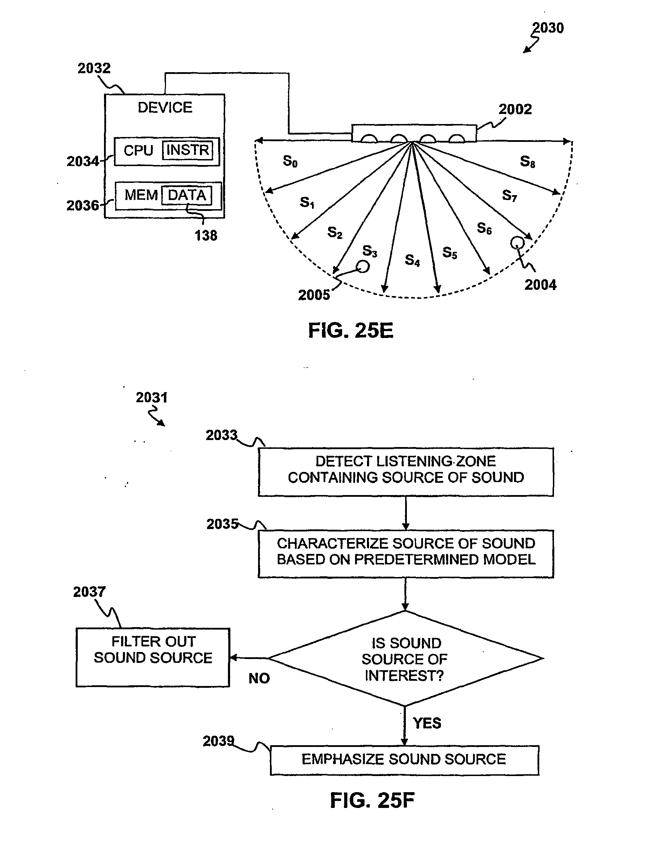

Sound source location as described above may be used in conjunction with a sound source location and characterization technique referred to herein as "acoustic radar". FIG. 25E depicts an example of a sound source location and characterization apparatus 2030 having a microphone array **2002** described above coupled to an electronic device 2032 having a processor **2034** and memory **2036**. The device may be a video game, television or other consumer electronic device. The processor **2034** may execute instructions that implement the FIR filters and time delays described above. The memory **2036** may contain data 2038 relating to pre-calibration of a plurality of listening zones. By way of example the pre-calibrated listening zones may include wedge shaped listening sectors $S_0$, $S_1$, $S_2$, $S_3$, $S_4$, $S_5$, $S_6$, $S_7$, $S_8$.

The instructions run by the processor **2034** may operate the apparatus **2030** according to a method as set forth in the flow diagram 2031 of FIG. 25F. Sound sources 2004, 2005 within the listening zones can be detected using the microphone array **2002**. One sound source 2004 may be of interest to the device **2032** or a user of the device. Another sound source 2005 may be a source of background noise or otherwise not of interest to the device 2032 or its user. Once the microphone array **2002** detects a sound the apparatus **2030** determines which listening zone contains the sound's source **2004** as indicated at **2033** of FIG. 25F. By way of example, the iterative sound source sector location routine described above with respect to Figures 25C through 25D may be used to determine the pre-calibrated listening zones containing the sound sources **2004, 2005** (e.g., sectors $S_3$ and $S_6$ respectively).

Once a listening zone containing the sound source has been identified, the microphone array may be refocused on the sound source, e.g., using adaptive beam forming. The use of adaptive beam forming techniques is described, e.g., in US Patent Application Publication Number 2005/0047611 A1. to Xiadong Mao. The sound source **2004** may then be characterized as indicated at 2035, e.g., through analysis of an acoustic spectrum of the sound signals originating from the sound source. Specifically, a time domain signal from the sound source may be analyzed over a predetermined time window and a fast Fourier transform (FFT) may be performed to obtain a frequency distribution characteristic of the sound source. The detected frequency distribution may be compared to a known acoustic model. The known acoustic model may be a frequency distribution generated from training data obtained from a known source of sound. A number of different acoustic models may be stored as part of the data **2038** in the memory **2036** or other storage medium and compared to the detected frequency distribution. By comparing the detected sounds from the sources **2004,2005** against these acoustic models a number of different possible sound sources may be identified.

Based upon the characterization of the sound source **2004, 2005**, the apparatus **2032** may take appropriate action depending upon whether the sound source is of interest or not. For example, if the sound source **2004** is determined to be one of interest to the device **2032**, the apparatus may emphasize or amplify sounds coming from sector $S_3$ and/or take other appropriate action. For example, if the device **2032** is a video game controller and the source **2004** is a video game player, the device **2032** may execute game instructions such as "jump" or "swing" in response to sounds from the source **2004** that are interpreted as game commands. Similarly, if the sound source **2005** is determined not to be of interest to the device **2032** or its user, the device may filter out sounds coming from sector $S_6$ or take other appropriate action. In some embodiments, for example, an icon may appear on a display screen indicating the listening zone containing the sound source and the type of sound source.

In some embodiments, amplifying sound or taking other appropriate action may include reducing noise disturbances associated with a source of sound. For example, a noise disturbance of an audio signal associated with sound source **104** may be magnified relative to a remaining component of the audio signal. Then, a sampling rate of the audio signal may be decreased and an even order derivative is applied to the audio signal having the decreased sampling rate to define a detection signal. Then, the noise disturbance of the audio signal may be adjusted according to a statistical average of the detection signal. A system capable of canceling disturbances associated with an audio signal, a video game controller, and an integrated circuit for reducing noise disturbances associated with an audio signal are included. Details of a such a technique are described, e.g., in commonly-assigned US Patent Application Number 10/820,469, to Xiadong Mao entitled "METHOD AND APPARATUS TO DETECT AND REMOVE AUDIO DISTURBANCES", which was filed April 7, 2004 and published on October 13, 2005 as US Patent Application Publication 20050226431 .

By way of example, the apparatus **2030** may be used in a baby monitoring application. Specifically, an acoustic model stored in the memory **2036** may include a frequency distribution characteristic of a baby or even of a particular baby. Such a sound may be identified as being of interest to the device **130** or its user. Frequency distributions for other known sound sources, e.g., a telephone, television, radio, computer, persons talking, etc., may also be stored in the memory **2036**. These sound sources may be identified as not being of interest.

Sound source location and characterization apparatus and methods may be used in ultrasonic- and sonic-based consumer electronic remote controls, e.g., as described in commonly assigned US Patent Application number US 2007/0060350 A1 to Steven Osman, entitled "SYSTEM AND METHOD FOR CONTROL BY AUDIBLE DEVICE". Specifically, a sound received by the microphone array may **2002** be analyzed to determine whether or not it has one or more predetermined characteristics. If it is determined that the sound does have one or more predetermined characteristics, at least one control signal may be generated for the purpose of controlling at least one aspect of the device **2032**.

In some embodiments of the present invention, the pre-calibrated listening zone **Z** may correspond to the field-of-view of a camera. For example, as illustrated in FIGs. 25G-25H an audio-video apparatus **2040** may include a microphone array **2002** and signal filters $F_0, F_1, F_2, F_3$, e.g., as described above, and an image capture unit **2042**. By way of example, the image capture unit **2042** may be a digital camera. An example of a suitable digital camera is a color digital camera sold under the name "EyeToy" by Logitech of Fremont, California. The image capture unit **2042** may be mounted in a fixed position relative to the microphone array **2002**, e.g., by attaching the microphone array **2002** to the image capture unit **2042** or vice versa. Alternatively, both the microphone array **2002** and image capture unit **2042** may be attached to a common frame or mount (not shown). Preferably, the image capture unit 2042 is oriented such that an optical axis **2044** of its lens system **2046** is aligned parallel to an axis perpendicular to a common plane of the microphones $M_0, M_1, M_2, M_3$ of the microphone array **2002**. The lens system **2046** may be characterized by a volume of focus FOV that is sometimes referred to as the field of view of the image capture unit. In general, objects outside the field of view. FOV do not appear in images generated by the image capture unit 2042. The settings of the filters $F_0, F_1, F_2, F_3$ may be pre-calibrated such that the microphone array 2002 has a listening zone Z that corresponds to the field of view **FOV** of the image capture unit 2042.As used.herein, the listening zone **Z** may be said to "correspond" to the field of view FOV if there is a significant overlap between the field of view **FOV** and the listening zone **Z**. As used herein, there is "significant overlap" if an object within the field of view **FOV** is also within the listening zone **Z** and an object outside the field of view **FOV** is also outside the listening zone **Z**. It is noted that the foregoing definitions of the terms "correspond" and "significant overlap" within the context of the embodiment depicted in FIGs. 25G-25H allow for the possibility that an object may be within the listening zone **Z** and outside the field of view **FOV.**

The listening zone **Z** may be pre-calibrated as described above, e.g., by adjusting FIR filter coefficients and TDA values for the filters $F_0, F_1, F_2, F_3$ using one or more known sources placed at various locations within the field of view FOV during the calibration stage. The FIR filter coefficients and TDA values are selected (e.g., using ICA) such that sounds from a source **2004** located within the **FOV** are detected and sounds from a source 2006 outside the FOV are filtered out The apparatus **2040** allows for improved processing of video and audio images. By pre-calibrating a listening zone **Z** to correspond to the field of view FOV of the image capture unit **2042** sounds originating from sources within the FOV may be enhanced while those originating outside the FOV may be attenuated. Applications for such an apparatus include audio-video (AV) chat.

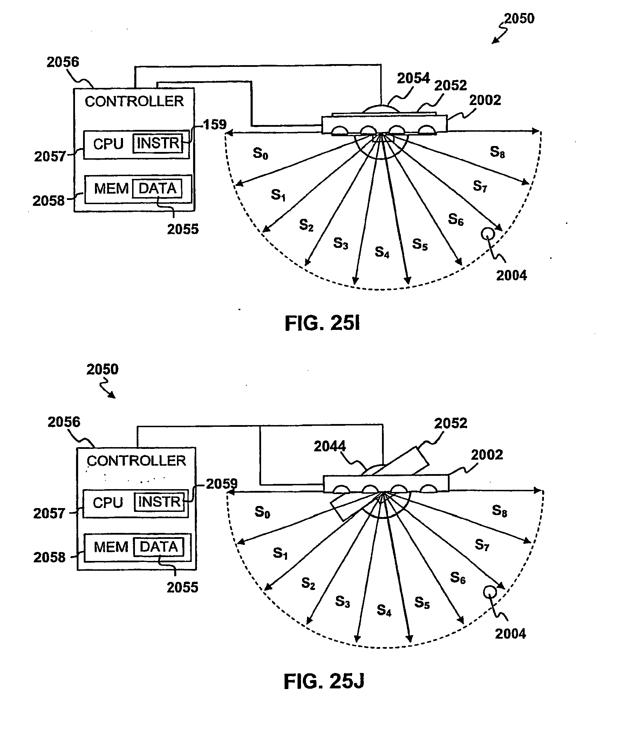

Although only a single pre-calibrated listening sector is depicted in Figures 25G through 25H, embodiments of the present invention may use multiple pre-calibrated listening sectors in conjunction with a camera. For example, Figures 25I-25J depict an apparatus **2050** having a microphone array **2002** and an image capture unit **2052** (e.g., a digital camera) that is mounted to one or more pointing actuators **2054** (e.g., servo-motors). The microphone array **2002**, image capture unit **2052** and actuators may be coupled to a controller **2056** having a processor **2057** and memory **2058**. Software data **2055** stored in the memory **2058** and instructions **2059** stored in the memory **2058** and executed by the processor **2057** may implement the signal filter functions described above. The software data may include FIR filter coefficients and TDA values that correspond to a set of pre-calibrated listening zones, e.g., nine wedge-shaped sectors $S_0...S_8$ of twenty degrees each covering a 180 degree region in front of the microphone array **2002.** The pointing actuators **2050** may point the image capture unit **2052** in a viewing direction in response to signals generated by the processor **2057**. In embodiments of the present invention a listening zone containing a sound source **2004** may be determined, e.g., as described above with respect to Figures 25C through 25D. Once the sector containing the sound source **2004** has been determined, the actuators **2054** may point the image capture unit **2052** in a direction of the particular pre-calibrated listening zone containing the sound source **2004** as shown in Figure 25J. The microphone array **2002** may remain in a fixed position while the pointing actuators point the camera in the direction of a selected listening zone.

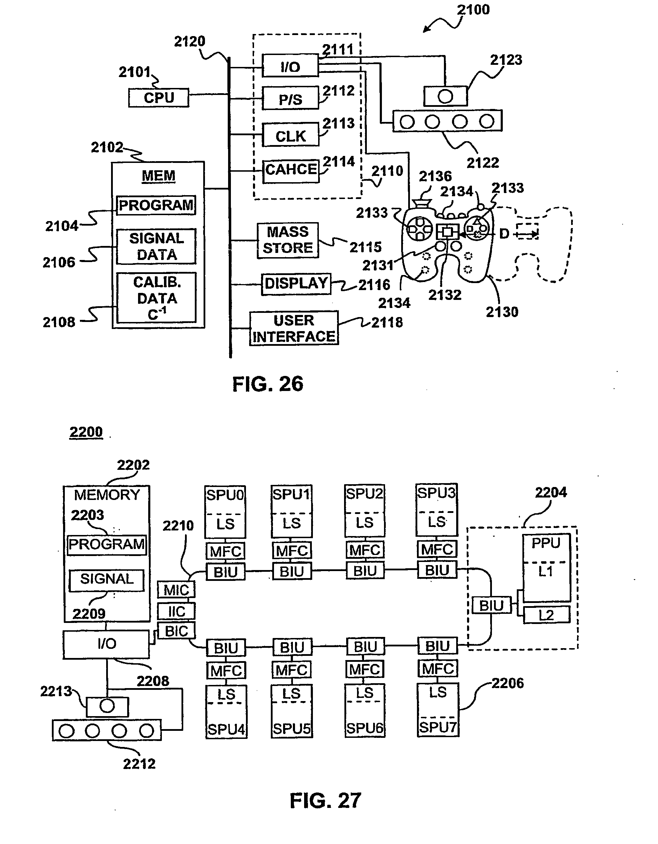

According to embodiments of the present invention, a signal processing method of the type described above with respect to Figures 25A through 25J operating as described above may be implemented as part of a signal processing apparatus **2100,** as depicted in FIG. 26. The apparatus **2100** may include a processor **2101** and a memory **2102** (e.g., RAM, DRAM, ROM, and the like). In addition, the signal processing apparatus 2100 may have multiple processors **2101** if parallel processing is to be implemented. The memory **2102** includes data and code configured as described above.

Specifically, the memory **2102** may include signal data **2106** which may include a digital representation of the input signals $x_m(t)$, and code and/or data implementing the filters **702₀..702_M** with corresponding filter taps **704_mi** having delays $z^{-1}$ and finite impulse response filter coefficients **b_mi** as described above with respect to Figure 12A and Figure 12B. The memory **2102** may also contain calibration data **2108**, e.g., data representing one or more inverse eigenmatrices $C^{-1}$ for one or more corresponding pre-calibrated listening zones obtained from calibration of a microphone array **2122** as described above. By way of example the memory **2102** may contain eignematrices for eighteen 20 degree sectors that encompass a microphone array **2122**. The memory **2102** may also contain profile information, e.g., as described above with respect to Figure 15.

The apparatus **2100** may also include well-known support functions **2110**, such as input/output (I/O) elements **2111**, power supplies (P/S) **2112,** a clock (CLK) **2113** and cache **2114**. The apparatus **2100** may optionally include a mass storage device **2115** such as a disk drive, CD-ROM drive, tape drive, or the like to store programs and/or data. The controller may also optionally include a display unit **2116** and user interface unit **2118** to facilitate interaction between the controller **2100** and a user. The display unit **2116** may be in the form of a cathode ray tube (CRT) or flat panel screen that displays text, numerals, graphical symbols or images. The user interface **2118** may include a keyboard, mouse, joystick, light pen or other device. In addition, the user interface **2118** may include a microphone, video camera or other signal transducing device to provide for direct capture of a signal to be analyzed. The processor **2101,** memory **2102** and other components of the system **2100** may exchange signals (e.g., code instructions and data) with each other via a system bus **2120** as shown in FIG. 26.

The microphone array **2122** may be coupled to the apparatus **2100** through the I/O functions **2111**. The microphone array may include between about 2 and about 8 microphones, preferably about 4 microphones with neighboring microphones separated by a distance of less than about 4 centimeters, preferably between about 1 centimeter and about 2 centimeters. Preferably, the microphones in the array **2122** are omni-directional microphones. An optional image capture unit **2123** (e.g., a digital camera) may be coupled to the apparatus **2100** through the I/O functions **2111**. One or more pointing actuators **2125** that are mechanically coupled to the camera may exchange signals with the processor **2101** via the I/O functions **2111**.

As used herein, the term I/O generally refers to any program, operation or device that transfers data to or from the system **2100** and to or from a peripheral device. Every data transfer may be regarded as an output from one device and an input into another. Peripheral devices include input-only devices, such as keyboards and mouses, output-only devices, such as printers as well as devices such as a writable CD-ROM that can act as both an input and an output device. The term "peripheral device" includes external devices, such as a mouse, keyboard, printer, monitor, microphone, game controller, camera, external Zip drive or scanner as well as internal devices, such as a CD-ROM drive, CD-R drive or internal modem or other peripheral such as a flash memory reader/writer, hard drive.

In certain embodiments of the invention, the apparatus **2100** may be a video game unit, which may include a joystick controller **2130** coupled to the processor via the I/O functions **2111** either through wires (e.g., a USB cable) or wirelessly. The joystick controller **2130** may have analog joystick controls **2131** and conventional buttons 2133 that provide control signals commonly used during playing of video games. Such video games may be implemented as processor readable data and/or instructions which may be stored in the memory **2102** or other processor readable medium such as one associated with the mass storage device **2115.**

The joystick controls **2131** may generally be configured so that moving a control stick left or right signals movement along the X axis, and moving it forward (up) or back (down) signals movement along the Y axis. In joysticks that are configured for three-dimensional movement, twisting the stick left (counter-clockwise) or right (clockwise) may signal movement along the Z axis. These three axis - X Y and Z—are often referred to as roll, pitch, and yaw, respectively, particularly in relation to an aircraft.

In addition to conventional features, the joystick controller **2130** may include one or more inertial sensors **2132**, which may provide position and/or orientation information to the processor **2101** via an inertial signal. Orientation information may include angular information such as a tilt, roll or yaw of the joystick controller **2130**. By way of example, the inertial sensors **2132** may include any number and/or combination of accelerometers, gyroscopes or tilt sensors. In a preferred embodiment, the inertial sensors **2132** include tilt sensors adapted to sense orientation of the joystick controller with respect to tilt and roll axes, a first accelerometer adapted to sense acceleration along a yaw axis and a second accelerometer adapted to sense angular acceleration with respect to the yaw axis. An accelerometer may be implemented, e.g., as a MEMS device including a mass mounted by one or more springs with sensors for sensing displacement of the mass relative to one or more directions. Signals from the sensors that are dependent on the displacement of the mass may be used to determine an acceleration of the joystick controller **2130.** Such techniques may be implemented by program code instructions **2104** which may be stored in the memory **2102** and executed by the processor **2101**.

In addition, the program code **2104** may optionally include processor executable instructions including one or more instructions which, when executed adjust the mapping of controller manipulations to game a environment. Such a feature allows a user to change the "gearing" of manipulations of the joystick controller **2130** to game state. For example, a 45 degree, rotation, of the joystick controller **2130** may be mapped to a 45 degree rotation of a game object.

However this mapping may be modified so that an X degree rotation (or tilt or yaw or "manipulation") of the controller translates to a Y rotation (or tilt or yaw or "manipulation") of the game object. Such modification of the mapping gearing or ratios can be adjusted by the program code **2104** according to game play or game state or through a user modifier button (key pad, etc.) located on the joystick controller **2130**. In certain embodiments the program code **2104** may change the mapping over time from an X to X ratio to a X toY ratio in a predetermined time-dependent manner.

In addition, the joystick controller **2130** may include one or more light sources **2134,** such as light emitting diodes (LEDs). The light sources **2134** may be used to distinguish one controller from the other. For example one or more LEDs can accomplish this by flashing or holding an LED pattern code. By way of example, 5 LEDs can be provided on the joystick controller **2130** in a linear or two-dimensional pattern. Although a linear array of LEDs is preferred, the LEDs may alternatively, be arranged in a rectangular pattern or an arcuate pattern to facilitate determination of an image plane of the LED array when analyzing an image of the LED pattern obtained by the image capture unit **2123**. Furthermore, the LED pattern codes may also be used to determine the positioning of the joystick controller **2130** during game play. For instance, the LEDs can assist in identifying tilt, yaw and roll of the controllers. This detection pattern can assist in providing a better user/feel in games, such as aircraft flying games, etc. The image capture unit **2123** may capture images containing the joystick controller **2130** and light sources **2134**. Analysis of such images can determine the location and/or orientation of the joystick controller. Such analysis may be implemented by program code instructions **2104** stored in the memory **2102** and executed by the processor **2101**. To facilitate capture of images of the light sources **2134** by the image capture unit **2123,** the light sources **2134** may be placed on two or more different sides of the joystick controller **2130**, e.g., on the front and on the back (as shown in phantom). Such placement allows the image capture unit **2123** to obtain images of the light sources **2134** for different orientations of the joystick controller **2130** depending on how the joystick controller **2130** is held by a user.

In addition the light sources **2134** may provide telemetry signals to the processor **2101,** e.g., in pulse code, amplitude modulation or frequency modulation format. Such telemetry signals may indicate which joystick buttons are being pressed and/or how hard such buttons are being pressed. Telemetry signals may be encoded into the optical signal, e.g., by pulse coding, pulse width modulation, frequency modulation or light intensity (amplitude) modulation. The processor **2101** may decode the telemetry signal from the optical signal and execute a game command in response to the decoded telemetry signal. Telemetry signals may be decoded from analysis of images of the joystick controller **2130** obtained by the image capture unit **2123**. Alternatively, the apparatus **2101** may include a separate optical sensor dedicated to receiving telemetry signals from the lights sources **2134**. The use of LEDs in conjunction with determining an intensity amount in interfacing with a computer program is described, e.g., in commonly-assigned US Patent Application Number US 2006/0277571 A1 to Richard L. Marks et al., entitled " COMPUTER IMAGE AND AUDIO PROCESSING of AN INTENSITY AND INPUT DEVICES INTERFACING WITH A COMPUTER PROGRAM" . In addition, analysis of images containing the light sources 2134 may be used for both telemetry and determining the position and/or orientation of the joystick controller **2130**.Such techniques may be implemented by program code instructions **2104** which may be stored in the memory **2102** and executed by the processor **2101.**

The processor **2101** may use the inertial signals from the inertial sensor **2132** in conjunction with optical signals from light sources **2134** detected by the image capture unit **2123** and/or sound source location and characterization information from acoustic signals detected by the microphone array **2122** to deduce information on the location and/or orientation of the joystick controller **2130** and/or its user. For example, "acoustic radar" sound source location and characterization may be used in conjunction with the microphone array **2122** to track a moving voice while motion of the joystick controller is independently tracked (through the inertial sensor **2132** and or light sources **2134**). Any number of different 5 combinations of different modes of providing control signals to the processor **2101** may be used in conjunction with embodiments. Such techniques may be implemented by program code instructions **2104** which may be stored in the memory 2102 and executed by the processor **2101**.

Signals from the inertial sensor **2132** may provide part of a tracking information 10 input and signals generated from the image capture unit **2123** from tracking the one or more light sources **2134** may provide another part of the tracking information input. By way of example, and without limitation, such "mixed mode" signals may be used in a football type video game in which a Quarterback pitches the ball to the right after a head fake head movement to the left. Specifically, a game player holding the controller **2130** may turn his 5 head to the left and make a sound while making a pitch movement swinging the controller out to the right like it was the football. The microphone array **2120** in conjunction with "acoustic radar" program code can track the user's voice. The image capture unit **2123** can track the motion of the user's head or track other commands that do not require sound or use of the controller. The sensor **2132** may track the motion of the joystick controller (representing the football). The image, capture unit **2123** may also track the light sources **2134** on the controller **2130**. The user may release of the "ball" upon reaching a certain amount and/or direction of acceleration of the joystick controller **2130** or upon a key command triggered by pressing a button on the joystick controller **2130.**

In certain embodiments of the present invention, an inertial signal, e.g., from an accelerometer or gyroscope may be used to determine a location of the joystick controller **2130**. Specifically, an acceleration signal from an accelerometer may be integrated once with respect to time to determine a change in velocity and the velocity may be integrated with respect to time to determine a change in position. If values of the initial position and velocity at some time are known then the absolute position may be determined using these values and the changes in velocity and position. Although position determination using an inertial sensor may be made more quickly than using the image capture unit **2123** and light sources **2134** the inertial sensor **2132** may be subject to a type of error known as "drift" in which errors that accumulate over time can lead to a discrepancy **D** between the position of the joystick 2130 calculate from the inertial signal (shown in phantom) and the actual position of the joystick controller **2130**. Embodiments of the present invention allow a number of ways to deal with such errors.

For example, the drift may be cancelled out manually by re-setting the initial position of the joystick controller **2130** to be equal to the current calculated position. A user may use one or more of the buttons on the joystick controller **2130** to trigger a command to reset the initial position. Alternatively, image-based drift may be implemented by re-setting the current position to a position determined from an image obtained from the image capture unit **2123** as a reference. Such image-based drift compensation may be implemented manually, e.g., when the user triggers one or more of the buttons on the joystick controller **2130**. Alternatively, image-based drift compensation may be implemented automatically, e.g.,at regular intervals of time or in response to game play. Such techniques may be implemented by program code instructions **2104** which may be stored in the memory **2102** and executed by the processor **2101.**

In certain embodiments it may be desirable to compensate for spurious data in the inertial sensor signal. For example the signal from the inertial sensor **2132** may be oversampled and a sliding average may be computed from the oversampled signal to remove spurious data from the inertial sensor signal. In some situations it may be desirable to oversample the signal and reject a high and/or low value from some subset of data points and compute the sliding average from the remaining data points. Furthermore, other data sampling and manipulation, techniques may be used to adjust the signal from the inertial sensor to remove or reduce the significance of spurious data. The choice of technique may depend on the nature of the signal, computations to be performed with the signal, the nature of game play or some combination of two or more of these. Such techniques may be implemented by program code instructions **2104** which may be stored in the memory **2102** and executed by the processor **2101.**

The processor **2101** may perform digital signal processing on signal data **2106** as described above in response to the data **2106** and program code instructions of a program 2104 stored and retrieved by the memory **2102** and executed by the processor module **2101**. Code portions of the program **2104** may conform to any one of a number of different programming languages such as Assembly, C++, JAVA or a number of other languages. The processor module **2101** forms a general-purpose computer that becomes a specific purpose computer when executing programs such as the program code **2104**. Although the program code **2104** is described herein as being implemented in software and executed upon a general purpose computer, those skilled in the art will realize that the method of task management could alternatively be implemented using hardware such as an application specific integrated circuit (ASIC) or other hardware circuitry. As such, it should be understood that embodiments of the invention can be implemented, in whole or in part, in software, hardware or some combination of both.

In one embodiment, among others, the program code **2104** may include a set of processor readable instructions that implement a method having features in common with the method **2010** of FIG 25B, the method **2020** of FIG. 25D, the method **2040** of FIG. 25F or the methods illustrated in Figures, 7, 8,13,16,17,18 or 19 or some combination of two or more of these. In one embodiment, the program code **2104** may generally include one or more instructions that direct the one or more processors to select a pre-calibrated listening zone at runtime and filter out sounds originating from sources outside the pre-calibrated listening zone. The pre-calibrated listening zones may include a listening zone that corresponds to a volume of focus or field of view of the image capture unit **212**3.

The program code may include one or more instructions which, when executed, cause the apparatus **2100** to select a pre-calibrated listening sector that contains a source of sound. Such instructions may cause the apparatus to determine whether a source of sound lies within an initial sector or on a particular side of the initial sector. If the source of sound does not lie within the default sector, the instructions may, when executed, select a different sector on the particular side of the default sector. The different sector may be characterized by an attenuation of the input signals that is closest to an optimum value. These instructions may, when executed, calculate an attenuation of input signals from the microphone array **2122** and the attenuation to an optimum value. The instructions may, when executed, cause the apparatus **2100** to determine a value of an attenuation of the input signals for one or more sectors and select a sector for which the attenuation is closest to an optimum value.

The program code **2104** may optionally include one or more instructions that direct the one or more processors to produce a discrete time domain input signal $x_m(t)$ from the microphones $M_0 \ldots M_M$, determine a listening sector, and use the listening sector in a semi-blind source separation to select the finite impulse response filter coefficients to separate out different sound sources from input signal $x_m(t)$. The program **2104** may also include instructions to apply one or more fractional delays to selected input signals $x_m(t)$ other than an input signal $x_0(t)$ from a reference microphone $M_0$. Each fractional delay may be selected to optimize a signal to noise ratio of a discrete time domain output signal y(t) from the microphone array. The fractional delays may be selected to such that a signal from the reference microphone $M_0$ is

first in time relative to signals from the other microphone(s) of the array. The program **2104** may also include instructions to introduce a fractional time delay $\Delta$ into an output signal y(t) of the microphone array so that: y(t+$\Delta$) = x(t+$\Delta$)*$b_0$ + x(t-I+A)*$b_1$ + x(t-2+$\Delta$)*$b_2$ +...+ x(t-N+$\Delta$)$b_N$, where $\Delta$ is between zero and $\pm 1$.

The program code **2104** may optionally include processor executable instructions including one or more instructions which, when executed cause the image capture unit 2123 to monitor a field of view in front of the image capture unit **2123,** identify one or more of the light sources **2134** within the field of view, detect a change in light emitted from the light source(s) **2134;** and in response to detecting the change, triggering an input command to the processor **2101.** The use of LEDs in conjunction with an image capture device to trigger actions in a game controller is described e.g., in commonly-assigned, US Patent Application number 10/759,782 to Richard L. Marks, filed January 16, 2004 and entitled: METHOD AND APPARATUS FOR LIGHT INPUT DEVICE.

The program code **2104** may optionally include processor executable instructions including one or more instructions which, when executed, use signals from the inertial sensor and signals generated from the image capture unit from tracking the one or more light sources as inputs to a game system, e.g., as described above. The program code **2104** may optionally include processor executable instructions including one or more instructions which, when executed compensate for drift in the inertial sensor **2132**.

In addition, the program code **2104** may optionally include processor executable instructions including one or more instructions which, when executed adjust the gearing and mapping of controller manipulations to game a environment. Such a feature allows a user to change the "gearing" of manipulations of the joystick controller **2130** to game state. For example, a 45 degree rotation of the joystick controller **2130** may be geared to a 45 degree rotation of a game object. However this 1:1 gearing ratio may be modified so that an X degree rotation (or tilt or yaw or "manipulation") of the controller translates to a Y rotation (or tilt or yaw or "manipulation") of the game object. Gearing may be 1:1 ratio, 1:2 ratio, 1:X ratio or X:Y ratio, where X and Y can take on arbitrary values. Additionally, mapping of input channel to game control may also be modified over time or instantly. Modifications may comprise changing gesture trajectory models, modifying the location, scale, threshold of gestures, etc. Such mapping may be programmed, random, tiered, staggered, etc., to provide a user with a dynamic range of manipulatives. Modification of the mapping, gearing or ratios can be adjusted by the program code **2104** according to game play, game state, through a user modifier button (key pad, etc.) located on the joystick controller **2130**, or broadly in response to the input channel. The input channel may include, but may not be limited to elements of user audio, audio generated by controller, tracking audio generated by the controller, controller button state, video camera output, controller telemetry data, including accelerometer data, tilt, yaw, roll, position, acceleration and any other data from sensors capable of tracking a user or the user manipulation of an object.

In certain embodiments the program code **2104** may change the mapping or gearing over time from one scheme or ratio to another scheme, respectively, in a predetermined time-dependent manner. Gearing and mapping changes can be applied to a game environment in various ways. In one example, a video game character may be controlled under one gearing scheme when the character is healthy and as the character's health deteriorates the system may gear the controller commands so the user is forced to exacerbate the movements of the controller to gesture commands to the character. A video game character who becomes disoriented may force a change of mapping of the input channel as users, for example, may be required to adjust input to regain control of the character under a new mapping. Mapping schemes that modify the translation of the input channel to game commands may also change during gameplay. This translation may occur in various ways in response to game state or in response to modifier commands issued under one or more elements of the input channel. Gearing and mapping may also be configured to influence the configuration and/or processing of one or more elements of the input channel.

In addition, a speaker **2136** may be mounted to the joystick controller **2130**. In "acoustic radar" embodiments wherein the program code **2104** locates and characterizes sounds detected with the microphone array **2122**, the speaker **2136** may provide an audio signal that can be detected by the microphone array **2122** and used by the program code **2104** to track the position of the joystick controller **2130**. The speaker **2136** may also be used to provide an additional "input channel" from the joystick controller **2130** to the processor **2101**. Audio signals from the speaker **2136** may be periodically pulsed to provide a beacon for the acoustic radar to track location. The audio signals (pulsed or otherwise) may be audible or ultrasonic. The acoustic radar may track the user manipulation of the joystick controller **2130** and where such manipulation tracking may include information about the position and orientation (e.g., pitch, roll or yaw angle) of the joystick controller **2130**. The pulses may be triggered at an appropriate duty cycle as one skilled in the art is capable of applying. Pulses may be initiated based on a control signal arbitrated from the system. The apparatus **2100** (through the program code **2104**) may coordinate the dispatch of control signals amongst two or more joystick controllers **2130** coupled to the processor **2101** to assure that multiple controllers can be tracked.

By way of example, embodiments of the present invention may be implemented on parallel processing systems. Such parallel processing systems typically include two or more processor elements that are configured to execute parts of a program in parallel using separate processors. By way of example, and without limitation, FIG. 27 illustrates a type of cell processor **2200** according to an embodiment of the present invention. The cell processor **2200** may be used as the processor **2101** of FIG. 26. In the example depicted in FIG. 27, the cell processor **2200** includes a main memory **2202**, power processor element (PPE) **2204**, and a number of synergistic processor elements (SPEs) **2206**. In the example depicted in FIG. 27, the cell processor **2200** includes a single PPE **2204** and eight SPE **2206**. In such a configuration, seven of the SPE **2206** may be used for parallel processing and one may be reserved as a back-up in case one of the other seven fails. A cell processor may alternatively include multiple groups of PPEs (PPE groups) and multiple groups of SPEs (SPE groups). In such a case, hardware resources can be shared between units within a group. However, the SPEs and PPEs must appear to software as independent elements. As such, embodiments of the present invention are not limited to use with the configuration shown in FIG. 27.

The main memory **2202** typically includes both general-purpose and nonvolatile storage, as well as special-purpose hardware registers or arrays used for functions such as system configuration, data-transfer synchronization, memory-mapped I/O, and I/O subsystems. In embodiments of the present invention, a signal processing program **2203** may be resident in main memory **2202**. The signal processing program **2203** may be configured as described with respect to Figures, 7, 8, 13, 16, 17, 18, 19 25B, 25D or 25F above or some combination of two or more of these. The signal processing program **2203** may run on the PPE. The program **2203** may be divided up into multiple signal processing tasks that can be executed on the SPEs and/or PPE.

By way of example, the PPE **2204** may be a 64-bit PowerPC Processor Unit (PPLD with associated caches L1 and L2. The PPE **2204** is a general-purpose processing unit, which can access system management resources (such as the memory-protection tables, for example). Hardware resources may be mapped explicitly to a real address space as seen by the PPE. Therefore, the PPE can address any of these resources directly by using an appropriate effective address value. A primary function of the PPE **2204** is the management and allocation of tasks for the SPEs **2206** in the cell processor **2200**.

Although only a single PPE is shown in FIG. 27, some cell processor implementations, such as cell broadband engine architecture (CBEA), the cell processor **2200** may have multiple PPEs organized into PPE groups, of which there may be more than one. These PPE groups may share access to the main memory **2202**. Furthermore the cell processor **2200** may include two or more groups SPEs. The SPE groups may also share access to the main memory **2202**. Such configurations are within the scope of the present invention.

. Each SPE **2206** is includes a synergistic processor unit (SPU) and its own local storage area LS. The local storage LS may include one or more separate areas of memory storage, each one associated with a specific SPU. Each SPU may be configured to only execute instructions (including data load and data store operations) from within its own associated local storage domain. In such a configuration, data transfers between the local storage LS and elsewhere in a system **2200** may be performed by issuing direct memory access (DMA) commands from the memory flow controller (MFC) to transfer data to or from the local storage domain (of the individual SPE). The SPUs are less complex computational units than the PPE **2204** in that they do not perform any system management functions. The SPU generally have a single instruction, multiple data (SIMD) capability and typically process data and initiate any required data transfers (subject to access properties set up by the PPE) in order to perform their allocated tasks. The purpose of the SPU is to enable applications that require a higher computational unit density and can effectively use the provided instruction set. A significant number of SPEs in a system managed by the PPE **2204** allow for cost-effective processing over a wide range of applications.

Each SPE **2206** may include a dedicated memory flow controller (MFC) that includes an associated memory management unit that can hold and process memory-protection and access permission information. The MFC provides the primary method for data transfer, protection, and synchronization between main storage of the cell processor and the local storage of an SPE. An MFC command describes the transfer to be performed. Commands for transferring data, are sometimes referred to as MFC direct memory access (DMA) commands (or MFC DMA commands).

Each MFC may support multiple DMA transfers at the same time and can maintain and process multiple MFC commands. Each MFC DMA data transfer command request may involve both a local storage address (LSA) and an effective address (EA). The local storage address may directly address only the local storage area of its associated SPE. The effective address may have a more general application, e.g., it may be able to reference main storage, including all the SPE local storage areas, if they are aliased into the real address space.

To facilitate communication between the SPEs **2206** and/or between the SPEs **2206** and the PPE **2204,** the SPEs **2206** and PPE **2204** may include signal notification registers that are tied to signaling events. The PPE **2204** and SPEs 2206 may be coupled by a star topology in which the PPE 2204 acts as a router to transmit messages to the SPEs **2206**. Alternatively, each SPE **2206** and the PPE **2204** may have a one-way signal notification register referred to as a mailbox. The mailbox can be used by an SPE **2206** to host operating system (OS) synchronization.

The cell processor **2200** may include an input/output (I/O) function **2208** through which the cell processor **2200** may interface with peripheral devices, such as a microphone array **2212** and optional image capture unit **2213**. In addition an Element Interconnect Bus **2210** may connect the various components listed above. Each SPE and the PPE can access the bus **2210** through a bus interface units BIU. The cell processor **2200** may also includes two controllers typically found in a processor: a Memory Interface Controller MIC that controls the flow of data between the bus **2210** and the main memory **2202**, and a Bus Interface Controller BIC, which controls the flow of data between the I/O **2208** and the bus **2210**. Although the requirements for the **MIC, BIC, BIUs** and bus **2210** may vary widely for different implementations, those of skill in the art will be familiar their functions and circuits for implementing them.

The cell processor **2200** may also include an internal interrupt controller **IIC.** The IIC component manages the priority of the interrupts presented to the PPE. The **IIC** allows interrupts from the other components the cell processor **2200** to be handled without using a main system interrupt controller. The **IIC** may be regarded as a second level controller. The main system interrupt controller may handle interrupts originating external to the cell processor.

In embodiments, certain computations, such as the fractional delays described above, may be performed in parallel using the PPE **2204** and/or one or more of the SPE **2206**. Each fractional delay calculation may be run as one or more separate tasks that different SPE **2206** may take as they become available.

Embodiments of the present invention may utilize arrays of between about 2 and about 8 microphones in an array characterized by a microphone spacing d between about 0.5 cm and about 2 cm. The microphones may have a dynamic range from about 120 Hz to about 16kHz. It is noted that the introduction of fractional delays in the output signal y(t) as described above allows for much greater resolution in the source separation than would otherwise be possible with a digital processor limited to applying discrete integer time delays to the output signal. It is the introduction of such fractional time delays that allows embodiments to achieve high resolution with such small microphone spacing and relatively inexpensive microphones. Embodiments may also be applied to ultrasonic position tracking by adding an ultrasonic emitter to the microphone array and tracking objects locations through analysis of the time delay of arrival of echoes of ultrasonic pulses from the emitter.

Methods and apparatus of the present invention may use microphone arrays that are small enough to be utilized in portable hand-held devices such as cell phones personal digital assistants, video/digital cameras, and the like. In certain embodiments of the present invention increasing the number of microphones in the array has no beneficial effect and in some cases fewer microphones may work better than more. Specifically a four-microphone array has been observed to work better than an eight-microphone array.

The methods and apparatus described herein may be used to enhance online gaming, e.g., by mixing remote partner's background sound with game character. A game console equipped with a microphone can continuously gather local background sound. A microphone array can selectively gathering sound based on predefined listening zone. For example, one can define $\pm$20° cone or other region of microphone focus. Anything outside this cone would be considered as background sound. Audio processing can robustly subtract background from foreground gamer's voice. Background sound can be mixed with the prerecorded voice of a game character that is currently speaking. This newly mixed sound signal is transferred to a remote partner, such as another game player over a network. Similarly, the same method may be applied to the remote side as well, so that the local player is presented with background audio from the remote partner. This can enhance the gaming reality experience comparing with real world. By recording-background sound, as said with a microphone, array, it is rather straight forward with the array's select listening ability with a single microphone. Voice Activity Detection (VAD) can be used to discriminate a player's voice from background. Once voice activity is detected, the previous silence signal may be used to replace the background.

Many video displays or audio degrade when the user is not in the "sweet spot." Since it is not known where the user is, the conventional approach is to widen the sweet spot as much as possible. In embodiments of the present invention, by contrast, with knowledge where the user is, e.g.,from video images or "acoustic radar", the display or audio parameters can be adjusted to move the sweet spot. The user's location may be determined, e.g., using head detection and tracking with an image capture unit, such as a digital camera. The LCD angle or other electronic parameters may be correspondingly changed to improve display quality dynamically. For audio, phase and amplitude of each channel could be adjusted to adjust sweet spot. Embodiments of the present invention can provide head or user position tracking via a video camera and/or microphone array input.

Embodiments of the present invention may be used as presented herein or in combination with other user input mechanisms and notwithstanding mechanisms that track or profile the angular direction or volume of sound and/or mechanisms that track the position of the object actively or passively, mechanisms using machine vision, combinations thereof and where the object tracked may include ancillary controls or buttons that manipulate feedback to the system and where such feedback may include but is not limited light emission from light sources, sound distortion means, or other suitable transmitters and modulators as well as controls, buttons, pressure pad, etc. that may influence the transmission or modulation of the same, encode state, and/or transmit commands from or to a device, including devices that are tracked by the system and whether such devices are part of, interacting with or influencing a system used in connection with embodiments of the present invention.

The foregoing descriptions of specific embodiments of the invention have been presented for purposes of illustration and description. They are not intended to be exhaustive or to limit the invention to the precise embodiments disclosed, and naturally many modifications and variations are possible in light of the above teaching. The embodiments were chosen and described in order to explain the principles of the invention and its practical application, to thereby enable others skilled in the art to best utilize the invention and various embodiments with various modifications as are suited to the particular use contemplated. Embodiments of the invention may be applied to a variety of other applications.

With the above embodiments in mind, it should be understood that the invention may employ various computer-implemented operations involving data stored in computer systems. These operations include operations requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

The above described invention may be practiced with other computer system configurations including hand-held devices, microprocessor systems, microprocessor-based or programmable consumer electronics, minicomputers, mainframe computers and the like. The invention may also be practiced in distributing computing environments where tasks are performed by remote processing devices that are linked through a communications network.

The invention can also be embodied as computer readable code on a computer readable medium. The computer readable medium is any data storage device that can store data which can be thereafter read by a computer system, including an electromagnetic wave carrier. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer system so that the computer readable code is stored and executed in a distributed fashion.

Although the foregoing invention has been described in some detail for purposes of clarity of understanding, it will be apparent that certain changes and modifications may be practiced within the scope of the appended claims. Any feature described herein, whether preferred or not, may be combined with any other feature described herein, whether preferred or not. Accordingly, the present embodiments are to be considered as illustrative and not restrictive, and the invention is not to be limited to the details given herein, but may be modified within the scope of the appended claims.

Further embodiments are defined in the following numbered clauses:

1. A method comprising:

detecting an initial listening zone;
capturing a captured sound through a microphone array;
identifying an initial sound based on the captured sound and the initial listening zone wherein the initial sound includes sounds within the initial listening zone;
adjusting the initial listening zone and forming the adjusted listening zone; and
identifying an adjusted sound based on the captured sound and the adjusted listening zone wherein the adjusted sound includes sounds within the adjusted listening zone.

2. The method according to clause 1 further comprising rejecting a portion of the captured sound to produce the initial sound.

3. The method according to clause 1 wherein the captured sound includes sound from outside the initial listening zone.

4. The method according to clause 1 wherein adjusting further comprises enlarging an area of the initial listening zone.

5. The method according to clause 1 wherein adjusting further comprises reducing an area of the initial listening zone.

6. The method according to clause 1 wherein the initial listening zone is represented by a set of filter coefficients.

7. The method according to clause 1 wherein the adjusted listening zone is represented by a set of filter coefficients.

8. The method according to clause 1 further comprising transmitting the adjusted sound.

9. The method according to clause 1 further comprising storing the adjusted sound.

10. The method according to clause 1 wherein the adjusted sound includes a sound originating within the adjusted listening zone and excludes sound from outside the adjuster listening zone.

11. The method according to clause 1 wherein adjusting further comprises enlarging the initial listening zone based on a sound detected outside the adjusted listening zone.

12. The method according to clause 11 wherein the adjusted listening zone includes a location of the sound detected outside the adjusted listening zone.

13. The method according to clause 1 wherein adjusting the initial listening zone is a based on a location of the captured sound and the initial listening zone.

14. The method according to clause 13 wherein the adjusted listening zone includes the location of the captured sound.

15. The method according to clause 1 wherein microphone array includes more than one microphone.

16. A method comprising:

detecting a sound field covered by a microphone array;
defining a plurality of listening zones wherein each listening zone represents a portion of the sound field;
designating a selected listening zone from the plurality of listening zones; and
storing the selected listening zone within a profile.

17. The method according to clause 16 wherein an area of each of the plurality of listening zones is represented by a set of filter coefficients.

18. The method according to clause 16 wherein an area representing the plurality of listening zones comprises the sound field covered by the microphone array.

19. A system, comprising:

an area detection module configured for detecting a listening zone wherein the listening zone is to be monitored for sounds by a microphone array;
a storage module configured for storing sounds from the listening zone; and an area adjustment module configured for adjusting the listening zone; and
a sound detection module configured for detecting sounds originating from the listening zone.

20. The system according to clause 19 further comprising an area profile module configured to store a parameter associated with the listening zone.

21. The system according to clause 19 wherein the parameter is a set of filter coefficients that indicate an area covered by the listening zone.

22. A computer-readable medium having computer executable instructions for performing a method comprising:

detecting an initial listening zone;
capturing a captured sound through a microphone array;
identifying an initial sound based on the captured sound and the initial listening zone wherein the initial sound includes sounds within the initial listening zone;
adjusting the initial listening zone and forming the adjusted listening zone; and identifying an adjusted sound based on the captured sound and the adjusted listening zone wherein the adjusted sound includes sounds within the adjusted listening zone.

23. A method comprising:

detecting an initial listening zone wherein the initial listening zone represents an initial area monitored for sounds;
detecting a view of a visual device;
comparing the view of the visual with the initial area of the initial listening zone; and
adjusting the initial listening zone and forming the adjusted listening zone having an adjusted area based on comparing the view and the initial area.

24. The method according to clause 23 further comprising capturing sounds emanating from the adjusted area.

25. The method according to clause 23 further comprising capturing sounds emanating from the initial area.

26. The method according to clause 23 wherein adjusting further comprises enlarging the initial area of the initial listening zone.

27. The method according to clause 23 wherein adjusting further comprises reducing the initial area of the initial listening zone.

28. The method according to clause 23 wherein adjusting further comprises shifting a location of the initial area of the initial listening zone.

29. The method according to clause 23 wherein the initial listening zone is represented by a set of filter coefficients.

30. The method according to clause 23 wherein the adjusted listening zone is represented by a set of filter coefficients.

31. The method according to clause 23 further comprising capturing an adjusted sound from the adjusted listening zone via a microphone array.

32. The method according to clause 31 further comprising transmitting the adjusted sound.

33. The method according to clause 31 further comprising storing the adjusted sound.

34. The method according to clause 31 wherein microphone array includes more than one microphone.

35. The method according to clause 23 wherein the visual device is a still camera.

36. The method according to clause 23 wherein the visual device is a still camera.

37. The method according to clause 23 wherein the initial listening zone is represented by a set of filter coefficients.

38. The method according to clause 23 wherein the adjusted listening zone is represented by a set of filter coefficients.

39. A method comprising:

detecting an image from a visual device;
forming a listening zone configured to detect sounds emanating from an area associated with the image;
capturing sounds emanating from the listening zone; and

dynamically adjusting the listening zone based on the image.

40. The method according to clause 39 wherein dynamically adjusting further comprises enlarging the listening zone.

41. The method according to clause 39 wherein dynamically adjusting further comprises reducing the listening zone.

42. The method according to clause 39 wherein dynamically adjusting further comprises moving the listening.zone to a different location.

43. The method according to clause 39 wherein the image is one of a plurality of images that form a video segment.

44. A system, comprising:

an area detection module configured for detecting a listening zone wherein the listening zone is to be monitored for sounds;
a view detection module configured for detecting a view monitored by a visual device;
an area adjustment module configured for adjusting the listening zone based on the view; and
a sound detection module configured for detecting sounds emanating from the listening zone.

45. The system according to clause 44 wherein an area associated with the listening zone is described by a set of filter coefficients.

46. A method comprising:

detecting an initial listening zone wherein the initial listening zone represents an initial area monitored for sounds;
detecting an initial sound within the initial listening zone; and
adjusting the initial listening zone and forming the adjusted listening zone having an adjusted area based wherein the initial sound emanates from within the adjusted listening zone.

47. The method according to clause 46 further comprising capturing sounds emanating from the adjusted area.

48.The method according to clause 46 further comprising capturing sounds emanating from the initial area.

49. The method according to clause 46 wherein adjusting further comprises narrowing the initial area of the initial listening zone.

50. The method according to clause 46 further comprising detecting an initial sound level of the initial sound.

51. The method according to clause 50 further comprising comparing the initial sound level with a threshold level.

52. The method according to clause 51 wherein the threshold level is predetermined to decrease detection of background sounds.

53. The method according to clause 51 wherein adjusting the initial listening zone occurs when the initial sound level exceeds the threshold level.

54. The method according to clause 46 wherein the initial listening zone is represented by a set of filter coefficients.

55. The method according to clause 46 wherein the adjusted listening zone is represented by a set of filter coefficients.

56. The method according to clause 46 further comprising capturing an adjusted sound from the adjusted listening zone via a microphone array.

57. The method according to clause 56 further comprising transmitting the adjusted sound.

58. The method according to clause 56 further comprising storing the adjusted sound.

59. The method according to clause 56 wherein microphone array includes more than one microphone.

60. The method according to clause 56 further comprising detecting an adjusted sound level of the adjusted sound.

61. The method according to clause 60 further comprising comparing the adjusted sound level with a threshold level.

62. The method according to clause 61 further comprising returning the adjusted listening zone to the initial listening zone when the threshold level exceeds the adjusted sound level.

63. The method according to clause 46 wherein the initial listening zone is represented by a set of filter coefficients.

64. The method according to clause 46 wherein the adjusted listening zone is represented by a set of filter coefficients.

65. A system, comprising:

an area detection module- configured for detecting an initial listening zone
wherein the initial listening zone is to be monitored for sounds;
a sound detection module configured for detecting a sound emanating from the initial listening zone and for detecting a location of the sound; and
an area adjustment module configured for adjusting the initial listening zone based on the location of the sound and forming an adjusted listening zone wherein the adjusted listening zone includes the location of the sound.

66. The system according to clause 65 wherein the adjusted listening zone is described by a set of filter coefficients.

67. The system according to clause 65 wherein the sound detection module is configured to detect a sound level of the sound emanating from the initial listening zone.

68. The system according to clause 67 wherein the area adjustment module is configured to adjust the initial listening zone based on the sound level exceeding a threshold level.

69. The system according to clause 65 further comprising a microphone or microphone array coupled to the sound detection module.

70. The system of clause 69 wherein the microphone array includes two or more microphones arranged in a one-dimensional array.

71. The system of clause69 wherein the microphone array includes three or more microphones arranged in a two-dimensional array.

72. The system of clause 69 wherein the microphone array includes four or more microphones arranged in a three-dimensional array.

73. A computer-readable medium having computer executable instructions for performing a method comprising:

   detecting an initial listening zone wherein the initial listening zone represents an initial area monitored for sounds;
   detecting an initial sound within the initial listening zone; and
   adjusting the initial listening zone and forming the adjusted listening zone having an adjusted area based wherein the initial sound emanates from within the adjusted listening zone.

74. A method for targeted sound detection using a microphone array having two or more microphones $M_0...M_M$, each microphone being coupled-to a plurality of filters, the filters being configured to filter input signals corresponding to sounds detected by the microphones. thereby generating a filtered output, the method comprising:

   pre-calibrating a one or more sets of filter parameters for the plurality of filters to determine one or more corresponding pre-calibrated listening zones, wherein each set of filter parameters is selected to detect portions of the input signals corresponding to sounds originating within a given listening zone and filter out sounds originating outside the given listening sector; and
   selecting a particular pre-calibrated listening zone at a runtime by applying to the plurality of filters a set of filter coefficients corresponding to the particular pre-calibrated listening zone,
   whereby the microphone array may detect sounds originating within the particular listening zone and filters out sounds originating outside the particular listening zone.

75. The method of clause 74 wherein pre-calibrating a plurality of sets of the filter parameters includes using blind source separation to determine sets of finite impulse response (FIR) filter coefficients.

76. The method of clause 74 wherein the one or more listening zones includes a listening zone that corresponds to a field of view of an image capture unit, whereby the microphone array may detect sounds originating within the field of view of the image capture unit and filter out sounds originating outside the field of view of the image capture unit.

77. The method of clause 74 wherein the one or more listening zones include a plurality of different listening zones.

78. The method of clause 77 wherein selecting a particular pre-calibrated listening zone at a runtime includes determining a value of an attenuation of the input signals for one or more zone and selecting a sector for which the attenuation is closest to an optimum value.

79. The method of clause 77 wherein the plurality of pre-calibrated listening zones includes about 18 sectors, wherein each sector has an angular width of about 20 degrees, whereby the plurality of pre-calibrated sectors encompasses about 360 degrees surrounding the microphone array.

80. The method of clause 74 wherein selecting a particular pre-calibrated listening zone at a runtime includes selecting a pre-calibrated listening zone that contains a source of sound.

81. The method of clause 74 wherein selecting a particular pre-calibrated listening zone at a runtime includes selecting an initial zone of a plurality of listening zones; determining whether a source of sound lies within the initial zone or on a particular side of the initial sector; and, if the source of sound does not lie within the initial zone, selecting a different listening zone on the particular side of the initial zone, wherein the different listening zone is characterized by an attenuation of the input signals that is closest to an optimum value.

82. The method of clause 81 wherein determining whether a source of sound lies within the initial zone or on a particular side of the initial zone includes calculating from the input signals and the output signal an attenuation of the input signals and comparing the attenuation to the optimum value.

83. The method of clause 74 wherein selecting a particular pre-calibrated listening zone at a runtime includes determining whether, for a given listening zone, an attenuation of the input signals is below a threshold.

84. The method of clause 74 wherein selecting a particular pre-calibrated listening zone at a runtime includes selecting a pre-calibrated listening sector that contains a source of sound, the method further comprising robotically pointing an image capture unit toward the pre-calibrated listening zone that contains the source of sound.

85. The method of clause 74 wherein the one or more pre-calibrated listening zones include a plurality of different pre-calibrated listening zones, the method further comprising:

detecting a sound with the microphone array;
identifying a particular pre-calibrated listening zone containing a source of the sound;
characterizing the sound or the source of the sound; and
emphasizing or filtering out the sound depending on how the sound is characterized.

86. The method of clause 85 wherein emphasizing or filtering out the sound depending on how the sound is characterized includes filtering out the sound if the sound or the source is associated with background noise.

87. The method of clause 85 wherein characterizing the sound or the source of the sound includes:

determining a frequency distribution for the sound; and
comparing the frequency distribution against one or more acoustic models for known sounds or sources of sounds.

88. The method of clause 85 wherein characterizing the sound or the source of the sound includes analyzing the sound to determine whether or not the sound or the source of the sound has one or more predetermined characteristics.

89. The method of clause 88 further comprising generating at least one control signal may be generated for the purpose of controlling at least one aspect of an electronic device if it is determined that the sound does have one or more predetermined characteristics.

90. The method of clause 89 wherein the electronic device is a video game controller and the control signal causes the video game controller to execute game instructions in response to sounds from the source of sound.

91. The method of clause 74 wherein emphasizing or filtering out the sound depending on how the sound is characterized includes:

magnifying a noise disturbance of the audio signal relative to a remaining component of the audio signal;
decreasing a sampling rate of the audio signal;
applying an even order derivative to the audio signal having the decreased sampling rate to define a detection signal; and
adjusting the noise disturbance of the audio signal according to a statistical average of the detection signal.

92. The method of clause74 wherein the electronic device is a baby monitor.

93. The method of clause 74 wherein the electronic device is a video game unit having a joystick controller, the method further comprising generating at least one control signal for the purpose of controlling at least one aspect of the video game unit if it is determined that the sound or the source of sound has one or more predetermined characteristics; and generating one or more additional control signals with the joystick controller.

94. The method of clause 93 wherein generating one or more additional control signals with the joystick controller includes generating an optical signal with one or more light sources located on the joystick controller and receiving the optical signal with an image capture unit.

95. The method of clause 94 wherein receiving an optical signal includes capturing one or more images containing one or more light sources and analyzing the one or more images to determine a position or an orientation of the joystick controller-and/or decode a telemetry signal from the joystick controller.

96. The method of clause 93, wherein generating one or more additional control signals with the joystick controller includes generating a position and/or orientation signal with an inertial sensor located on the joystick controller.

97. The method of clause 96, further comprising compensating for a drift in a position and/or orientation determined from the position and/or orientation signal.

98. The method of clause 97 wherein compensating for a drift includes setting a value of an initial position to a value of a current calculated position determined from the position and/or orientation signal.

99. The method of clause 97 wherein compensating for a drift includes capturing an image of the joystick controller with an image capture unit, analyzing the image to determine a position of the joystick controller and setting a current value of the position of the joystick controller to the position of the joystick controller determined from analyzing the image.

100. The method of clause97, further comprising compensating for spurious data in a signal from the inertial sensor.

101. A targeted sound detection apparatus
a microphone array having two or more microphones $M_0...M_M$;
a plurality of filters coupled to each microphone, the filters being configured to filter input signals corresponding to sounds detected by the microphones and generate a filtered output;

a processor coupled to the microphone array and the plurality of filters;

a memory coupled to the processor;

one or more sets of the filter parameters embodied in the memory, corresponding to one or more pre-calibrated listening zones, wherein each set of filter parameters is selected to detect portions of the input signals corresponding to sounds originating within a given listening zone and filters out sounds originating outside the given listening zone; the memory containing a set of processor executable instructions that, when executed, cause the apparatus to select a particular pre-calibrated listening zone at a runtime by applying to the plurality of filters a set of filter parameters corresponding to the particular pre-calibrated listening zone,

whereby the apparatus may detect sounds originating within the particular pre-calibrated listening zone and filter out sounds originating outside the particular pre-calibrated listening zone.

102. The apparatus of clause 101 wherein the one or more pre-calibrated listening zone include a plurality of different pre-calibrated listening zones.

103. The apparatus of clause101 1 wherein the plurality of pre-calibrated listening zones includes about 18 sectors, wherein each sector has an angular width of about 20 degrees, whereby the plurality of pre-calibrated sectors encompasses about 360 degrees surrounding the microphone array.

104. The apparatus of clause101 wherein the set of processor executable instructions includes one or more instructions which, when executed, cause the apparatus to select a pre-calibrated listening zone.that contains a source of sound.

105. The apparatus of clause101 1 wherein the set of processor executable instructions includes one or more instructions which, when executed, cause the apparatus to determine whether a source of sound lies within an initial listening zone or on a particular side of the initial listening zone; and, if the source of sound does not lie within the initial listening zone, select a different listening zone on the particular side of the initial listening zone, wherein the different listening zone is characterized by an attenuation of the input signals that is closest to an optimum value.

106. The apparatus of clause 105, wherein the one or more instructions which, when executed, cause the apparatus to determine whether a source of sound lies within the initial listening zone or on a particular side of the initial listening zone include one or more instructions which, when executed calculate from the input signals and the output signal an attenuation of the input signals and compare the attenuation to the optimum value.

107. The apparatus of clause 101 wherein the set of processor executable instructions includes one or more instructions which, when executed, cause the apparatus to determine a value of an attenuation of the input signals for one or more sectors and select a listening zone for which the attenuation is closest to an optimum value.

108.The apparatus of clause 101 wherein the set of processor executable instructions includes one or more instructions which, when executed, cause the apparatus to determine whether, for a given listening zone, an attenuation of the input signals is below a threshold.

109. The apparatus of clause 101, further comprising an image capture unit coupled to the processor, wherein the one or more listening sectors includes a listening zone that corresponds to a field of view of the image capture unit.

110. The apparatus of clause 101, further comprising a image capture unit coupled to the processor, and one or more pointing actuators coupled to the processor, the pointing actuators being adapted to point the image capture unit in a viewing direction in response to signals generated by the processor, the memory containing a set of processor executable instructions that, when executed, cause the actuators to point the image capture unit in a direction of the particular pre-calibrated listening zone.

111. The apparatus of clause 101 wherein the one or more pre-calibrated listening zones include a plurality of different listening zones, wherein the set of processor executable instructions includes one or more instructions which, when executed, cause the apparatus to: detect a sound with the microphone array; identify a particular listening zone containing a source of the sound;

characterize the sound or the source of the sound; and

emphasize or filter out the sound depending on how the sound is characterized.

112. The apparatus of clause 111 wherein the set of instructions includes instructions which, when executed, cause the apparatus to filter out the sound if the sound or the source is associated with background noise.

113. The apparatus of clause 111 wherein the instructions that cause the apparatus to characterize the sound or the source of the sound include instructions which, when executed, cause the apparatus to:

determine a frequency distribution for the sound; and
compare the frequency distribution against one or more acoustic models for known sounds or
sources of sounds.

114. The apparatus of clause 113 wherein the one or more acoustic models are stored in the memory.

115. The apparatus of clause 111 wherein the instructions that cause the apparatus to characterize the sound or the source of the sound include instructions which, when executed, cause the apparatus to analyze the sound to determine whether or not it has one or more predetermined characteristics.

116. The apparatus of clause 115 wherein the set of processor executable instructions further include one or more instructions which, when executed, cause the apparatus to generate at least one control signal may be generated for the purpose of controlling at least one aspect of the apparatus if it is determined that the sound does have one or more predetermined characteristics.

117. The apparatus of clause 116 wherein the apparatus is a video game controller and the control signal causes the video game controller to execute game instructions in response to sounds from the source of sound.

118. The apparatus of clause 101 wherein the apparatus is a baby monitor.

119. The apparatus of clause 101, further comprising a joystick controller coupled to the processor.

120. The apparatus of clause 119 wherein the joystick controller includes an inertial sensor coupled to the processor.

121. The apparatus of clause 120 wherein the inertial sensor includes an accelerometer or gyroscope.

122. The apparatus of clause 120 wherein the processor executable instructions include one or more instructions which, when executed compensate for a drift in a position and/or orientation determined from a position and/or orientation signal from the inertial sensor.

123. The apparatus of clause 122 wherein compensating for a drift includes setting a value of an initial position to a value of a current calculated position determined from the position and/or orientation signal.

124. The apparatus of clause 122 wherein compensating for a drift includes capturing an image of the joystick controller with an image capture unit, analyzing the image to determine a position of the joystick controller and setting a current value of the position of the joystick controller to the position of the joystick controller determined from analyzing the image.

125. The apparatus of clause 119 wherein the joystick controller includes one or more light sources, the apparatus further comprising an image capture unit, wherein the processor executable instructions including one or more instructions which, when executed cause the image capture unit to monitor a field of view in front of the image capture unit, identify the light source within the field of view; detect a change in light emitted from the light source; and in response to detecting the change, triggering an input command to the processor.

126. The apparatus of clause 119 wherein the joystick controller includes one or more light sources, the apparatus further comprising an image capture unit, wherein the processor executable instructions including one or more instructions which, when executed cause the image capture unit to capture one or more images containing the light sources and analyze the image to determine a position or an orientation of the joystick controller and/or decode a telemetry signal from the joystick controller.

127. The apparatus of clause 126 wherein the light sources include two or more light sources in a linear array.

128. The apparatus of clause 126 wherein the light sources include two or more light sources in a linear array.

129. The apparatus of clause 126 wherein the light sources are disposed on two or more different sides of the joystick controller to facilitate viewing of the light sources by the image capture unit.

130. The apparatus of clause 126, further comprising an inertial sensor mounted to the joystick controller, wherein signals from the inertial sensor and signals generated from the image capture unit from tracking the one or more light sources are used as inputs to a game system.

131. The apparatus of clause 126, further comprising an inertial sensor mounted to the joystick controller, wherein a signal from the inertial sensor provides part of a tracking information input and signals generated from the image capture unit from tracking the one or more light sources provides another part of the tracking information input.

132. The apparatus of clause 120 wherein the processor executable instructions include one or more instructions which, when executed compensate for spurious data in a signal from the inertial sensor.

133. A computer-readable medium having embodied therein computer executable instructions for performing a method for targeted sound detection using a microphone array having two or more microphones $M_0...M_M$, each microphone being coupled to a plurality of filters, the filters being configured to filter input signals corresponding to sounds detected by the microphones thereby generating a filtered output, the method comprising: pre-calibrating a one or more sets of filter parameters for the plurality of filters to determine one or more corresponding pre-calibrated listening zones, wherein each set of filter parameters is selected to detect portions of the input signals corresponding to sounds originating within a given listening zone and filter out sounds originating outside the given listening sector; and

selecting a particular pre-calibrated listening zone at a runtime by applying to the plurality of filters a set of filter coefficients corresponding to the particular pre-calibrated listening zone, whereby the microphone array may detect sounds originating within the particular listening zone and filters out sounds originating outside the particular listening zone.

134. An apparatus for capturing sound during interactivity with a computer program, comprising:

a sound capture unit, the sound capture unit being configured to identify one or more sound sources, the sound capture unit generating data capable of being analyzed to determine a listening zone at which to process sound to the substantial exclusion of sounds outside of the zone of focus, sound that is captured and processed for the zone of focus is used for interactivity with the computer program.

135. The apparatus of clause134, wherein the sound capture unit includes an array of microphones, the array of microphones being configured for receiving sound from the one or more sound sources, the sounds of the one or more sound sources defining sound paths to each of the microphones.

136. The apparatus of clause 135, wherein the sound paths include particular delays that enable calculation of direction of each of the one or more sound sources relative to the apparatus for capturing image and sound.

137. The apparatus of clause135 wherein a spacing between microphones in the array is between about 0.5 cm and about 2 cm.

138. The apparatus of clause 134, further comprising:

an area detection module configured for detecting a listening zone wherein the listening zone is to be monitored for sounds by a microphone array;
a storage module configured for storing sounds from the listening zone; and
an area adjustment module configured for adjusting the listening zone; and
a sound detection module configured for detecting sounds originating from the listening zone..

139. The apparatus of clause 134, further comprising:

an area detection module configured for detecting a listening zone wherein the listening zone is to be monitored for sounds;
a view detection module configured for detecting a view monitored by a visual device;
an area adjustment module configured for adjusting the listening zone based on the view; and
a sound detection module configured for detecting sounds emanating from the listening zone.

140. The apparatus of clause 134, further comprising:

an area detection module configured for detecting an initial listening zone
wherein the initial listening zone is to be monitored for sounds;
a sound detection module configured for detecting a sound emanating from the initial listening zone and for detecting a location of the sound; and
an area adjustment module configured for adjusting the initial listening zone based on the location of the sound and forming an adjusted listening zone wherein the adjusted listening zone includes the location of the sound.

141. The apparatus of clause 134, wherein the sound capture unit includes a microphone array having two or more microphones; and
a plurality of filters coupled to each microphone, the filters being configured to filter input signals corresponding to sounds detected by the microphones and generate a filtered output.

142. The apparatus of clause141, further comprising:

a processor coupled to the microphone array and the plurality of filters;
a memory coupled to the processor; and
one or more sets of the filter parameters embodied in the memory, corresponding to one or more pre-calibrated listening zones, wherein each set of filter parameters is selected to detect portions, of the input signals corresponding to sounds originating within a given listening zone and filters out sounds originating outside the given listening zone;
the memory containing a set-of-processor executable instructions that, when-executed, cause the apparatus to select a particular pre-calibrated listening zone at a runtime by applying to the plurality of filters a set of filter parameters corresponding to the particular pre-calibrated listening zone,
whereby the apparatus may detect sounds originating within the particular pre-calibrated listening zone and filter out sounds originating outside the particular pre-calibrated listening zone.

143. The apparatus of clause 134, wherein the computer program is a game program.

144. A method for selective sound source listening during interactivity with a computer program, comprising:

receiving input from one or more sound sources at two or more sound source capture microphones;

identifying a direction for each of the received inputs of each of the one or more sound sources; and
filtering out sound sources that are not in an identified direction of a listening zone, the listening zone supplying the sound source for the interactivity with the computer program.

145. The method of clause 144 wherein identifying a direction and filtering out sound sources includes:

detecting an initial listening zone;
capturing a captured sound through a microphone array;
identifying an initial sound based on the captured sound and the initial listening zone wherein the initial sound includes sounds within the initial listening zone;
adjusting the initial listening zone and forming the adjusted listening zone; and
identifying an adjusted sound based on the captured sound and the adjusted listening zone wherein the adjusted sound includes sounds within the adjusted listening zone.

146. The method of clause 144, further comprising, analyzing the input received by the two or more microphones to determine whether or not the input has one or more predetermined characteristics.
147. The method of clause 146, further comprising, if it is determined that the sound does have one or more predetermined characteristics, generating at least one control signal configured to control at least one aspect of the computer program.
148. The method of clause 144 wherein identifying a direction and filtering out sound sources includes:

detecting an initial listening zone wherein the initial listening zone represents an initial area monitored for sounds;
detecting a view of a visual device;
comparing the view of the visual with the initial area of the initial listening zone; and
adjusting the initial listening zone and forming the adjusted listening zone having an adjusted area based on comparing the view and the initial area.

149. The method of clause 144 wherein identifying a direction and filtering out sound sources includes:

detecting an image from a visual device;
forming a listening zone configured to detect sounds emanating from an area associated with the image;
capturing sounds emanating from the listening zone; and dynamically adjusting the listening zone based on the image.

150. The method of clause 144 wherein the listening zone is represented by a set of filter coefficients.
151. The method of clause 150 wherein the set filter coefficients corresponds to a pre-calibrated listening zone.
152. A method for controlling actions in a video game unit having a joystick controller, the method comprising:

generating an inertial signal and/or an optical signal with the joystick controller; and tracking a position and/or orientation of the joystick controller using the inertial signal and/or optical signal.

153. The method of clause 152, wherein generating the inertial and/or optical signal includes generating an inertial signal with an accelerometer or gyroscope mounted to the joystick controller.
154. The method of clause 152 wherein generating the inertial and/or optical signal includes generating an optical signal with one or more light sources mounted to the joystick controller.
155. The method of clause 154 wherein tracking a position and/or orientation of the joystick controller includes capturing one or more images including the optical signal and tracking the motion of the light sources from the one or more images.
156. The method of clause 152, wherein generating the inertial and/or optical signal includes generating an inertial signal with an accelerometer or gyroscope mounted to the joystick controller and generating an optical signal with one or more light sources mounted to the joystick controller.
157. The method of clause 156 wherein both the inertial signal and the optical signal are used as inputs to the game unit.
158. The method of clause 157 wherein the inertial signal provides part of a tracking information input to the game unit and the optical signal provides another part of the tracking information.
159. The method of clause 152, further comprising compensating for spurious data in the inertial signal.
160. The method of clause 152 further encoding a telemetry signal from the optical signal, decoding the telemetry signal from the optical signal and executing a game command in response to the decoded telemetry signal.

161. An apparatus for controlling actions in a video game, comprising
a processor;
a memory coupled to the processor
a joystick controller coupled to the processor, the joystick controller having an inertial sensor and a light source; and
one or more processor executable instructions stored in the memory, which, when executed by the processor cause the apparatus to track a position and/or orientation of the joystick controller using an inertial signal from the inertial sensor and/or an optical signal from the light source.

162. The apparatus of clause65, wherein the inertial sensor is an accelerometer or gyroscope mounted to the joystick controller.

163. The apparatus of clause 65 wherein light source includes one or more light-emitting diodes mounted to the joystick controller.

164. The apparatus of claim 67, further comprising an image capture unit coupled to the processor, wherein the one or more processor executable instructions including one or more instructions which, when executed cause the image capture unit to capture one or more images including the optical signal and one or more instructions which, when executed track the motion of the light sources from the one or more images.

165. The apparatus of clause 65, wherein the inertial sensor is an accelerometer mounted to the joystick controller and wherein light source includes one or more light-emitting diodes mounted to the joystick controller.

166. The apparatus of clause 69 wherein both an inertial signal from the accelerometer and an optical signal from the light-emitting diodes are used as inputs to the video game unit.

167. The apparatus of clause 70 wherein the inertial signal provides part of a tracking information input to the game unit and the optical signal provides another part of the tracking information.

168. The apparatus of clause 71 wherein the processor executable instructions include one or more instructions which, when executed compensate for spurious data in the inertial signal.

169. A method for controlling actions in a video game unit having a joystick controller, the method comprising:
generating one or more optical signals with an array of light sources mounted to the joystick controller; and tracking a position and/or orientation of the joystick controller; and/or encoding one or more telemetry signals into the one or more optical signals; and execute one or more game instructions in response to the position and/or orientation of the joystick controller and/or in response to telemetry signals encoded in the one or more optical signals.

170. The method of clause 169 wherein the light sources include two or more light sources in a linear array.

171. The method of clause 169 wherein the light sources include rectangular or arcuate configuration of a plurality of light sources.

172. The method of clause 169 wherein the light sources are disposed on two or more different sides.of the joystick controller to facilitate viewing of the light sources by the image capture unit.

173. An apparatus for controlling actions in a video game, comprising a processor;
a memory coupled to the processor
a joystick controller coupled to the processor, the joystick controller having an array of light sources mounted to the joystick controller; and
one or more processor executable instructions stored in the memory, which, when executed by the processor cause the apparatus to generate one or more optical signals with the array of light sources; and track a position and/or orientation of the joystick controller; and/or encode one or more telemetry signals into the one or more optical signals; and execute one or more game instructions in response to the position and/or orientation of the joystick controller and/or in response to telemetry signals encoded in the one or more optical signals.

174.The apparatus of clause 173 wherein the array of light sources include two or more light sources in a linear array.

175. The apparatus of clause 173 wherein the array of light sources include a rectangular or arcuate configuration of a plurality of light sources.

176. The apparatus of clause173 wherein the light sources are disposed on two or more different sides of the joystick controller to facilitate viewing of the light sources by the image capture unit.

177. A controller for use with a video game unit, the controller comprising: one or more light sources mounted to the controller adapted to provide optical signals to video game unit to facilitate tracking of the light sources with an image capture unit and/or to provide an input channel to the game unit via the optical signals;
an inertial sensor mounted to the controller, the inertial sensor being configured to provide signals relating to a position or orientation of the joystick controller to the game unit; and a speaker mounted to the controller, the speaker being configured to produce an audio signal to the game unit for tracking the controller and/or providing an input channel to the video game unit via the audio signal.

**Claims**

1. A method for targeted sound detection using a microphone array having two or more microphones $M_0...M_M$, each microphone being coupled to a plurality of filters, the filters being configured to filter input signals corresponding to sounds detected by the microphones thereby generating a filtered output, the method comprising:

   pre-calibrating (2012) a plurality of sets of filter parameters for the plurality of filters to determine a plurality of corresponding pre-calibrated different listening zones, wherein each set of filter parameters is selected to detect portions of the input signals corresponding to sounds originating within a given listening zone and filter out sounds originating outside the given listening zone; and
   selecting (2014) a particular pre-calibrated listening zone at a runtime by applying to the plurality of filters a set of filter parameters corresponding to the particular pre-calibrated listening zone,
   whereby the microphone array may detect sounds originating within the particular listening zone and filters out sounds originating outside the particular listening zone.

2. The method of claim 1 wherein pre-calibrating a plurality of sets of the filter parameters includes using blind source separation to determine sets of finite impulse response (FIR) filter coefficients.

3. The method of claim 1 wherein the plurality of listening zones includes a listening zone that corresponds to a field of view of an image capture unit, whereby the microphone array may detect sounds originating within the field of view of the image capture unit and filter out sounds originating outside the field of view of the image capture unit.

4. The method of claim 1 wherein selecting a particular pre-calibrated listening zone at a runtime includes selecting a pre-calibrated listening zone that contains a source of sound.

5. The method of claim 1 wherein selecting a particular pre-calibrated listening zone at a runtime includes:

   selecting an initial zone of the plurality of listening zones;
   determining whether a source of sound lies within the initial zone or on a particular side of the initial sector; and,
   if the source of sound does not lie within the initial zone, selecting a different listening zone on the particular side of the initial zone, wherein the different listening zone is **characterized by** an attenuation of the input signals that is closest to an optimum value.

6. The method of claim 1, the method further comprising:

   detecting a sound with the microphone array;
   identifying a particular pre-calibrated listening zone containing a source of the sound; characterizing the sound or the source of the sound; and
   emphasizing or filtering out the sound depending on how the sound is characterized.

7. The method of claim 6 wherein emphasizing or filtering out the sound depending on how the sound is characterized includes:

   magnifying a noise disturbance of the audio signal relative to a remaining component of the audio signal;
   decreasing a sampling rate of the audio signal;
   applying an even order derivative to the audio signal having the decreased sampling rate to define a detection signal; and
   adjusting the noise disturbance of the audio signal according to a statistical average of the detection signal.

8. The method of claim 1 wherein the electronic device is a video game unit having a joystick controller, the method further comprising:

   generating at least one control signal for the purpose of controlling at least one aspect of the video game unit if it is determined that the sound or the source of sound has one or more predetermined characteristics; and
   generating one or more additional control signals with the joystick controller.

9. The method according to claim 1 further comprising:

storing the selected listening zone within a profile.

10. A computer-readable medium having embodied therein computer executable instructions for performing the method of any preceding claim.

11. A targeted sound detection apparatus (2050) comprising:

a microphone array (2002) having two or more microphones ($M_0$ ... $M_M$);
a plurality of filters ($F_0$...$F_3$) coupled to each microphone, the filters being configured to filter input signals corresponding to sounds detected by the microphones and generate a filtered output;
a processor (2057) coupled to the microphone array and the plurality of filters;
a memory (2058) coupled to the processor;
a plurality of sets of filter parameters embodied in the memory, corresponding to a plurality of pre-calibrated different listening zones ($S_0$...$S_8$), wherein each set of filter parameters is selected to detect portions of the input signals corresponding to sounds originating within a given listening zone and filters out sounds originating outside the given listening zone;
the memory containing a set of processor executable instructions that, when executed, cause the apparatus to select a particular pre-calibrated listening zone at a runtime by applying to the plurality of filters a set of filter parameters corresponding to the particular pre-calibrated listening zone,
whereby the apparatus may detect sounds originating within the particular pre-calibrated listening zone and filter out sounds originating outside the particular pre-calibrated listening zone.

12. The apparatus of claim 11, further comprising a image capture unit coupled to the processor, and one or more pointing actuators coupled to the processor, the pointing actuators being adapted to point the image capture unit in a viewing direction in response to signals generated by the processor, the memory containing a set of processor executable instructions that, when executed, cause the actuators to point the image capture unit in a direction of the particular pre-calibrated listening zone.

13. The apparatus of claim 11, further comprising a joystick controller coupled to the processor, wherein the joystick controller includes an inertial sensor coupled to the processor.

14. The apparatus of claim 13 wherein the processor executable instructions include one or more instructions which, when executed compensate for a drift in a position and/or orientation determined from a position and/or orientation signal from the inertial sensor.

**Patentansprüche**

1. Verfahren zur gezielten Klangdetektion unter Verwendung einer Mikrofongruppe mit zwei oder mehr Mikrofonen $M_0$...$M_M$, wobei jedes Mikrofon mit einer Vielzahl von Filtern gekoppelt ist, wobei die Filter dafür ausgelegt sind, Eingangssignale zu filtern, die durch die Mikrofone detektierten Klängen entsprechen, um dadurch eine gefilterte Ausgabe zu erzeugen, wobei das Verfahren Folgendes umfasst:

Vorkalibrieren (2012) einer Vielzahl von Mengen von Filterparametern für die Vielzahl von Filtern, um eine Vielzahl entsprechender vorkalibrierter verschiedener Zuhörzonen zu bestimmen, wobei jede Menge von Filterparametern dafür ausgewählt wird, Teile der Eingangssignale zu detektieren, die Klängen entsprechen, die aus einer gegebenen Zuhörzone stammen, und Klänge herauszufiltern, die von außerhalb der gegebenen Zuhörzone stammen; und
Auswählen (2014) einer bestimmten vorkalibrierten Zuhörzone zur Laufzeit durch Anwenden einer Menge von Filterparametern, die der bestimmten vorkalibrierten Zuhörzone entsprechen, auf die Vielzahl von Filtern, wodurch die Mikrofongruppe Klänge detektieren kann, die aus der bestimmten Zuhörzone stammen, und Klänge, die von außerhalb der bestimmten Zuhörzone stammen, herausfiltert.

2. Verfahren nach Anspruch 1, wobei das Vorkalibrieren einer Vielzahl von Mengen der Filterparameter die Verwendung von Blind-Quellentrennung umfasst, um Mengen von Finite-Impulse-Response- bzw. FIR-Filterkoeffizienten zu bestimmen.

3. Verfahren nach Anspruch 1, wobei die Vielzahl von Zuhörzonen eine Zuhörzone umfasst, die einem Sichtfeld einer Bilderfassungseinheit entspricht, wodurch die Mikrofongruppe Klänge, die aus dem Sichtfeld der Bilderfassungseinheit stammen, detektieren und Klänge, die von außerhalb des Sichtfelds der Bilderfassungseinheit stammen, herausfiltern kann.

**4.** Verfahren nach Anspruch 1, wobei das Auswählen einer bestimmten vorkalibrierten Zuhörzone zur Laufzeit das Auswählen einer vorkalibrierten Zuhörzone, die eine Klangquelle enthält, umfasst.

**5.** Verfahren nach Anspruch 1, wobei das Auswählen einer bestimmten vorkalibrierten Zuhörzone zur Laufzeit Folgendes umfasst:

Auswählen einer anfänglichen Zone der Vielzahl von Zuhörzonen;
Bestimmen, ob eine Klangquelle in der anfänglichen Zone oder auf einer bestimmten Seite des anfänglichen Sektors liegt; und
wenn die Klangquelle nicht in der anfänglichen Zone liegt, Auswählen einer anderen Zuhörzone auf der bestimmten Seite der anfänglichen Zone, wobei die andere Zuhörzone durch eine Dämpfung der Eingangssignale gekennzeichnet ist, die einem optimalen Wert am nächsten kommt.

**6.** Verfahren nach Anspruch 1, wobei das Verfahren ferner Folgendes umfasst:

Detektieren eines Klangs mit der Mikrofongruppe;
Identifizieren einer bestimmten vorkalibrierten Zuhörzone, die eine Quelle des Klangs enthält; wodurch der Klang oder die Quelle des Klangs charakterisiert werden; und
Betonen oder Herausfiltern des Klangs abhängig davon, wie der Klang charakterisiert wird.

**7.** Verfahren nach Anspruch 6, wobei das Betonen oder Herausfiltern des Klangs abhängig davon, wie der Klang charakterisiert wird, Folgendes umfasst:

Vergrößern einer Rauschstörung des Audiosignals relativ zu einer verbleibenden Komponente des Audiosignals;
Vermindern einer Abtastrate des Audiosignals;
Anwenden einer Ableitung gerader Ordnung auf das Audiosignal mit der verminderten Abtastrate, um ein Detektionssignal zu definieren; und
Justieren der Rauschstörung des Audiosignals gemäß einem statistischen Mittel des Detektionssignals.

**8.** Verfahren nach Anspruch 1, wobei die elektronische Vorrichtung eine Videospieleinheit mit einem Joystick-Controller ist, wobei das Verfahren ferner Folgendes umfasst:

Erzeugen mindestens eines Steuersignals zum Zwecke des Steuern mindestens eines Aspekts der Videospieleinheit, wenn bestimmt wird, dass der Klang oder die Quelle des Klangs eine oder mehrere vorbestimmte Charakteristika aufweist; und
Erzeugen eines oder mehrerer zusätzlicher Steuersignale mit dem Joystick-Controller.

**9.** Verfahren nach Anspruch 1, ferner umfassend:

Speichern der ausgewählten Zuhörzone in einem Profil.

**10.** Computerlesbares Medium, in dem computerausführbare Anweisungen zum Ausführen des Verfahrens nach einem der vorherigen Ansprüche realisiert sind.

**11.** Vorrichtung zur gezielten Klangdetektion (2050), umfassend:

eine Mikrofongruppe (2002) mit zwei oder mehr Mikrofonen ($M_0...M_M$) ;
eine Vielzahl von Filtern ($F_0...F_3$), die mit jedem Mikrofon gekoppelt ist, wobei die Filter dafür ausgelegt sind, Eingangssignale zu filtern, die Klängen entsprechen, die durch die Mikrofone detektiert werden, und eine gefilterte Ausgabe zu erzeugen;
einen Prozessor (2057), der mit der Mikrofongruppe und der Vielzahl von Filtern gekoppelt ist;
einen Speicher (2058), der mit dem Prozessor gekoppelt ist;
eine Vielzahl von Mengen von in dem Speicher realisierten Filterparametern, die einer Vielzahl von vorkalibrier-

ten verschiedenen Zuhörzonen ($S_0$...$S_8$) entspricht, wobei jede Menge von Filterparametern dafür ausgewählt wird, Teile der Eingangssignale zu detektieren, die Klängen entsprechen, die aus einer gegebenen Zuhörzone stammen, und Klänge, die von außerhalb der gegebenen Zuhörzone stammen herausfiltert;

wobei der Speicher eine Menge von prozessorausführbaren Anweisungen enthält, die, wenn sie ausgeführt werden, bewirken, dass die Vorrichtung zur Laufzeit eine bestimmte vorkalibrierte Zuhörzone auswählt, indem eine Menge von Filterparametern auf die Vielzahl von Filtern angewandt wird, die der bestimmten vorkalibrierten Zuhörzone entspricht,

wobei die Vorrichtung Klänge, die aus der vorkalibrierten Zuhörzone stammen, detektieren und Klänge, die von außerhalb der bestimmten vorkalibrierten Zuhörzone stammen, herausfiltern kann.

12. Vorrichtung nach Anspruch 11, die ferner eine mit dem Prozessor gekoppelte Bilderfassungseinheit und einen oder mehrere mit dem Prozessor gekoppelte Zeigeaktoren umfasst, wobei die Zeigeaktoren dafür ausgelegt sind, die Bilderfassungseinheit als Reaktion auf durch den Prozessor erzeugte Signale in die Betrachtungsrichtung zu richten, wobei der Speicher eine Menge von prozessorausführbaren Anweisungen enthält, die, wenn sie ausgeführt werden, bewirken, dass die Aktoren die Bilderfassungseinheit in eine Richtung der bestimmten vorkalibrierten Zuhörzone richten.

13. Vorrichtung nach Anspruch 11, die ferner einen mit dem Prozessor gekoppelten Joystick-Controller umfasst, wobei der Joystick-Controller einen mit dem Prozessor gekoppelten Trägheitssensor umfasst.

14. Vorrichtung nach Anspruch 13, wobei die prozessorausführbaren Anweisungen eine oder mehrere Anweisungen umfassen, die, wenn sie ausgeführt werden, einen Drift einer Position und/oder Orientierung, die aus einem Positions- und/oder Orientierungssignal aus dem Trägheitssensor bestimmt wird, kompensieren.

## Revendications

1. Procédé de détection de son ciblée en utilisant un réseau de microphones ayant deux ou plusieurs microphones $M_0$...$M_M$, chaque microphone étant couplé à une pluralité de filtres, les filtres étant configurés pour filtrer des signaux d'entrée correspondant à des sons détectés par les microphones générant ainsi une sortie filtrée, le procédé comprenant les étapes suivantes :

pré-calibrer (2012) une pluralité d'ensembles de paramètres de filtre pour la pluralité de filtres pour déterminer une pluralité de zones d'écoute différentes pré-calibrées correspondantes, où chaque ensemble de paramètres de filtre est sélectionné pour détecter des parties des signaux d'entrée correspondant à des sons provenant de l'intérieur d'une zone d'écoute donnée et pour filtrer des sons provenant de l'extérieur de la zone d'écoute donnée ; et

sélectionner (2014) une zone d'écoute pré-calibrée particulière à un temps d'exécution en appliquant à la pluralité de filtres un ensemble de paramètres de filtre correspondant à la zone d'écoute pré-calibrée particulière, moyennant quoi le réseau de microphones peut détecter des sons provenant de l'intérieur de la zone d'écoute particulière et filtrer des sons provenant de l'extérieur de la zone d'écoute particulière.

2. Procédé selon la revendication 1, dans lequel pré-calibrer une pluralité d'ensembles de paramètres de filtre comprend d'utiliser une séparation de source aveugle pour déterminer des ensembles de coefficients de filtre à réponse impulsionnelle finie (FIR).

3. Procédé selon la revendication 1, dans lequel la pluralité de zones d'écoute comprend une zone d'écoute qui correspond à un champ de vision d'une unité de capture d'image, moyennant quoi le réseau de microphones peut détecter des sons provenant de l'intérieur du champ de vision de l'unité de capture d'image et filtrer des sons provenant de l'extérieur du champ de vision de l'unité de capture d'image.

4. Procédé selon la revendication 1, dans lequel sélectionner une zone d'écoute pré-calibrée particulière à un temps d'exécution comprend de sélectionner une zone d'écoute pré-calibrée qui contient une source de son.

5. Procédé selon la revendication 1, dans lequel sélectionner une zone d'écoute pré-calibrée particulière à un temps d'exécution comprend les étapes suivantes :

sélectionner une zone initiale de la pluralité de zones d'écoute ;

déterminer si une source de son se situe à l'intérieur de la zone initiale ou sur un côté particulier du secteur initial ; et

si la source de son ne se situe pas à l'intérieur de la zone initiale, sélectionner une zone d'écoute différente sur le côté particulier de la zone initiale, où la zone d'écoute différente est **caractérisée par** une atténuation des signaux d'entrée qui est la plus proche d'une valeur optimum.

6. Procédé selon la revendication 1, le procédé comprenant en outre les étapes suivantes :

   détecter un son avec le réseau de microphones ;
   identifier une zone d'écoute pré-calibrée particulière contenant une source du son ; caractérisant le son ou la source du son ; et
   accentuer ou filtrer le son en fonction de la manière dont le son est caractérisé.

7. Procédé selon la revendication 6, dans lequel accentuer ou filtrer le son en fonction de la manière dont le son est caractérisé comprend les étapes suivantes :

   amplifier une perturbation de bruit du signal audio relativement à un composant restant du signal audio ;
   diminuer une fréquence d'échantillonnage du signal audio ;
   appliquer une dérivée de même ordre au signal audio ayant la fréquence d'échantillonnage diminuée pour définir un signal de détection ; et
   ajuster la perturbation de bruit du signal audio selon une moyenne statistique du signal de détection.

8. Procédé selon la revendication 1, dans lequel le dispositif électronique est une unité de jeu vidéo ayant un levier de commande, le procédé comprenant en outre les étapes suivantes :

   générer au moins un signal de commande dans le but de commander au moins un aspect de l'unité de jeu vidéo s'il est déterminé que le son ou la source de son a une ou plusieurs caractéristiques prédéterminées ; et
   générer un ou plusieurs signaux de commande additionnels avec le levier de commande.

9. Procédé selon la revendication 1, comprenant en outre l'étape suivants :

   stocker la zone d'écoute sélectionnée à l'intérieur d'un profil.

10. Support lisible par ordinateur contenant des instructions exécutables par ordinateur pour exécuter le procédé selon l'une quelconque des revendications précédentes.

11. Appareil de détection de son ciblée (2050) comprenant :

   un réseau de microphones (2002) ayant deux ou plusieurs microphones ($M_0...M_M$) ;
   une pluralité de filtres ($F_0...F_3$) couplés à chaque microphone, les filtres étant configurés pour filtrer des signaux d'entrée correspondant à des sons détectés par les microphones et générer une sortie filtrée ;
   un processeur (2057) couplé au réseau de microphones et à la pluralité de filtres ;
   une mémoire (2058) couplée au processeur ;
   une pluralité d'ensembles de paramètres de filtre contenus dans la mémoire, correspondant à une pluralité de zones d'écoute différentes pré-calibrées ($S_0...S_8$), où chaque ensemble de paramètres de filtre est sélectionné pour détecter des parties de signaux d'entrée correspondant à des sons provenant de l'intérieur d'une zone d'écoute donnée et pour filtrer des sons provenant de l'extérieur de la zone d'écoute donnée ;
   la mémoire contenant un ensemble d'instructions exécutables par processeur qui, lorsqu'exécutées, amènent l'appareil à sélectionner une zone d'écoute pré-calibrée particulière à un temps d'exécution en appliquant à la pluralité de filtres un ensemble de paramètres de filtre correspondant à la zone d'écoute pré-calibrée particulière, moyennant quoi l'appareil peut détecter des sons provenant de l'intérieur de la zone d'écoute pré-calibrée particulière et filtrer des sons provenant de l'extérieur de la zone d'écoute pré-calibrée particulière.

12. Appareil selon la revendication 11, comprenant en outre une unité de capture d'image couplée au processeur, et un ou plusieurs actionneurs de pointage couplés au processeur, les actionneurs de pointage étant conçus pour pointer l'unité de capture d'image dans une direction de visée en réponse à des signaux générés par le processeur, la mémoire contenant un ensemble d'instructions exécutables par processeur qui, lorsqu'exécutées, amènent les actionneurs à pointer l'unité de capture d'image dans une direction de la zone d'écoute pré-calibrée particulière.

**13.** Appareil selon la revendication 11, comprenant en outre un levier de commande couplé au processeur, dans lequel le levier de commande comprend un capteur inertiel couplé au processeur.

**14.** Appareil selon la revendication 13, dans lequel les instructions exécutables par processeur comprennent une ou plusieurs instructions qui, lorsqu'exécutées, compensent une dérive dans une position et/ou une orientation déterminées à partir d'un signal de position et/ou d'orientation provenant du capteur inertiel.

FIG. 1

FIG. 2

FIG. 3A

FIG. 3B

250

COMPUTING
SYSTEM

254

BUS

252

PROCESSOR

256

INTERACTIVE
PROGRAM
(E.G. GAME)

258

260

SELECTIVE
SOUND SOURCE
LISTENING

MEMORY .

106

106a

SOUND SOURCE(S)

A

B

ZONE OF FOCUS

116

106b

DISPLAY

110

FIG. 4

FIG. 5

FIG. 6

START

RECEIVE INPUT FROM ONE OR MORE SOUND SOURCES AT TWO OR MORE SOUND CAPTURE MICROPHONES — 302

DETERMINE DELAY PATHS FOR EACH OF THE SOUND SOURCES — 304

IDENTIFY A DIRECTION FOR EACH OF THE RECEIVED INPUTS OF EACH OF THE ONE OR MORE SOUND SOURCES — 306

FILTER OUT SOUND SOURCES THAT ARE NOT IN AN IDENTIFIED DIRECTION OF A ZONE OF FOCUS — 308

USE SOUND SOURCE NOT FILTERED OUT FOR INTERACTIVELY — 310

END

FIG. 7

```
                    ┌─────────────────────┐
                    │        START        │
                    └─────────────────────┘
                              │                              ╱⁻320
     ┌────────────────────────┼──────────────────────────────┐
     │                        │      IMAGE-SOUND CAPTURE DEVICE │
     │  ┌─────────────────────┴─────────────────────────┐     │
     │  │  RECEIVE INPUT FROM ONE OR MORE SOUND SOURCES AT TWO OR MORE │──302
     │  │         SOUND CAPTURE MICROPHONES             │     │
     │  └─────────────────────┬─────────────────────────┘     │
     └────────────────────────┼──────────────────────────────┘⁻340
     ┌────────────────────────┼──────────────────────────────┐
     │                        │   SOFTWARE EXECUTED FOR RECEIVED INPUT │
     │  ┌─────────────────────┴─────────────────────────┐     │
     │  │  DETERMINE DELAY PATHS FOR EACH OF THE SOUND SOURCES │──304
     │  └─────────────────────┬─────────────────────────┘     │
     │  ┌─────────────────────┴─────────────────────────┐     │
     │  │  IDENTIFY A DIRECTION FOR EACH OF THE RECEIVED INPUTS OF EACH OF │──306
     │  │       THE ONE OR MORE SOUND SOURCES           │     │
     │  └─────────────────────┬─────────────────────────┘     │
     │  ┌─────────────────────┴─────────────────────────┐     │
     │  │  DETERMINE IDENTIFIED DIRECTION THAT IS IN PROXIMITY OF VIDEO │──312
     │  │                  CAPTURE                      │     │
     │  └─────────────────────┬─────────────────────────┘     │
     │  ┌─────────────────────┴─────────────────────────┐     │
     │  │  FILTER OUT DIRECTIONS THAT ARE NOT IN PROXIMITY OF VIDEO CAPTURE │──314
     │  └─────────────────────┬─────────────────────────┘     │
     └────────────────────────┼──────────────────────────────┘
                    ┌─────────┴───────────┐
                    │         END         │
                    └─────────────────────┘
```

# FIG. 8

Figure 9

Figure 10

$M_0$  $M_1$  $M_2$  $M_3$

602

606

604

**Figure 11A**

y(t)

$\Delta t_1$  $\Delta t_2$  $\Delta t_3$

$s(0)$  $s(1)$  $s(2)$  $s(3)$

602

$M_0$  $M_2$  $M_2$  $M_3$

604

**Figure 11B**

700A

$704_0$  $704_1$  $704_2$  $704_3$  $704_N$  702

M  x(t)

$Z^{-1}$  $Z^{-1}$  $Z^{-1}$  $Z^{-1}$  y(t)

...

$704_0$  $b_0$  $b_1$  $b_2$  $b_3$  $b_N$

**Figure 12A**

**Figure 12B**

800

802 — PRODUCE DISCRETE TIME DOMAIN INPUT SIGNAL $x_m(t)$ FROM MICROPHONES $M_0...M_M$.

804 — DETERMINE LISTENING DIRECTION OF THE MICROPHONE ARRAY

806 — APPLY ONE OR MORE FRACTIONAL DELAYS TO SELECTED INPUT SIGNALS $x_m(t)$ OTHER THAN AN INPUT SIGNAL $x_0(t)$ FROM A REFERENCE MICROPHONE $M_0$
(OPTIONAL)

808 — INTRODUCE FRACTIONAL TIME DELAY $\Delta$ INTO THE OUTPUT SIGNAL $y(t)$ SO THAT: $y(t+\Delta) = x(t+\Delta)^*b_0 + x(t-1+\Delta)^*b_1 + x(t-2+\Delta)^*b_2 +...+ x(t-N+\Delta)b_N$, WHERE $\Delta$ IS BETWEEN ZERO AND $\pm1$.
(OPTIONAL)

810 — USE LISTENING DIRECTION IN SEMI-BLIND SOURCE SEPARATION TO SELECT FILTERING COEFFICIENTS. TO SEPARATE OUT DIFFERENT SOUND SOURCES FROM INPUT SIGNAL $x_m(t)$

**Figure 13**

Figure 14

900

1000

| | | |
|---|---|---|
| 1. | User ID | 1060 |
| 2. | Profile Name | 1060 |
| 3. | Sound Zone(s) | 1060 |
| 4. | Parameters | 1060 |

Figure 15

Figure 16

Figure 17

Figure18

```
┌──────────────────┐
│             1410 │
│ Initialize Listening │
│       Zone        │
└──────────────────┘
          │
          ▼
┌──────────────────┐
│             1420 │
│  Detect Sound    │◄─────────────┐
│ within Listening │              │
│       Zone       │              │
└──────────────────┘              │
          │                       │
          ▼                       │
┌──────────────────┐              │
│             1430 │              │
│  Detect Sound    │              │
│      Level       │              │
└──────────────────┘              │
          │                       │
          ▼                       │
        ╱──────╲                  │
       ╱  1440  ╲                 │
  YES ╱ Sound Level╲  NO          │
◄────╱   Above      ╲─────────────┘
     ╲  Threshold?  ╱
      ╲            ╱
       ╲──────────╱
```

```
┌──────────────────┐
│             1445 │
│ Detect Location  │
│    of Sound      │
└──────────────────┘
          │
          ▼
┌──────────────────┐
│             1450 │
│ Adjust Listening │
│      Zone        │
└──────────────────┘
          │
          ▼
┌──────────────────┐
│             1460 │
│ Detect Sound from│◄──────┐
│ Adjusted Listen  │       │
│ Zone & Sound Lvl │       │
└──────────────────┘       │
          │                │
          ▼                │
        ╱──────╲           │
       ╱  1470  ╲   YES    │
      ╱ Sound Level╲───────┘
      ╲   Above     ╱
       ╲ Threshold? ╱
        ╲──────────╱
          │ NO
          ▼
┌──────────────────┐
│             1480 │
│ Adjust Listening │
│      Zone        │
└──────────────────┘
```

## Figure19

1510

1520

1540

1530                                    1550

1500

Figure 20

1610        1640        1620

1630                    1650

1600

Figure 21

Figure 22

1802

1804

1816

1800

1806

1814

1812

1808

1810

Figure 23A

1832

1846

1834

1830

1844

1836

1842

1838

1840

Figure 23B

1860

1868

1862

1864

1866

Figure 23C

1910

1900

1930

1960

1915

1940

1920

1950

Figure 24

y(t)

F$_0$ | F$_1$ | F$_2$ | F$_3$

s(0) | s(1) | s(2) | s(3)

M$_0$ | M$_1$ | M$_2$ | M$_3$ — 2002

Z

B

2004

2006

**FIG. 25A**

2010

| 2012 | PRE-CALIBRATE MICROPHONE ARRAY FILTERS TO DETERMINE LISTENING SECTOR(S) |

| 2014 | SELECT A PRE-CALIBRATED LISTENING SECTOR AT RUNTIME |

| 2016 | TRACK BETWEEN TWO OR MORE PRE-CALIBRATED SECTORS AT RUNTIME TO DETERMINE IN WHICH SECTOR A SOUND SOURCE RESIDES (OPTIONAL) |

**FIG. 25B**

**FIG. 25C**

**FIG. 25D**

SELECT A PRE-CALIBRATED
LISTENING SECTOR AT RUNTIME

DETERMINE INPUT SIGNAL ENERGY
ATTENUATION

SELECT ANOTHER
PRE-CALIBRATED
SECTOR

OPTIMUM
ATTENUATION?

NO

YES

STOP TRACKING

2030

2032

DEVICE

2002

CPU | INSTR

2034

MEM | DATA

2036

138

$S_0$ $S_8$

$S_1$ $S_7$

$S_2$ $S_6$

$S_3$ $S_4$ $S_5$

2005

2004

**FIG. 25E**

2031

2033

DETECT LISTENING-ZONE
CONTAINING SOURCE OF SOUND

2035

CHARACTERIZE SOURCE OF SOUND
BASED ON PREDETERMINED MODEL

2037

FILTER OUT
SOUND SOURCE

NO

IS SOUND
SOURCE OF
INTEREST?

YES

2039

EMPHASIZE SOUND SOURCE

**FIG. 25F**

**FIG. 25G**

**FIG. 25H**

2050

2056

CONTROLLER

2054 2052 2002

CPU INSTR 159

2057

MEM DATA

2058

2055

$S_0$

$S_1$

$S_2$

$S_3$ $S_4$ $S_5$

$S_6$

$S_7$

$S_8$

2004

**FIG. 25I**

2050

2056

CONTROLLER

2044 2052

2002

CPU INSTR 2059

2057

MEM DATA

2058

2055

$S_0$

$S_1$

$S_2$

$S_3$ $S_4$ $S_5$

$S_6$

$S_7$

$S_8$

2004

**FIG. 25J**

**FIG. 26**

**FIG. 27**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040213419 A
- GB 0304024 A
- GB 2004000693 W
- GB 0304022 A
- GB 2004000703 W
- US 20050047611 A1, Xiadong Mao
- US 10820469 B, Xiadong Mao
- US 20050226431 A
- US 20070060350 A1, Steven Osman
- US 20060277571 A1, Richard L. Marks
- US 10759782 B, Richard L. Marks